(19) Europäisches Patentamt
European Patent Office
Office européen des brevets

(11) **EP 4 561 204 A1**

(12) **EUROPEAN PATENT APPLICATION**
published in accordance with Art. 153(4) EPC

(43) Date of publication:
**28.05.2025 Bulletin 2025/22**

(21) Application number: **23849468.6**

(22) Date of filing: **02.08.2023**

(51) International Patent Classification (IPC):
*H04W 64/00* (2009.01)

(52) Cooperative Patent Classification (CPC):
**H04L 5/00; H04W 4/02; H04W 64/00**

(86) International application number:
**PCT/CN2023/110760**

(87) International publication number:
**WO 2024/027763 (08.02.2024 Gazette 2024/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **03.08.2022 CN 202210928796
12.08.2022 CN 202210970558**

(71) Applicant: **Huawei Technologies Co., Ltd.
Shenzhen, Guangdong 518129 (CN)**

(72) Inventors:
• **LI, Chao
Shenzhen, Guangdong 518129 (CN)**
• **XUE, Lixia
Shenzhen, Guangdong 518129 (CN)**
• **LI, Jun
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **METHOD FOR TRANSMITTING SIDELINK POSITIONING REFERENCE SIGNAL AND RELATED APPARATUS**

(57) Embodiments of this application provide a method for transmitting a sidelink positioning reference signal and a related apparatus. The method includes: A first communication device determines at least one of the following information: a frequency domain resource of the sidelink positioning reference signal and a sequence parameter of the sidelink positioning reference signal, where the information is associated with a sidelink control channel. The first device sends the sidelink control channel and the sidelink positioning reference signal in a slot based on the information. In the foregoing technical solution, the information is associated with the sidelink control channel. In this way, after receiving the sidelink control channel, a receive-end device can obtain a resource of the sidelink positioning reference signal based on an association relationship between the information and the sidelink control channel, to obtain the sidelink positioning reference signal on the resource of the sidelink positioning reference signal.

FIG. 13

## Description

This application claims priorities to Chinese Patent Application No. 202210928796.1, filed with the China National Intellectual Property Administration on August 3, 2022 and entitled " SL-PRS SENDING METHOD AND APPARATUS", and to Chinese Patent Application No. 202210970558.7, filed with the China National Intellectual Property Administration on August 12, 2022 and entitled "METHOD FOR TRANSMITTING SIDELINK POSITIONING REFERENCE SIGNAL AND RELATED APPARATUS", both of which are incorporated herein by reference in their entireties.

## TECHNICAL FIELD

Embodiments of this application relate to the field of communication technologies, and more specifically, to a method for transmitting a sidelink positioning reference signal and a related apparatus.

## BACKGROUND

In daily life and applications, location information has become more important basic information. Applications such as a navigation service and a location based service (location based service, LBS) need to provide corresponding services for users based on location information of the users.

Currently, a global navigation satellite system (global navigation satellite system, GNSS) is a commonly used solution for determining location information. Positioning precision of the GNSS possibly cannot meet requirements of some applications that require high precision.

To resolve this problem, a sidelink positioning technology is proposed in the industry. However, how to transmit a sidelink positioning reference signal is a concern in the industry.

## SUMMARY

Embodiments of this application provide a method for transmitting a sidelink positioning reference signal and a related apparatus. In the method, information about a sidelink positioning reference signal may be associated with a sidelink control channel. In this way, after receiving the sidelink control channel, a receive-end device can obtain a resource of the sidelink positioning reference signal based on an association relationship between the information and the sidelink control channel, to obtain the sidelink positioning reference signal on the resource of the sidelink positioning reference signal.

According to a first aspect, an embodiment of this application provides a method for transmitting a sidelink positioning reference signal. The method includes: A first communication device determines at least one of the following information: a frequency domain resource of the sidelink positioning reference signal and a sequence parameter of the sidelink positioning reference signal, where the information is associated with a sidelink control channel. The first device sends the sidelink control channel and the sidelink positioning reference signal in a slot based on the information.

In the foregoing technical solution, the information (to be specific, the frequency domain resource of the sidelink positioning reference signal and/or the sequence parameter of the sidelink positioning reference signal) is associated with the sidelink control channel. In this way, after receiving the sidelink control channel, a receive-end device can obtain a resource of the sidelink positioning reference signal based on an association relationship between the information and the sidelink control channel, to obtain the sidelink positioning reference signal on the resource of the sidelink positioning reference signal.

With reference to the first aspect, in a possible implementation of the first aspect, the sidelink control channel and the sidelink positioning reference signal are sent in a same slot.

In the foregoing technical solution, the sidelink control channel that has an association relationship with the information and the sidelink positioning reference signal are sent in a same slot. In this way, the first communication device sends the information, the sidelink control channel, and the sidelink positioning reference signal to the receive-end device in a same slot, and does not need to indicate the information to the receive-end device in advance in another slot. This can save time domain resources. In addition, if the information, the sidelink control channel, and the sidelink positioning reference signal are sent in different slots, the information further needs to additionally indicate a slot in which a frequency domain resource and/or a sequence parameter of a sidelink positioning reference signal that are sent are the frequency domain resource and/or the sequence parameter included in the information. If the information, the sidelink control channel, and the sidelink positioning reference signal are sent to the receive-end device in a same slot, the receive-end device may directly determine the frequency domain resource and/or the sequence parameter of the sidelink positioning reference signal in the slot based on the information obtained in the slot. This can reduce an amount of information that the first communication device needs to send, to save air interface resources.

With reference to the first aspect, in a possible implementation of the first aspect, the sidelink control channel is located before the sidelink positioning reference signal in the slot.

Because the sidelink control channel is located before the sidelink positioning reference signal, the receive-end device may first obtain the information associated with the sidelink control channel, to determine the frequency domain resource and/or the sequence parameter of the sidelink positioning reference signal.

With reference to the first aspect, in a possible implementation of the first aspect, a resource of the sidelink positioning reference signal in each symbol is Y resource elements REs among Y×N REs, one of every N REs is occupied by the sidelink positioning reference signal, Y is a number greater than 0, and N is a positive integer.

If N is a positive integer greater than or equal to 2, a frequency domain resource of each symbol may be multiplexed to N communication devices for use. In this way, a plurality of communication devices can send sidelink positioning reference signals by using a same time domain resource.

With reference to the first aspect, in a possible implementation of the first aspect, that the information is associated with a sidelink control channel includes: The information is carried in the sidelink control channel; and/or the information is determined based on a frequency domain resource and/or a sequence parameter of the sidelink control channel.

If the information is carried in the sidelink control channel, a resource location of the sidelink control channel can be decoupled from a resource location of the sidelink positioning reference signal. This helps find a good resource of the sidelink control channel and a good resource of the sidelink positioning reference signal. If the information is determined based on the frequency domain resource and/or the sequence parameter of the sidelink control channel, an amount of information that the sidelink control channel needs to carry can be reduced, so that the sidelink control channel can have more idle resources for transmitting other information.

With reference to the first aspect, in a possible implementation of the first aspect, the information further includes the sequence parameter of the sidelink control channel.

If the information includes the sequence parameter of the sidelink control channel, it indicates that different sequences are used to transmit the sidelink control channel on a same frequency domain resource. To be specific, the sidelink control channel is sent in a frequency division and code division mode. This increases a capacity of the sidelink control channel and improves transmission performance of a system.

With reference to the first aspect, in a possible implementation of the first aspect, the sequence parameter of the sidelink control channel includes at least one of the following information: a cyclic shift CS value of the sidelink control channel, a root sequence index of the sidelink control channel, or an orthogonal sequence index of the sidelink control channel.

With reference to the first aspect, in a possible implementation of the first aspect, the sequence parameter of the sidelink positioning reference signal includes at least one of the following information: a cyclic shift CS value of the sidelink positioning reference signal, a root sequence index of the sidelink positioning reference signal, an orthogonal sequence index of the sidelink positioning reference signal, or a parameter for generating an initial value of a sequence of the sidelink positioning reference signal.

If the information includes the sequence parameter of the sidelink positioning reference signal, it indicates that different sequences are used to transmit the sidelink positioning reference signal on a same frequency domain resource. To be specific, the sidelink positioning reference signal is sent in a frequency division and code division mode. This increases a capacity of the sidelink positioning reference signal and improves transmission performance of the system.

With reference to the first aspect, in a possible implementation of the first aspect, an index of a first frequency domain resource and/or a first sequence index are/is determined based on an index of the frequency domain resource of the sidelink control channel, the first frequency domain resource is a frequency domain resource of the sidelink positioning reference signal, and the first sequence index corresponds to a sequence parameter for determining the sidelink positioning reference signal.

According to the foregoing technical solution, when the index of the frequency domain resource of the sidelink control channel is determined, the index of the first frequency domain resource and/or the first sequence index can be determined, and the sidelink control channel does not need to carry additional information to indicate the index of the first frequency domain resource and/or the first sequence index. This can reduce an amount of information that the sidelink control channel needs to carry, so that the sidelink control channel can have more idle resources for transmitting other information.

With reference to the first aspect, in a possible implementation of the first aspect, the index of the first frequency domain resource and the first sequence index are determined based on the index of the frequency domain resource of the sidelink control channel and N.

According to the foregoing technical solution, when the index of the frequency domain resource of the sidelink control channel is determined, the index of the first frequency domain resource and/or the first sequence index can be determined, and the sidelink control channel does not need to carry additional information to indicate the index of the first frequency domain resource and/or the first sequence index. This can reduce an amount of information that the sidelink control channel needs to carry, so that the sidelink control channel can have more idle resources for transmitting other information.

With reference to the first aspect, in a possible implementation of the first aspect, the index of the first frequency domain resource and/or the first sequence index are determined based on the index of the frequency domain resource of the sidelink control channel and the orthogonal sequence index of the sidelink control channel.

According to the foregoing technical solution, when the index of the frequency domain resource of the sidelink control channel and the orthogonal sequence index of the sidelink control channel are determined, the index of the first frequency domain resource and/or the first sequence index can be determined, and the sidelink control channel does not need to carry additional information to indicate the index of the first frequency domain resource and/or the first sequence index. This can reduce an amount of information that the sidelink control channel needs to carry, so that the sidelink control channel can have more idle resources for transmitting other information.

With reference to the first aspect, in a possible implementation of the first aspect, the index of the first frequency domain resource and the first sequence parameter are determined based on the index of the frequency domain resource of the sidelink control channel, the orthogonal sequence index of the sidelink control channel, a quantity M of orthogonal frequency domain resources of the sidelink control channel, and N.

According to the foregoing technical solution, when the index of the frequency domain resource of the sidelink control channel and the orthogonal sequence index of the sidelink control channel are determined, the index of the first frequency domain resource and/or the first sequence index can be determined, and the sidelink control channel does not need to carry additional information to indicate the index of the first frequency domain resource and/or the first sequence index. This can reduce an amount of information that the sidelink control channel needs to carry, so that the sidelink control channel can have more idle resources for transmitting other information.

With reference to the first aspect, in a possible implementation of the first aspect, a resource of the sidelink control channel and a resource of the sidelink positioning reference signal are determined based on a resource index.

In the foregoing technical solution, the resource of the sidelink control channel and the resource of the sidelink positioning reference signal may be directly indicated by the resource index. In this way, the resource of the sidelink control channel does not need to be first determined. In other words, the resource of the sidelink positioning reference signal may be first determined, or the resource of the sidelink control channel and the resource of the sidelink positioning reference signal may be simultaneously determined. Both the resource of the sidelink control channel and the resource of the sidelink positioning reference signal are indicated by the resource index, so that a total quantity of resources of the sidelink control channel and a total quantity of resources of the sidelink positioning reference signal may not need to be considered. This system design is more flexible and is easier to be implemented based on a protocol.

With reference to the first aspect, in a possible implementation of the first aspect, the resource of the sidelink control channel includes the frequency domain resource of the sidelink control channel and the sequence parameter of the sidelink control channel, and the resource of the sidelink positioning reference signal includes the frequency domain resource of the sidelink positioning reference signal and the sequence parameter of the sidelink positioning reference signal.

With reference to the first aspect, in a possible implementation of the first aspect, a maximum value of the resource index is predefined, preconfigured, or configured by a network device.

In the foregoing technical solution, a maximum resource index is configured by using signaling, to determine or control a quantity and density of resources in a slot. In this way, a capacity of parallel transmission in the entire system is controlled and ensured.

With reference to the first aspect, in a possible implementation of the first aspect, the sidelink control channel is further used to carry second indication information, and the second indication information indicates the resource index.

With reference to the first aspect, in a possible implementation of the first aspect, the index of the frequency domain resource of the sidelink control channel and the orthogonal sequence index of the sidelink control channel are determined based on the resource index and the quantity M of orthogonal frequency domain resources of the sidelink control channel.

With reference to the first aspect, in a possible implementation of the first aspect, the index of the frequency domain resource of the sidelink control channel is determined based on the resource index, the quantity M of orthogonal frequency domain resources of the sidelink control channel, and first reference information. The first reference information includes one or more of the following information: an identifier of the first communication device, an identifier of a second communication device, and a first offset. The first offset is a positive integer greater than or equal to 0 and less than M.

In the foregoing technical solution, the resource of the sidelink control channel can be more flexibly determined by using the first reference information.

With reference to the first aspect, in a possible implementation of the first aspect, an index of a second frequency domain resource and a second sequence index are determined based on the resource index and N. The second frequency domain resource is a frequency domain resource of the sidelink positioning reference signal. The second sequence index corresponds to a sequence parameter for determining the sidelink positioning reference signal.

With reference to the first aspect, in a possible implementation of the first aspect, the index of the second frequency domain resource is determined based on the resource index, N, and second reference information. The second reference information includes at least one of the following information: the identifier of the first communication device, the identifier of the second communication device, and a second offset. The second offset is a positive integer greater than or equal to 0 and less than N.

In the foregoing technical solution, the resource of the sidelink positioning reference signal can be more flexibly determined by using the second reference information.

With reference to the first aspect, in a possible implementation of the first aspect, a resource index of the sidelink positioning reference signal is determined based on a resource index of the sidelink control channel and a total quantity of resources of the sidelink positioning reference signal.

According to the foregoing technical solution, when both the resource of the sidelink control channel and the resource of the sidelink positioning reference signal are indicated by the resource index, an association relationship between the resource of the sidelink control channel and the resource of the sidelink positioning reference signal (namely, a relationship between the resource index of the sidelink positioning reference signal and the resource index of the sidelink control channel) may be determined.

With reference to the first aspect, in a possible implementation of the first aspect, the resource index of the sidelink positioning reference signal is determined based on the resource index of the sidelink control channel, the total quantity of resources of the sidelink positioning reference signal, and third reference information. The third reference information includes at least one of the following information: the identifier of the first communication device, the identifier of the second communication device, and a third offset. The third offset is a positive integer greater than or equal to 0 and less than T. T is the total quantity of resources of the sidelink positioning reference signal.

In the foregoing technical solution, the association relationship between the resource of the sidelink control channel and the resource of the sidelink positioning reference signal can be more flexibly determined by using the third reference information.

With reference to the first aspect, in a possible implementation of the first aspect, the sidelink control channel is a physical sidelink control channel PSCCH.

According to a second aspect, an embodiment of this application provides a method for transmitting a sidelink positioning reference signal. The method includes: A second communication device receives a sidelink control channel in a slot. The second communication device determines at least one of the following information: a frequency domain resource of the sidelink positioning reference signal and a sequence parameter of the sidelink positioning reference signal, where the information is associated with the sidelink control channel. The second communication device receives the sidelink positioning reference signal in the slot based on the information.

In the foregoing technical solution, the information (to be specific, the frequency domain resource of the sidelink positioning reference signal and/or the sequence parameter of the sidelink positioning reference signal) is associated with the sidelink control channel. In this way, after receiving the sidelink control channel, the second communication device can obtain a resource of the sidelink positioning reference signal based on an association relationship between the information and the sidelink control channel, to obtain the sidelink positioning reference signal on the resource of the sidelink positioning reference signal.

With reference to the second aspect, in a possible implementation of the second aspect, the sidelink control channel and the sidelink positioning reference signal are received in a same slot.

In the foregoing technical solution, the sidelink control channel that has an association relationship with the information and the sidelink positioning reference signal are received in a same slot. In this way, the second communication device can obtain the information, the sidelink control channel, and the sidelink positioning reference signal in a same slot, and does not need to obtain the information in advance in another slot. This can save time domain resources. In addition, if the information, the sidelink control channel, and the sidelink positioning reference signal are received in different slots, the information further needs to additionally indicate a slot in which a frequency domain resource and/or a sequence parameter of a sidelink positioning reference signal that are received are the frequency domain resource and/or the sequence parameter included in the information. If the information, the sidelink control channel, and the sidelink positioning reference signal are received in a same slot, the second communication device may directly determine the frequency domain resource and/or the sequence parameter of the sidelink positioning reference signal in the slot based on the information obtained in the slot. This can reduce an amount of information that the first communication device needs to send, and correspondingly reduce an amount of information that the second communication device needs to receive, to save air interface resources.

With reference to the second aspect, in a possible implementation of the second aspect, the sidelink control channel is located before the sidelink positioning reference signal in the slot.

Because the sidelink control channel is located before the sidelink positioning reference signal, the second communication device may first obtain the information associated with the sidelink control channel, to determine the frequency domain resource and/or the sequence parameter of the sidelink positioning reference signal.

With reference to the second aspect, in a possible implementation of the second aspect, a resource of the sidelink positioning reference signal in each symbol is Y resource elements REs among Y×N REs, one of every N REs is occupied by the sidelink positioning reference signal, Y is a number greater than 0, and N is a positive integer.

If N is a positive integer greater than or equal to 2, a frequency domain resource of each symbol may be multiplexed to N communication devices for use. In this way, a plurality of communication devices can send sidelink positioning reference signals by using a same time domain resource.

With reference to the second aspect, in a possible implementation of the second aspect, that the information is associated with a sidelink control channel includes: The information is carried in the sidelink control channel; and/or the information is determined based on a frequency domain resource and/or a sequence parameter of the sidelink control channel.

If the information is carried in the sidelink control channel, a resource location of the sidelink control channel can be decoupled from a resource location of the sidelink positioning reference signal. This helps find a good resource of the sidelink control channel and a good resource of the sidelink positioning reference signal. If the information is determined based on the frequency domain resource and/or the sequence parameter of the sidelink control channel, an amount of information that the sidelink control channel needs to carry can be reduced, so that the sidelink control channel can have more idle resources for transmitting other information.

With reference to the second aspect, in a possible implementation of the second aspect, the information further includes the sequence parameter of the sidelink control channel.

If the information includes the sequence parameter of the sidelink control channel, it indicates that different sequences are used to transmit the sidelink control channel on a same frequency domain resource. To be specific, the sidelink control channel is sent in a frequency division and code division mode. This increases a capacity of the sidelink control channel and improves transmission performance of a system.

With reference to the second aspect, in a possible implementation of the second aspect, the sequence parameter of the sidelink control channel includes at least one of the following information: a cyclic shift CS value of the sidelink control channel, a root sequence index of the sidelink control channel, or an orthogonal sequence index of the sidelink control channel.

With reference to the second aspect, in a possible implementation of the second aspect, the sequence parameter of the sidelink positioning reference signal includes at least one of the following information: a cyclic shift CS value of the sidelink positioning reference signal, a root sequence index of the sidelink positioning reference signal, an orthogonal sequence index of the sidelink positioning reference signal, or a parameter for generating an initial value of a sequence of the sidelink positioning reference signal.

If the information includes the sequence parameter of the sidelink positioning reference signal, it indicates that different sequences are used to transmit the sidelink positioning reference signal on a same frequency domain resource. To be specific, the sidelink positioning reference signal is sent in a frequency division and code division mode. This increases a capacity of the sidelink positioning reference signal and improves transmission performance of the system.

With reference to the second aspect, in a possible implementation of the second aspect, an index of a first frequency domain resource and/or a first sequence index are/is determined based on an index of the frequency domain resource of the sidelink control channel, the first frequency domain resource is a frequency domain resource of the sidelink positioning reference signal, and the first sequence index corresponds to a sequence parameter for determining the sidelink positioning reference signal.

According to the foregoing technical solution, when the index of the frequency domain resource of the sidelink control channel is determined, the index of the first frequency domain resource and/or the first sequence index can be determined, and the sidelink control channel does not need to carry additional information to indicate the index of the first frequency domain resource and/or the first sequence index. This can reduce an amount of information that the sidelink control channel needs to carry, so that the sidelink control channel can have more idle resources for transmitting other information.

With reference to the second aspect, in a possible implementation of the second aspect, the index of the first frequency domain resource and the first sequence index are determined based on the index of the frequency domain resource of the sidelink control channel and N.

According to the foregoing technical solution, when the index of the frequency domain resource of the sidelink control channel is determined, the index of the first frequency domain resource and/or the first sequence index can be determined, and the sidelink control channel does not need to carry additional information to indicate the index of the first frequency domain resource and/or the first sequence index. This can reduce an amount of information that the sidelink control channel needs to carry, so that the sidelink control channel can have more idle resources for transmitting other information.

With reference to the second aspect, in a possible implementation of the second aspect, the index of the first frequency domain resource and/or the first sequence index are determined based on the index of the frequency domain resource of the sidelink control channel and the orthogonal sequence index of the sidelink control channel.

According to the foregoing technical solution, when the index of the frequency domain resource of the sidelink control channel and the orthogonal sequence index of the sidelink control channel are determined, the index of the first frequency domain resource and/or the first sequence index can be determined, and the sidelink control channel does not need to carry additional information to indicate the index of the first frequency domain resource and/or the first sequence index. This can reduce an amount of information that the sidelink control channel needs to carry, so that the sidelink control channel can have more idle resources for transmitting other information.

With reference to the second aspect, in a possible implementation of the second aspect, the index of the first frequency domain resource and the first sequence parameter are determined based on the index of the frequency domain resource of the sidelink control channel, the orthogonal sequence index of the sidelink control channel, a quantity M of orthogonal frequency domain resources of the sidelink control channel, and N.

According to the foregoing technical solution, when the index of the frequency domain resource of the sidelink control channel and the orthogonal sequence index of the sidelink control channel are determined, the index of the first frequency domain resource and/or the first sequence index can be determined, and the sidelink control channel does not need to carry additional information to indicate the index of the first frequency domain resource and/or the first sequence index. This can reduce an amount of information that the sidelink control channel needs to carry, so that the sidelink control channel can have more idle resources for transmitting other information.

With reference to the second aspect, in a possible implementation of the second aspect, a resource of the sidelink control channel and a resource of the sidelink positioning reference signal are determined based on a resource index.

In the foregoing technical solution, the resource of the sidelink control channel and the resource of the sidelink positioning reference signal may be directly indicated by the resource index. In this way, the resource of the sidelink control channel does not need to be first determined. In other words, the resource of the sidelink positioning reference signal may be first determined, or the resource of the sidelink control channel and the resource of the sidelink positioning reference signal may be simultaneously determined. Both the resource of the sidelink control channel and the resource of the sidelink positioning reference signal are indicated by the resource index, so that a total quantity of resources of the sidelink control channel and a total quantity of resources of the sidelink positioning reference signal may not need to be considered. This system design is more flexible and is easier to be implemented based on a protocol.

With reference to the second aspect, in a possible implementation of the second aspect, the resource of the sidelink control channel includes the frequency domain resource of the sidelink control channel and the sequence parameter of the sidelink control channel, and the resource of the sidelink positioning reference signal includes the frequency domain resource of the sidelink positioning reference signal and the sequence parameter of the sidelink positioning reference signal.

With reference to the second aspect, in a possible implementation of the second aspect, a maximum value of the resource index is predefined, preconfigured, or configured by a network device.

In the foregoing technical solution, a maximum resource index is configured by using signaling, to determine or control a quantity and density of resources in a slot. In this way, a capacity of parallel transmission in the entire system is controlled and ensured.

With reference to the second aspect, in a possible implementation of the second aspect, the sidelink control channel is further used to carry second indication information, and the second indication information indicates the resource index.

With reference to the second aspect, in a possible implementation of the second aspect, the index of the frequency domain resource of the sidelink control channel and the orthogonal sequence index of the sidelink control channel are determined based on the resource index and the quantity M of orthogonal frequency domain resources of the sidelink control channel.

With reference to the second aspect, in a possible implementation of the second aspect, the index of the frequency domain resource of the sidelink control channel is determined based on the resource index, the quantity M of orthogonal frequency domain resources of the sidelink control channel, and first reference information. The first reference information includes one or more of the following information: an identifier of the first communication device, an identifier of the second communication device, and a first offset. The first offset is a positive integer greater than or equal to 0 and less than M.

In the foregoing technical solution, the resource of the sidelink control channel can be more flexibly determined by using the first reference information.

With reference to the second aspect, in a possible implementation of the second aspect, an index of a second frequency domain resource and a second sequence index are determined based on the resource index and N. The second frequency domain resource is a frequency domain resource of the sidelink positioning reference signal. The second sequence index corresponds to a sequence parameter for determining the sidelink positioning reference signal.

With reference to the second aspect, in a possible implementation of the second aspect, the index of the second frequency domain resource is determined based on the resource index, N, and second reference information. The second reference information includes at least one of the following information: the identifier of the first communication device, the identifier of the second communication device, and a second offset. The second offset is a positive integer greater than or equal to 0 and less than N.

In the foregoing technical solution, the resource of the sidelink positioning reference signal can be more flexibly determined by using the second reference information.

With reference to the second aspect, in a possible implementation of the second aspect, a resource index of the sidelink positioning reference signal is determined based on a resource index of the sidelink control channel and a total quantity of resources of the sidelink positioning reference signal.

According to the foregoing technical solution, when both the resource of the sidelink control channel and the resource of the sidelink positioning reference signal are indicated by the resource index, an association relationship between the resource of the sidelink control channel and the resource of the sidelink positioning reference signal (namely, a relationship between the resource index of the sidelink positioning reference signal and the resource index of the sidelink control channel) may be determined.

With reference to the second aspect, in a possible implementation of the second aspect, the resource index of the sidelink positioning reference signal is determined based on the resource index of the sidelink control channel, the total quantity of resources of the sidelink positioning reference signal, and third reference information. The third reference information includes at least one of the following information: the identifier of the first communication device, the identifier of the second communication device, and a third offset. The third offset is a positive integer greater than or equal to 0 and less than T. T is the total quantity of resources of the sidelink positioning reference signal.

In the foregoing technical solution, the association relationship between the resource of the sidelink control channel and the resource of the sidelink positioning reference signal can be more flexibly determined by using the third reference information.

With reference to the second aspect, in a possible implementation of the second aspect, the sidelink control channel is a physical sidelink control channel PSCCH.

According to a third aspect, an embodiment of this application provides a method for transmitting sidelink positioning information. The method includes: A first communication device determines configuration information, where the configuration information indicates at least one of the following information: a quantity of symbols occupied by sidelink control information, a frequency domain bandwidth occupied by the sidelink control information, a quantity of symbols occupied by a sidelink positioning reference signal, and a mapping spacing of the sidelink positioning reference signal in frequency domain. The first device sends sidelink positioning information in a slot, where the sidelink positioning information is generated based on the configuration information, and the sidelink positioning information includes the sidelink control information and the sidelink positioning reference signal.

In the foregoing technical solution, the sidelink control information and the sidelink positioning reference signal are jointly sent, so that a function of the sidelink positioning reference signal can operate independently. In other words, the sidelink positioning reference signal may not depend on other scheduling signaling or communication functions.

With reference to the third aspect, in a possible implementation of the third aspect, the sidelink control information is located before the sidelink positioning reference signal.

Because the sidelink control channel is located before the sidelink positioning reference signal, if the sidelink control information includes information related to the sidelink positioning reference signal, a receive-end device may first obtain the information.

With reference to the third aspect, in a possible implementation of the third aspect, the sidelink control information and the sidelink positioning reference signal are sent in a same slot.

The first communication device sends the sidelink control information and the sidelink positioning reference signal to the receive-end device in a same slot, and does not need to separately send the sidelink control information and the sidelink positioning reference signal to the receive-end device in different slots. This can save time domain resources.

With reference to the third aspect, in a possible implementation of the third aspect, the slot includes 14 symbols, the quantity of symbols occupied by the sidelink control information is 2, and the quantity of symbols occupied by the sidelink positioning reference signal is 10; or the slot includes 14 symbols, the quantity of symbols occupied by the sidelink control information is 1, and the quantity of symbols occupied by the sidelink positioning reference signal is 11; or the slot includes 14 symbols, the quantity of symbols occupied by the sidelink control information is 4, and the quantity of symbols occupied by the sidelink positioning reference signal is 8; or the slot includes seven symbols, the quantity of symbols occupied by the sidelink control information is 2, and the quantity of symbols occupied by the sidelink positioning reference signal is 3; or the slot includes seven symbols, the quantity of symbols occupied by the sidelink control information is 1, and the quantity of symbols occupied by the sidelink positioning reference signal is 4; or the slot includes seven symbols, the quantity of symbols occupied by the sidelink control information is 3, and the quantity of symbols occupied by the sidelink positioning reference signal is 2; or the slot includes seven symbols, the quantity of symbols occupied by the sidelink control information is 4, and the quantity of symbols occupied by the sidelink positioning reference signal is 1.

In the foregoing technical solution, different slot structures are provided for transmitting the sidelink positioning reference signal. In this way, a slot structure for transmitting the sidelink positioning reference signal can be flexibly selected according to a requirement. In addition, in some slot structures in the foregoing technical solution, the sidelink control information occupies a small quantity of symbols. In this way, more symbols can be used to send the sidelink positioning reference signal.

With reference to the third aspect, in a possible implementation of the third aspect, the slot includes a first time domain resource and a second time domain resource, where the first time domain resource is used to send data, the second time domain resource is used to send the sidelink positioning reference signal, and the first time domain resource and the second time domain resource are spaced apart by at least one empty symbol.

In the foregoing technical solution, data and a positioning signal can be sent in a same slot, to efficiently implement collaboration between communication and positioning, and improve transmission efficiency for the positioning signal. In addition, the first time domain resource and the second time domain resource are spaced apart by the empty symbol, so that a receiver can distinguish between the two time domain resources.

With reference to the third aspect, in a possible implementation of the third aspect, a last symbol of the second time domain resource is an empty symbol.

If the second time domain resource is located at the end of the slot, the empty symbol may be used to distinguish the slot from a next slot. Alternatively, if a time domain resource for transmitting other information exists after the second time domain resource, the empty symbol may alternatively be used to distinguish the second time domain resource from the time domain resource.

With reference to the third aspect, in a possible implementation of the third aspect, information carried in a 1st symbol of the slot is the same as information carried in a 2nd symbol of the slot.

In the foregoing technical solution, the 1st symbol of the slot may be used for automatic gain control.

With reference to the third aspect, in a possible implementation of the third aspect, the slot further includes a third time domain resource, the third time domain resource and the first time domain resource are spaced apart by at least one empty symbol, and the third time domain resource is used to send feedback information.

In the foregoing technical solution, data, a positioning signal, and feedback information can be sent in a same slot, to efficiently implement collaboration between communication and positioning, and improve transmission efficiency for the positioning signal. In addition, the first time domain resource and the third time domain resource are spaced apart by the empty symbol, so that a receiver can distinguish between the two time domain resources.

With reference to the third aspect, in a possible implementation of the third aspect, the first time domain resource is further used to send first sidelink control information, and the first sidelink control information indicates the quantity of symbols occupied by the sidelink control information and/or the frequency domain bandwidth occupied by the sidelink control information.

With reference to the third aspect, in a possible implementation of the third aspect, the first time domain resource is further used to send second sidelink control information, and the second sidelink control information indicates the quantity of symbols occupied by the sidelink positioning reference signal and/or the mapping spacing of the sidelink positioning reference signal in frequency domain.

The receive-end device may obtain resource information of the sidelink positioning reference signal based on the second sideline control information, to obtain the sidelink positioning reference signal on a corresponding resource.

With reference to the third aspect, in a possible implementation of the third aspect, the sidelink positioning reference signal carries third sidelink control information, and the third sidelink control information indicates the quantity of symbols occupied by the sidelink positioning reference signal and/or the mapping spacing of the sidelink positioning reference signal in frequency domain.

With reference to the third aspect, in a possible implementation of the third aspect, a frequency domain unit for the sidelink control information is obtained through subchannel-based continuous mapping or interlace-based discrete resource mapping.

The sidelink control information is sent in an interlaced manner, so that an unlicensed spectrum can be used for a channel carrying the sidelink control information.

With reference to the third aspect, in a possible implementation of the third aspect, the frequency domain bandwidth occupied by the sidelink control information is $K \times \varphi$ frequency domain resources, K is a number greater than 0, and $\varphi$ is a positive integer greater than or equal to 1. A unit of the frequency domain resource includes a physical resource block, a subchannel, or an interlace.

With reference to the third aspect, in a possible implementation of the third aspect, the quantity of symbols occupied by the sidelink control information is 1, and K is equal to 2; or the quantity of symbols occupied by the sidelink control information is 2, and K is equal to 1; or the quantity of symbols occupied by the sidelink control information is 4, and K is equal to 1/2.

With reference to the third aspect, in a possible implementation of the third aspect, a resource of the sidelink positioning reference signal in each symbol is Y REs among $Y \times N$ REs, there is one sidelink positioning reference signal in every N REs, Y is a number greater than 0, and N is a positive integer.

With reference to the third aspect, in a possible implementation of the third aspect, a value of N is less than or equal to the quantity of symbols occupied by the sidelink positioning reference signal.

With reference to the third aspect, in a possible implementation of the third aspect, the quantity L of symbols occupied by the sidelink positioning reference signal is greater than N, and a mapping of the sidelink positioning reference signal on a time domain resource is repetitions of N symbols for the sidelink positioning reference signal.

With reference to the third aspect, in a possible implementation of the third aspect, the configuration information is indicated in a resource pool.

With reference to the third aspect, in a possible implementation of the third aspect, a resource of the sidelink control information is related to a resource of the sidelink positioning reference signal.

With reference to the third aspect, in a possible implementation of the third aspect, that a resource of the sidelink control information is related to a resource of the sidelink positioning reference signal includes: The resource of the sidelink positioning reference signal is indicated by indication information, and the sidelink control information includes the indication information; or the resource of the sidelink positioning reference signal is determined based on a frequency domain resource and/or a code resource of the sidelink control information.

According to a fourth aspect, an embodiment of this application provides a method for transmitting sidelink positioning information. The method includes: A second communication device receives sidelink positioning information in a slot, where the sidelink positioning information is generated based on configuration information, the sidelink positioning information includes sidelink control information and a sidelink positioning reference signal, and the configuration information indicates at least one of the following information: a quantity of symbols occupied by the sidelink control information, a frequency domain bandwidth occupied by the sidelink control information, a quantity of symbols occupied by the sidelink positioning reference signal, and a mapping spacing of the sidelink positioning reference signal in frequency domain. The second communication device performs measurement on the sidelink positioning reference signal to obtain a measurement result.

In the foregoing technical solution, the sidelink control information and the sidelink positioning reference signal are jointly sent, so that a function of the sidelink positioning reference signal can operate independently. In other words, the sidelink positioning reference signal may not depend on other scheduling signaling or communication functions.

With reference to the fourth aspect, in a possible implementation of the fourth aspect, the sidelink control information is located before the sidelink positioning reference signal in the slot.

Because the sidelink control channel is located before the sidelink positioning reference signal, if the sidelink control information includes information related to the sidelink positioning reference signal, the second communication device may first obtain the information.

With reference to the fourth aspect, in a possible implementation of the fourth aspect, the sidelink control information and the sidelink positioning reference signal are received in a same slot.

The second communication device may receive the sidelink control information and the sidelink positioning reference signal in a same slot, and does not need to separately receive the sidelink control information and the sidelink positioning reference signal in different slots. This can save time domain resources.

With reference to the fourth aspect, in a possible implementation of the fourth aspect, the slot includes 14 symbols, the quantity of symbols occupied by the sidelink control information is 2, and the quantity of symbols occupied by the sidelink positioning reference signal is 10; or the slot includes 14 symbols, the quantity of symbols occupied by the sidelink control information is 1, and the quantity of symbols occupied by the sidelink positioning reference signal is 11; or the slot includes 14 symbols, the quantity of symbols occupied by the sidelink control information is 4, and the quantity of symbols occupied by the sidelink positioning reference signal is 8; or the slot includes seven symbols, the quantity of symbols occupied by the sidelink control information is 2, and the quantity of symbols occupied by the sidelink positioning reference signal is 3; or the slot includes seven symbols, the quantity of symbols occupied by the sidelink control information is 1, and the quantity of symbols occupied by the sidelink positioning reference signal is 4; or the slot includes seven symbols, the quantity of symbols occupied by the sidelink control information is 3, and the quantity of symbols occupied by the sidelink positioning reference signal is 2; or the slot includes seven symbols, the quantity of symbols occupied by the sidelink control information is 4, and the quantity of symbols occupied by the sidelink positioning reference signal is 1.

In the foregoing technical solution, different slot structures are provided for transmitting the sidelink positioning reference signal. In this way, a slot structure for transmitting the sidelink positioning reference signal can be flexibly selected according to a requirement. In addition, in some slot structures in the foregoing technical solution, the sidelink control information occupies a small quantity of symbols. In this way, more symbols can be used to send the sidelink positioning reference signal.

With reference to the fourth aspect, in a possible implementation of the fourth aspect, the slot includes a first time domain resource and a second time domain resource, where the first time domain resource is used to receive data, the second time domain resource is used to receive the sidelink positioning reference signal, and the first time domain resource and the second time domain resource are spaced apart by at least one empty symbol.

In the foregoing technical solution, data and a positioning signal can be sent in a same slot, to efficiently implement collaboration between communication and positioning, and improve transmission efficiency for the positioning signal. In addition, the first time domain resource and the second time domain resource are spaced apart by the empty symbol, so that a receiver can distinguish between the two time domain resources.

With reference to the fourth aspect, in a possible implementation of the fourth aspect, a last symbol of the second time domain resource is an empty symbol.

If the second time domain resource is located at the end of the slot, the empty symbol may be used to distinguish the slot from a next slot. Alternatively, if a time domain resource for transmitting other information exists after the second time domain resource, the empty symbol may alternatively be used to distinguish the second time domain resource from the time domain resource.

With reference to the fourth aspect, in a possible implementation of the fourth aspect, information carried in a 1st symbol of the slot is the same as information carried in a 2nd symbol of the slot.

In the foregoing technical solution, the 1st symbol of the slot may be used for automatic gain control.

With reference to the fourth aspect, in a possible implementation of the fourth aspect, the slot further includes a third time domain resource, the third time domain resource and the first time domain resource are spaced apart by at least one empty symbol, and the third time domain resource is used to receive feedback information.

In the foregoing technical solution, data, a positioning signal, and feedback information can be sent in a same slot, to efficiently implement collaboration between communication and positioning, and improve transmission efficiency for the positioning signal. In addition, the first time domain resource and the third time domain resource are spaced apart by the empty symbol, so that a receiver can distinguish between the two time domain resources.

With reference to the fourth aspect, in a possible implementation of the fourth aspect, the first time domain resource is further used to receive first sidelink control information, and the first sidelink control information indicates the quantity of symbols occupied by the sidelink control information and/or the frequency domain bandwidth occupied by the sidelink control information.

With reference to the fourth aspect, in a possible implementation of the fourth aspect, the first time domain resource is further used to receive second sidelink control information, and the second sidelink control information indicates the quantity of symbols occupied by the sidelink positioning reference signal and/or the mapping spacing of the sidelink positioning reference signal in frequency domain.

A receive-end device may obtain resource information of the sidelink positioning reference signal based on the second sideline control information, to obtain the sidelink positioning reference signal on a corresponding resource.

With reference to the fourth aspect, in a possible implementation of the fourth aspect, the sidelink positioning reference signal carries third sidelink control information, and the third sidelink control information indicates the quantity of symbols occupied by the sidelink positioning reference signal and/or the mapping spacing of the sidelink positioning reference signal in frequency domain.

With reference to the fourth aspect, in a possible implementation of the fourth aspect, a frequency domain unit for the sidelink control information is obtained through subchannel-based continuous mapping or interlace-based discrete resource mapping.

The sidelink control information is sent in an interlaced manner, so that an unlicensed spectrum can be used for a channel carrying the sidelink control information.

With reference to the fourth aspect, in a possible implementation of the fourth aspect, the frequency domain bandwidth occupied by the sidelink control information is $K \times \varphi$ frequency domain resources, K is a number greater than 0, and $\varphi$ is a positive integer greater than or equal to 1. A unit of the frequency domain resource includes a physical resource block, a subchannel, or an interlace.

With reference to the fourth aspect, in a possible implementation of the fourth aspect, the quantity of symbols occupied by the sidelink control information is 1, and K is equal to 2; or the quantity of symbols occupied by the sidelink control information is 2, and K is equal to 1; or the quantity of symbols occupied by the sidelink control information is 4, and K is equal to 1/2.

With reference to the fourth aspect, in a possible implementation of the fourth aspect, a resource of the sidelink positioning reference signal in each symbol is Y REs among $Y \times N$ REs, there is one sidelink positioning reference signal in every N REs, Y is a number greater than 0, and N is a positive integer.

With reference to the fourth aspect, in a possible implementation of the fourth aspect, a value of N is less than or equal to the quantity of symbols occupied by the sidelink positioning reference signal.

With reference to the fourth aspect, in a possible implementation of the fourth aspect, the quantity L of symbols occupied by the sidelink positioning reference signal is greater than N, and a mapping of the sidelink positioning reference signal on a time domain resource is repetitions of N symbols for the sidelink positioning reference signal.

With reference to the fourth aspect, in a possible implementation of the fourth aspect, the configuration information is indicated in a resource pool.

With reference to the fourth aspect, in a possible implementation of the fourth aspect, a resource of the sidelink control information is related to a resource of the sidelink positioning reference signal.

With reference to the fourth aspect, in a possible implementation of the fourth aspect, that a resource of the sidelink control information is related to a resource of the sidelink positioning reference signal includes: The resource of the sidelink positioning reference signal is indicated by indication information, and the sidelink control information includes the indication information; or the resource of the sidelink positioning reference signal is determined based on a frequency domain resource and/or a code resource of the sidelink control information.

According to a fifth aspect, an embodiment of this application provides a method for transmitting a sidelink positioning reference signal. The method includes: A first communication device determines a first sequence parameter, where the first sequence parameter includes at least one of the following: a resource of a sidelink control channel, information carried in the sidelink control channel, and a resource of the sidelink positioning reference signal, and the first sequence parameter is used to generate the sidelink positioning reference signal. The first communication device sends the sidelink control channel and the sidelink positioning reference signal in a slot.

In the foregoing technical solution, the first sequence parameter is information that has an association relationship with information (the sidelink control channel and the sidelink positioning reference signal) sent by the first communication device. In this way, the sidelink positioning reference signal determined based on the first sequence parameter is better associated with the information that the first communication device needs to send.

With reference to the fifth aspect, in a possible implementation of the fifth aspect, a frequency domain resource of the sidelink positioning reference signal is Y REs among Y×N REs, there is one sidelink positioning reference signal in every N REs, Y is a number greater than 0, and N is a positive integer.

If N is a positive integer greater than or equal to 2, a frequency domain resource of each symbol may be multiplexed to N communication devices for use. In this way, a plurality of communication devices can send sidelink positioning reference signals by using a same time domain resource.

With reference to the fifth aspect, in a possible implementation of the fifth aspect, the resource of the sidelink positioning reference signal includes an RE offset of the sidelink positioning reference signal, and the RE offset indicates a location of the sidelink positioning reference signal in every N REs.

In the foregoing technical solution, the sidelink positioning reference signal is generated by using resource information of the sidelink positioning reference signal, so that the resource information can be checked during transmission of the positioning reference signal, to implement correct transmission.

With reference to the fifth aspect, in a possible implementation of the fifth aspect, the resource of the sidelink control channel includes at least one of the following: an index of a frequency domain resource of the sidelink control channel, an index of a sequence parameter of the sidelink control channel, or a joint resource index of the sidelink control channel, where the joint resource index is determined based on the index of the frequency domain resource of the sidelink control channel and the index of the sequence parameter of the control channel.

In the foregoing technical solution, the sidelink positioning reference signal is generated by using frequency domain resource information of the sidelink control channel, so that the frequency domain resource information can be checked during transmission of the positioning reference signal, to implement correct transmission.

With reference to the fifth aspect, in a possible implementation of the fifth aspect, the index of the sequence parameter of the sidelink control channel includes at least one of the following: an orthogonal code index of the sequence parameter of the sidelink control channel, a cyclic shift index of the sequence parameter of the sidelink control channel, and a root sequence number index of the sequence parameter of the sidelink control channel.

In the foregoing technical solution, the sidelink positioning reference signal is generated by using the sequence parameter of the sidelink control channel, so that information about the sequence parameter can be checked during transmission of the positioning reference signal, to implement correct transmission.

With reference to the fifth aspect, in a possible implementation of the fifth aspect, the joint resource index $i_r$ meets the following formula: $i_r = i_r \times M_s + i_s$; or joint resource index $i_r$ meets the following formula: $i_r = i_s \times M_f + i_f$, where $i_s = 0, 1, ..., M_s-1$, $i_f = 0, 1, ..., M_f-1$, $M_s$ is a quantity of sequence parameters of the sidelink control channel, and $M_f$ is a quantity of orthogonal resources of the sidelink control channel in the slot.

In the foregoing technical solution, the sidelink positioning reference signal is generated jointly by using the frequency domain resource and a sequence parameter of the sidelink control channel, so that information about the domain and sequence parameters can be checked during transmission of the positioning reference signal, to implement correct transmission.

With reference to the fifth aspect, in a possible implementation of the fifth aspect, the information carried in the sidelink control channel includes at least one of the following: an identifier of the first communication device; an identifier of a second communication device, where the second communication device is a receiving device for the positioning reference signal; indication information indicating a geographical location of the first communication device; indication information indicating a geographical location of the second communication device; and indication information for a sequence identifier, where the sequence identifier is used to generate an initial value of a sequence of the positioning reference signal.

In the foregoing technical solution, the sidelink positioning reference signal is generated by using parameter information carried in the sidelink control channel, so that the carried information can be checked during transmission of the positioning reference signal, to implement correct transmission.

With reference to the fifth aspect, in a possible implementation of the fifth aspect, a sequence for generating the positioning reference signal is a random sequence, and an initial value of the positioning reference signal is generated based on the first sequence parameter.

In the foregoing technical solution, the sidelink positioning reference signal is generated by using the first sequence parameter and the random sequence, so that the first sequence parameter can be checked through detection on the random sequence during transmission of the positioning reference signal, to implement correct transmission.

With reference to the fifth aspect, in a possible implementation of the fifth aspect, the initial value $c_{int}$ of the positioning reference signal meets the following formula: $c_{int,} = (2^m A \cdot (2B+1)+B) \bmod 2^{31}$, where the parameter A and/or the parameter B are determined based on the first sequence parameter.

In the foregoing technical solution, an initial value of the random sequence is generated by using the first sequence parameter, and then the sidelink positioning reference signal is generated, so that the first sequence parameter can be checked through detection on the random sequence during transmission of the positioning reference signal, to implement correct transmission.

With reference to the fifth aspect, in a possible implementation of the fifth aspect, the initial value $c_{int}$ of the positioning reference signal is determined based on the following formula: $c_{init} = (2^n B/ C+2^m A(2(B \bmod C)+1) +(B \bmod C)) \bmod 2^{31}$, where at least one of the parameter A, the parameter B, and the parameter C is determined based on the first sequence parameter.

In the foregoing technical solution, an initial value of the random sequence is generated by using the first sequence parameter, and then the sidelink positioning reference signal is generated, so that the first sequence parameter can be checked through detection on the random sequence during transmission of the positioning reference signal, to implement correct transmission.

With reference to the fifth aspect, in a possible implementation of the fifth aspect, the parameter A is determined based on the following formula: $A = \left( N_{symb}^{slot} n_{s,f}^{m} + l + 1 \right)$, where $N_{symb}^{slot}$ indicates a quantity of symbols in a slot, $n_{s,f}^{m}$ indicates a quantity of slots in a subframe, and $l$ indicates a quantity of OFDM symbols in a slot.

In the foregoing technical solution, an initial value of the random sequence is generated by using the first sequence parameter, and then the sidelink positioning reference signal is generated, so that the first sequence parameter can be checked through detection on the random sequence during transmission of the positioning reference signal, to implement correct transmission.

With reference to the fifth aspect, in a possible implementation of the fifth aspect, a sequence for generating the sidelink positioning reference signal is a ZC sequence, and the first sequence parameter is used to generate a root sequence number of the ZC sequence and/or a cyclic shift value of the ZC sequence.

With reference to the fifth aspect, in a possible implementation of the fifth aspect, the sidelink control channel and the sidelink positioning reference signal are sent in a same slot.

With reference to the fifth aspect, in a possible implementation of the fifth aspect, the sidelink control channel is located before the sidelink positioning reference signal in the slot.

According to a sixth aspect, an embodiment of this application provides a method for transmitting a sidelink positioning reference signal. The method includes: A second communication device receives a sidelink control channel and a sidelink positioning reference signal in a slot, where the sidelink positioning reference signal is generated based on a first sequence parameter, the first sequence parameter includes at least one of the following: a resource of the sidelink control channel, information carried in the sidelink control channel, and a resource of the sidelink positioning reference signal, and the first sequence parameter is used to generate the sidelink positioning reference signal. The second communication device performs measurement on the sidelink positioning reference signal to obtain a measurement result.

In the foregoing technical solution, the first sequence parameter is information that has an association relationship with information (the sidelink control channel and the sidelink positioning reference signal) received by the second communication device. In this way, the sidelink positioning reference signal determined based on the first sequence parameter is better associated with information that the second communication device needs.

With reference to the sixth aspect, in a possible implementation of the sixth aspect, a frequency domain resource of the sidelink positioning reference signal is Y REs among Y×N REs, there is one sidelink positioning reference signal in every N REs, Y is a number greater than 0, and N is a positive integer.

If N is a positive integer greater than or equal to 2, a frequency domain resource of each symbol may be multiplexed to N communication devices for use. In this way, a plurality of communication devices can send sidelink positioning reference signals by using a same time domain resource.

With reference to the sixth aspect, in a possible implementation of the sixth aspect, the resource of the sidelink positioning reference signal includes an RE offset of the sidelink positioning reference signal, and the RE offset indicates a location of the sidelink positioning reference signal in every N REs.

In the foregoing technical solution, the sidelink positioning reference signal is generated by using resource information of the sidelink positioning reference signal, so that the resource information can be checked during transmission of the positioning reference signal, to implement correct transmission.

With reference to the sixth aspect, in a possible implementation of the sixth aspect, the resource of the sidelink control channel includes at least one of the following: an index of a frequency domain resource of the sidelink control channel, an index of a sequence parameter of the sidelink control channel, or a joint resource index of the sidelink control channel, where the joint resource index is determined based on the index of the frequency domain resource of the sidelink control channel and the index of the sequence parameter of the control channel.

In the foregoing technical solution, the sidelink positioning reference signal is generated by using frequency domain resource information of the sidelink control channel, so that the frequency domain resource information can be checked during transmission of the positioning reference signal, to implement correct transmission.

With reference to the sixth aspect, in a possible implementation of the sixth aspect, the index of the sequence parameter of the sidelink control channel includes at least one of the following: an orthogonal code index of the sequence parameter of the sidelink control channel, a cyclic shift index of the sequence parameter of the sidelink control channel, and a root sequence number index of the sequence parameter of the sidelink control channel.

In the foregoing technical solution, the sidelink positioning reference signal is generated by using the sequence parameter of the sidelink control channel, so that information about the sequence parameter can be checked during transmission of the positioning reference signal, to implement correct transmission.

With reference to the sixth aspect, in a possible implementation of the sixth aspect, the joint resource index $i_r$ meets the following formula: $i_r = i_f \times M_s + i_s$; or joint resource index $i_r$ meets the following formula: $i_r = i_s \times M_f + i_f$, where $i_s = 0, 1, ..., M_s - 1$, $i_f = 0, 1, ..., M_f - 1$, $M_s$ is a quantity of parameters of the sequence parameter of the sidelink control channel, and $M_f$ is a quantity of orthogonal resources of the sidelink control channel in the slot.

In the foregoing technical solution, the sidelink positioning reference signal is generated jointly by using the frequency domain resource and a sequence parameter of the sidelink control channel, so that information about the domain and sequence parameters can be checked during transmission of the positioning reference signal, to implement correct transmission.

With reference to the sixth aspect, in a possible implementation of the sixth aspect, the information carried in the sidelink control channel includes at least one of the following: an identifier of the first communication device; an identifier of the second communication device, where the second communication device is a receiving device for the positioning reference signal; indication information indicating a geographical location of the first communication device; indication information indicating a geographical location of the second communication device; and indication information for a sequence identifier, where the sequence identifier is used to generate an initial value of a sequence of the positioning reference signal.

In the foregoing technical solution, the sidelink positioning reference signal is generated by using parameter information carried in the sidelink control channel, so that the carried information can be checked during transmission of the positioning reference signal, to implement correct transmission.

With reference to the sixth aspect, in a possible implementation of the sixth aspect, a sequence for generating the positioning reference signal is a random sequence, and an initial value of the positioning reference signal is generated based on the first sequence parameter.

In the foregoing technical solution, the sidelink positioning reference signal is generated by using the first sequence parameter and the random sequence, so that the first sequence parameter can be checked through detection on the random sequence during transmission of the positioning reference signal, to implement correct transmission.

With reference to the sixth aspect, in a possible implementation of the sixth aspect, the initial value $c_{int}$ of the positioning reference signal meets the following formula: $c_{int} = (2^m A \cdot (2B+1) + B) \bmod 2^{31}$, where the parameter A and/or the parameter B are determined based on the first sequence parameter.

In the foregoing technical solution, an initial value of the random sequence is generated by using the first sequence parameter, and then the sidelink positioning reference signal is generated, so that the first sequence parameter can be checked through detection on the random sequence during transmission of the positioning reference signal, to implement correct transmission.

With reference to the sixth aspect, in a possible implementation of the sixth aspect, the initial value $c_{int}$ of the positioning reference signal is determined based on the following formula: $c_{init} = (2^n B / C + 2^m A(2(B \bmod C) + 1) + (B \bmod C)) \bmod 2^{31}$, where at least one of the parameter A, the parameter B, and the parameter C is determined based on the first sequence parameter.

In the foregoing technical solution, an initial value of the random sequence is generated by using the first sequence parameter, and then the sidelink positioning reference signal is generated, so that the first sequence parameter can be checked through detection on the random sequence during transmission of the positioning reference signal, to implement correct transmission.

With reference to the sixth aspect, in a possible implementation of the sixth aspect, the parameter A is determined based on the following formula: $A = \left( N_{symb}^{slot} n_{s,f}^{m} + l + 1 \right)$, where $N_{symb}^{slot}$ indicates a quantity of symbols in a slot, $n_{s,f}^{m}$ indicates a quantity of slots in a subframe, and $l$ indicates a quantity of OFDM symbols in a slot.

In the foregoing technical solution, an initial value of the random sequence is generated by using the first sequence parameter, and then the sidelink positioning reference signal is generated, so that the first sequence parameter can be checked through detection on the random sequence during transmission of the positioning reference signal, to implement correct transmission.

With reference to the sixth aspect, in a possible implementation of the sixth aspect, a sequence for generating the sidelink positioning reference signal is a ZC sequence, and the first sequence parameter is used to generate a root sequence number of the ZC sequence and/or a cyclic shift value of the ZC sequence.

With reference to the sixth aspect, in a possible implementation of the sixth aspect, the sidelink control channel and the sidelink positioning reference signal are received in a same slot.

With reference to the sixth aspect, in a possible implementation of the sixth aspect, the sidelink control channel is located before the sidelink positioning reference signal in the slot.

According to a seventh aspect, an embodiment of this application provides a communication device. The communication device includes a module for implementing any one of the first aspect or the possible implementations of the first aspect.

According to an eighth aspect, an embodiment of this application provides a communication device. The communication device includes a module for implementing any one of the second aspect or the possible implementations of the second aspect.

According to a ninth aspect, an embodiment of this application provides a communication device. The communication device includes a module for implementing any one of the third aspect or the possible implementations of the third aspect.

According to a tenth aspect, an embodiment of this application provides a communication device. The communication device includes a module for implementing any one of the fourth aspect or the possible implementations of the fourth aspect.

According to an eleventh aspect, an embodiment of this application provides a communication device. The communication device includes a module for implementing any one of the fifth aspect or the possible implementations of the fifth aspect.

According to a twelfth aspect, an embodiment of this application provides a communication device. The communication device includes a module for implementing any one of the sixth aspect or the possible implementations of the sixth aspect.

According to a thirteenth aspect, an embodiment of this application provides a communication apparatus. The communication apparatus includes a processor. The processor is configured to be coupled to a memory, and read and execute instructions and/or program code in the memory, to perform any one of the first aspect or the possible implementations of the first aspect.

According to a fourteenth aspect, an embodiment of this application provides a communication apparatus. The communication apparatus includes a processor. The processor is configured to be coupled to a memory, and read and execute instructions and/or program code in the memory, to perform any one of the second aspect or the possible implementations of the second aspect.

According to a fifteenth aspect, an embodiment of this application provides a communication apparatus. The communication apparatus includes a processor. The processor is configured to be coupled to a memory, and read and execute instructions and/or program code in the memory, to perform any one of the third aspect or the possible implementations of the third aspect.

According to a sixteenth aspect, an embodiment of this application provides a communication apparatus. The communication apparatus includes a processor. The processor is configured to be coupled to a memory, and read and execute instructions and/or program code in the memory, to perform any one of the fourth aspect or the possible implementations of the fourth aspect.

According to a seventeenth aspect, an embodiment of this application provides a communication apparatus. The communication apparatus includes a processor. The processor is configured to be coupled to a memory, and read and execute instructions and/or program code in the memory, to perform any one of the fifth aspect or the possible implementations of the fifth aspect.

According to an eighteenth aspect, an embodiment of this application provides a communication apparatus. The communication apparatus includes a processor. The processor is configured to be coupled to a memory, and read and execute instructions and/or program code in the memory, to perform any one of the sixth aspect or the possible implementations of the sixth aspect.

According to a nineteenth aspect, an embodiment of this application provides a chip system. The chip system includes a logic circuit. The logic circuit is configured to be coupled to an input/output interface, and transmit data through the input/output interface, to perform any one of the first aspect or the possible implementations of the first aspect.

According to a twentieth aspect, an embodiment of this application provides a chip system. The chip system includes a logic circuit. The logic circuit is configured to be coupled to an input/output interface, and transmit data through the input/output interface, to perform any one of the second aspect or the possible implementations of the second aspect.

According to a twenty-first aspect, an embodiment of this application provides a chip system. The chip system includes a logic circuit. The logic circuit is configured to be coupled to an input/output interface, and transmit data through the input/output interface, to perform any one of the third aspect or the possible implementations of the third aspect.

According to a twenty-second aspect, an embodiment of this application provides a chip system. The chip system includes a logic circuit. The logic circuit is configured to be coupled to an input/output interface, and transmit data through the input/output interface, to perform any one of the fourth aspect or the possible implementations of the fourth aspect.

According to a twenty-third aspect, an embodiment of this application provides a chip system. The chip system includes a logic circuit. The logic circuit is configured to be coupled to an input/output interface, and transmit data through the input/output interface, to perform any one of the fifth aspect or the possible implementations of the fifth aspect.

According to a twenty-fourth aspect, an embodiment of this application provides a chip system. The chip system includes a logic circuit. The logic circuit is configured to be coupled to an input/output interface, and transmit data through the input/output interface, to perform any one of the sixth aspect or the possible implementations of the sixth aspect.

According to a twenty-fifth aspect, an embodiment of this application provides a computer-readable storage medium. The computer-readable storage medium stores program code. When the computer storage medium is run on a computer, the computer is enabled to perform any one of the first aspect or the possible implementations of the first aspect.

According to a twenty-sixth aspect, an embodiment of this application provides a computer-readable storage medium. The computer-readable storage medium stores program code. When the computer storage medium is run on a computer, the computer is enabled to perform any one of the second aspect or the possible implementations of the second aspect.

According to a twenty-seventh aspect, an embodiment of this application provides a computer-readable storage medium. The computer-readable storage medium stores program code. When the computer storage medium is run on a computer, the computer is enabled to perform any one of the third aspect or the possible implementations of the third aspect.

According to a twenty-eighth aspect, an embodiment of this application provides a computer-readable storage medium. The computer-readable storage medium stores program code. When the computer storage medium is run on a computer, the computer is enabled to perform any one of the fourth aspect or the possible implementations of the fourth aspect.

According to a twenty-ninth aspect, an embodiment of this application provides a computer-readable storage medium. The computer-readable storage medium stores program code. When the computer storage medium is run on a computer, the computer is enabled to perform any one of the fifth aspect or the possible implementations of the fifth aspect.

According to a thirtieth aspect, an embodiment of this application provides a computer-readable storage medium. The computer-readable storage medium stores program code. When the computer storage medium is run on a computer, the computer is enabled to perform any one of the sixth aspect or the possible implementations of the sixth aspect.

According to a thirty-first aspect, an embodiment of this application provides a computer program product. The computer program product includes computer program code. When the computer program code is run on a computer, the computer is enabled to perform any one of the first aspect or the possible implementations of the first aspect.

According to a thirty-second aspect, an embodiment of this application provides a computer program product. The computer program product includes computer program code. When the computer program code is run on a computer, the computer is enabled to perform any one of the second aspect or the possible implementations of the second aspect.

According to a thirty-third aspect, an embodiment of this application provides a computer program product. The computer program product includes computer program code. When the computer program code is run on a computer, the computer is enabled to perform any one of the third aspect or the possible implementations of the third aspect.

According to a thirty-fourth aspect, an embodiment of this application provides a computer program product. The computer program product includes computer program code. When the computer program code is run on a computer, the computer is enabled to perform any one of the fourth aspect or the possible implementations of the fourth aspect.

According to a thirty-fifth aspect, an embodiment of this application provides a computer program product. The computer program product includes computer program code. When the computer program code is run on a computer, the computer is enabled to perform any one of the fifth aspect or the possible implementations of the fifth aspect.

According to a thirty-sixth aspect, an embodiment of this application provides a computer program product. The computer program product includes computer program code. When the computer program code is run on a computer, the computer is enabled to perform any one of the sixth aspect or the possible implementations of the sixth aspect.

## BRIEF DESCRIPTION OF DRAWINGS

FIG. 1 is a diagram of an application scenario 100 according to this application;
FIG. 2 is a diagram of an application scenario 200 according to this application;
FIG. 3 is a diagram of a resource occupied by a downlink positioning reference signal;
FIG. 4 is a diagram of a resource occupied by an uplink positioning reference signal;
FIG. 5 is a schematic flowchart of a method for transmitting sidelink positioning information according to an embodiment of this application;
FIG. 6 is a diagram of a slot for transmitting positioning information;
FIG. 7 is a diagram of another slot for transmitting positioning information;
FIG. 8 is a diagram of a slot for transmitting positioning information;
FIG. 9 is a diagram of a slot for transmitting positioning information;
FIG. 10 is a diagram of another slot for transmitting positioning information;
FIG. 11 is a diagram of a frequency domain resource occupied by sidelink control information;
FIG. 12 shows a relationship between a first time domain resource and a second time domain resource;
FIG. 13 is a schematic flowchart of a method for transmitting a sidelink positioning reference signal according to an embodiment of this application;
FIG. 14 is a diagram of a case in which N is greater than M and no code division is performed on a sidelink control channel;
FIG. 15 is a diagram of a case in which N is greater than M and code division is performed on a sidelink control channel;
FIG. 16 is a diagram of a case in which N is less than M and code division is performed on a sidelink positioning reference signal;
FIG. 17 is a diagram in which N is greater than M and code division is performed on a sidelink control channel;
FIG. 18 is a diagram in which N is less than M and code division is performed on a sidelink positioning reference signal;
FIG. 19 is a diagram of resources occupied by a sidelink control channel and a sidelink positioning reference signal;
FIG. 20 is a schematic flowchart of a method for transmitting a sidelink positioning reference signal according to an embodiment of this application;
FIG. 21 is a block diagram of a structure of a communication device according to an embodiment of this application;
FIG. 22 is a block diagram of a structure of another communication device according to an embodiment of this application; and
FIG. 23 is a block diagram of a structure of a communication apparatus according to an embodiment of this application.

## DESCRIPTION OF EMBODIMENTS

The following describes technical solutions in embodiments of this application with reference to accompanying drawings.

Terms used in the following embodiments are merely intended to describe specific embodiments, but not to limit this application. The terms "one", "a", and "the" in singular forms used in this specification and the appended claims of this application are intended to include a form such as "one or more", unless otherwise specified in the context clearly. It should be further understood that, in the following embodiments of this application, "at least one" and "one or more" mean one, two, or more. "First", "second", and various numbers are merely intended for distinguishing for ease of description, and are not intended to limit the scope of embodiments of this application. "And/or" describes a correspondence between objects that correspond to each other, and indicates that three relationships may exist. For example, "A and/or B" may indicate the following three cases: Only A exists, only B exists, and both A and B exist, where A and B may be singular or plural. The character "/" usually indicates an "or" relationship between associated objects. Sequence numbers of the following processes do not mean an execution sequence. The execution sequence of the processes should be determined based on functions and internal logic of the processes, and should not be construed as any limitation on an implementation process of embodiments of this application. For example, in embodiments of this application, the terms "301", "401", "501", and the like are merely identifiers for ease of description, and are not intended to limit an execution sequence of steps.

Reference to "an embodiment", "some embodiments", or the like described in this specification means that one or more embodiments of this application include a specific feature, structure, or characteristic described with reference to the embodiment. In this application, the term "example", "for example", or the like is used to give an example, an illustration, or a description. Any embodiment or design scheme described as an "example" or "for example" in this application should not be construed as being more preferred or more advantageous than another embodiment or design scheme. To be precise, the term "example", "for example", or the like is intended to present a related concept in a specific manner. The terms "include", "comprise", "have", and their variants all mean "including but not limited to", unless otherwise specifically emphasized in another manner. In embodiments of this application, the descriptions "when...", "in a case that... ", "if", and the like all mean that a device performs corresponding processing in an objective case, but are not intended to limit time. The descriptions do not necessarily mean that the device performs a determining action during implementation, and do not mean any other limitation.

In this application, "indicating" may include directly indicating and indirectly indicating. When indication information is described as indicating A, the description may include that the indication information directly indicates A or indirectly indicates A, but does not mean that the indication information necessarily carries A. In embodiments of this application, the descriptions "when...", "in a case that...", "if", and the like all mean that a device performs corresponding processing in an objective case, but are not intended to limit time. The descriptions do not necessarily mean that the device performs a determining action during implementation, and do not mean any other limitation.

The technical solutions in embodiments of this application may be used in various communication systems, for example, a long term evolution (long term evolution, LTE) system, an LTE frequency division duplex (frequency division duplex, FDD) system, LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a $5^{th}$ generation ($5^{th}$ generation, 5G) or new radio (new radio, NR) system, a future $6^{th}$ generation ($6^{th}$ generation, 6G) system, and non-terrestrial communication network (non-terrestrial network, NTN) systems such as an inter-satellite communication system and a satellite communication system. The satellite communication system includes a satellite base station and a terminal device. The satellite base station provides a communication service for the terminal device. The satellite base station may also communicate with a base station. A satellite may serve as a base station or a terminal device. The satellite may be an uncrewed aerial vehicle, a hot air balloon, a low Earth orbit satellite, a medium Earth orbit satellite, a high Earth orbit satellite, or the like. The satellite may alternatively be a non-terrestrial base station, a non-terrestrial device, or the like.

Embodiments of this application may be applied to a terminal device. The terminal device may be a device that provides voice/data connectivity for a user, for example, a handheld device or a vehicle-mounted device with a wireless connection function; may be a device in internet of vehicles communication, for example, a communication terminal mounted on a vehicle or a roadside unit (roadside unit, RSU); may be a communication terminal mounted on an uncrewed aerial vehicle; or may be a terminal device in an internet of things (internet of things, IoT) system. The terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, a user apparatus, or the like.

For example, the terminal device includes but is not limited to a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a terminal in vehicle-to-everything (vehicle-to-everything, V2X), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a hand-held device with a wireless communication function, a computing device or another processing device connected to a wireless modem, a wearable device, a terminal device in a 5G network, or a terminal device in a future evolved public land mobile network (public land mobile network, PLMN). A specific form of the terminal device is not limited in embodiments of this application.

In embodiments of this application, an apparatus for implementing a function of a terminal device may be a terminal device, or may be an apparatus, for example, a chip system, that can enable a terminal device to implement the function. The apparatus may be mounted in a terminal device or used in combination with a terminal device. In embodiments of this application, the chip system may include a chip, or may include a chip and another discrete component.

The technical solutions in embodiments of this application may be further applied to an access network device. The access network device may be a device that can connect a terminal device to a wireless network. The access network device may also be referred to as a radio access network (radio access network, RAN) node, a radio access network device, or a network device. For example, the access network device may be a base station.

In embodiments of this application, the base station may cover any of the following names in a broad sense, or may be replaced with the following names: for example, a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a master station (master eNodeB, MeNB), a secondary station (secondary eNodeB, SeNB), a multi-standard radio (multi-standard radio, MSR) node, a home base station, a network controller, an access node, a radio node, an access point (access point, AP), a transmission node, a transceiver node, a baseband unit (baseband unit, BBU), a remote radio unit (remote radio unit, RRU), an active

# EP 4 561 204 A1

antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, or the like, or a combination thereof. The base station may alternatively be a communication module, a modem, or a chip that is disposed in the foregoing device or apparatus. The base station may alternatively be a network-side device in a 6G network, a device that performs a function of a base station in a future communication system, or the like. The base station may support networks of a same access technology or different access technologies.

The base station may be fixed or mobile. For example, a helicopter or an uncrewed aerial vehicle may be configured as a mobile base station, and one or more cells may move based on a position of the mobile base station. In other examples, a helicopter or an uncrewed aerial vehicle may be configured as a device for communicating with another base station.

A positioning management device is a network-side device for determining positioning information of a terminal device. The positioning management device may be a location management function (location management function, LMF) entity, an evolved serving mobile location center (evolved serving mobile location center, E-SMLC), or another device that can be used to determine positioning information of a terminal device.

A specific technology and a specific device form that are used by the access network device are not limited in embodiments of this application.

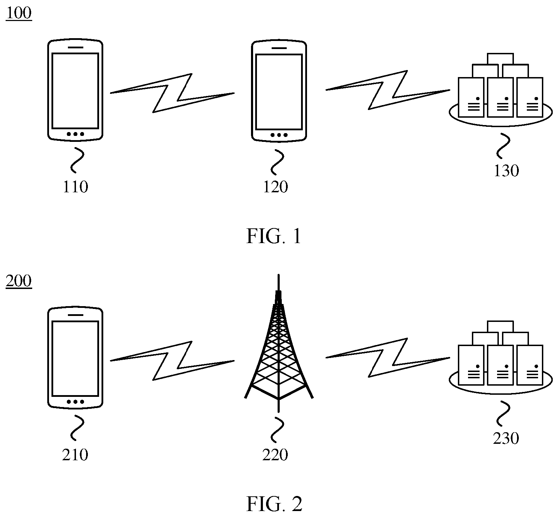

For ease of understanding embodiments of this application, FIG. 1 and FIG. 2 are first used as examples to describe application scenarios to which embodiments of this application are applicable.

FIG. 1 is a diagram of an application scenario 100 according to this application. As shown in FIG. 1, the application scenario 100 mainly relates to a sidelink (sidelink, SL) positioning scenario. The positioning scenario may include a terminal device 110, a terminal device 120, and a positioning management device 130. The terminal device 110 may be a to-be-positioned terminal device, and the terminal device 120 may be another terminal device or a roadside unit. It should be understood that, in the positioning scenario, positioning may be performed between the terminal device 110 and the terminal device 120 through a direct communication interface (namely, a PC5 interface).

In a possible implementation, the terminal device 110 has at least two antennas, and the terminal device 120 also has at least two antennas. The terminal device 120 sends reference signals to the terminal device 110 on the at least two antennas. The terminal device 110 receives the reference signals on the at least two antennas and performs measurement on the reference signals.

In some embodiments, the terminal device 110 may determine a location and/or an attitude of the terminal device 110 based on measurement information.

In some embodiments, the terminal device 110 may send information obtained through measurement to the terminal device 120, and the terminal device 120 determines a location and/or an attitude of the terminal device 110 based on received measurement information.

In some embodiments, the terminal device 110 may send information obtained through measurement to the positioning management device 130, and the positioning management device 130 determines a location and/or an attitude of the terminal device 110 based on received measurement information.

In a possible implementation, the terminal device 110 has at least two antennas, and the terminal device 120 may include at least two terminal devices. The at least two terminal devices included in the terminal device 120 each send a reference signal to the terminal device 110 on a same antenna of the terminal device. The terminal device 110 may receive reference signals on different antennas and perform measurement on the reference signals.

In some embodiments, the terminal device 110 may determine a location and/or an attitude of the terminal device 110 based on measurement information.

In some embodiments, the terminal device 110 may send information obtained through measurement to the terminal device 120, and the terminal device 120 determines a location and/or an attitude of the terminal device 110 based on received measurement information.

In some embodiments, the terminal device 110 may send information obtained through measurement to the positioning management device 130, and the positioning management device 130 determines a location and/or an attitude of the terminal device 110 based on received measurement information.

In a possible implementation, the terminal device 110 has at least two antennas, and the terminal device 120 also has at least two antennas. The terminal device 110 sends reference signals to the terminal device 120 on the at least two antennas. The terminal device 120 receives the reference signals on the at least two antennas and performs measurement on the reference signals.

In some embodiments, the terminal device 120 may determine a location and/or an attitude of the terminal device 110 based on measurement information.

In some embodiments, the terminal device 120 may send information obtained through measurement to the terminal device 110, and the terminal device 110 determines a location and/or an attitude of the terminal device 110 based on received measurement information.

In some embodiments, the terminal device 120 may send information obtained through measurement to the positioning management device 130, and the positioning management device 130 determines a location and/or an attitude of the terminal device 110 based on received measurement information.

In a possible implementation, the terminal device 110 has at least two antennas, and the terminal device 120 may include at least two terminal devices. The terminal device 110 sends reference signals to the terminal device 120 on the at least two antennas. The at least two terminal devices included in the terminal device 120 each receive a reference signal on a same antenna and perform measurement on the reference signal.

In some embodiments, any device included in the terminal device 120 or the at least two devices included in the terminal device 120 may determine a location and/or an attitude of the terminal device 110 based on measurement information.

In some embodiments, the at least two terminal devices of the terminal device 120 may send information obtained through measurement to the terminal device 110, and the terminal device 110 determines a location and/or an attitude of the terminal device 110 based on received measurement information.

In some embodiments, the at least two terminal devices of the terminal device 120 may send information obtained through measurement to the positioning management device 130, and the positioning management device 130 determines a location and/or an attitude of the terminal device 110 based on received measurement information.

In a possible implementation, the terminal device 110 has at least two antennas, and the terminal device 120 has only one antenna. The terminal device 110 sends reference signals to the terminal device 120 on the at least two antennas. The terminal device 120 receives the reference signals on a same antenna and performs measurement on the reference signals.

In some embodiments, the terminal device 120 may determine a location and/or an attitude of the terminal device 110 based on measurement information.

In some embodiments, the terminal device 120 may send information obtained through measurement to the terminal device 110, and the terminal device 110 determines a location and/or an attitude of the terminal device 110 based on received measurement information.

In some embodiments, the terminal device 120 may send information obtained through measurement to the positioning management device 130, and the positioning management device 130 determines a location and/or an attitude of the terminal device 110 based on received measurement information.

FIG. 2 is a diagram of an application scenario 200 according to this application. As shown in FIG. 2, the application scenario 200 mainly relates to a cellular positioning scenario. The application scenario 200 may include a terminal device 210, an access network device 220, and a positioning management device 230. The terminal device 210 may be a to-be-positioned terminal device. The access network device 220 may serve as an anchor device (to be specific, a location of the access network device 220 is known). It should be understood that, in the positioning scenario, positioning may be performed between the terminal device 210 and the access network device 220 through a cellular communication interface (namely, a Uu interface).

In a possible implementation, the terminal device 210 has at least two antennas, and the access network device 220 also has at least two antennas. The access network device 220 sends reference signals to the terminal device 210 on the at least two antennas. The terminal device 210 receives the reference signals on the at least two antennas and performs measurement on the reference signals. The terminal device 210 may send information obtained through measurement to the positioning management device 230. The positioning management device 230 determines a location and/or an attitude of the terminal device 210 based on received measurement information. Alternatively, the terminal device 210 may determine a location and/or an attitude of the terminal device 210 based on information obtained through measurement. Alternatively, the terminal device 210 may send information obtained through measurement to the access network device 220, and the access network device 220 may determine a location and/or an attitude of the terminal device 210 based on received measurement information.

In a possible implementation, the terminal device 210 has at least two antennas, and the access network device 220 may include at least two access network devices. The at least two access network devices included in the access network device 220 each send a reference signal to the terminal device 210 on a same antenna of the access network device. The terminal device 210 may receive reference signals on different antennas and perform measurement on the reference signals. The terminal device 210 may send information obtained through measurement to the positioning management device 230. The positioning management device 230 determines a location and/or an attitude of the terminal device 210 based on received measurement information. Alternatively, the terminal device 210 may determine a location and/or an attitude of the terminal device 210 based on information obtained through measurement. Alternatively, the terminal device 210 may send information obtained through measurement to the access network device 220, and the access network device 220 may determine a location and/or an attitude of the terminal device 210 based on received measurement information.

In a possible implementation, the terminal device 210 has at least two antennas, and the access network device 220 also has at least two antennas. The terminal device 210 sends reference signals to the access network device 220 on the at least two antennas. The access network device 220 receives the reference signals on the at least two antennas and performs measurement on the reference signals. The access network device 220 may send information obtained through measurement to the positioning management device 230. The positioning management device 230 determines a location and/or an attitude of the terminal device 210 based on received measurement information. Alternatively, the access network device 220 may determine a location and/or an attitude of the terminal device 210 based on information obtained through measurement. Alternatively, the access network device 220 may send information obtained through measurement to the terminal device 210, and the terminal device 210 may determine a location and/or an attitude of the terminal device 210 based on received measurement information.

In a possible implementation, the terminal device 210 has at least two antennas, and the access network device 220 may include at least two access network devices. The terminal device 210 sends reference signals to the access network device 220 on the at least two antennas. The at least two access network devices included in the access network device 220 each receive a reference signal on a same antenna and perform measurement on the reference signal. The access network device 220 may send information obtained through measurement to the positioning management device 230. The positioning management device 230 determines a location and/or an attitude of the terminal device 210 based on received measurement information. Alternatively, the access network device 220 may determine a location and/or an attitude of the terminal device 210 based on information obtained through measurement. Alternatively, the access network device 220 may send information obtained through measurement to the terminal device 210, and the terminal device 210 may determine a location and/or an attitude of the terminal device 210 based on received measurement information.

In a possible implementation, the terminal device 210 has at least two antennas, and the access network device 220 has only one antenna. The terminal device 210 sends reference signals to the access network device 220 on the at least two antennas. The access network device 220 receives the reference signals on a same antenna and performs measurement on the reference signals. The access network device 220 may send information obtained through measurement to the positioning management device 230. The positioning management device 230 determines a location and/or an attitude of the terminal device 210 based on received measurement information. Alternatively, the access network device 220 may determine a location and/or an attitude of the terminal device 210 based on information obtained through measurement. Alternatively, the access network device 220 may send information obtained through measurement to the terminal device 210, and the terminal device 210 may determine a location and/or an attitude of the terminal device 210 based on received measurement information.

It should be understood that a plurality of antennas related to each device in FIG. 1 and FIG. 2 may be physical antennas at a plurality of different locations on the device, or may be virtual antennas formed by motion of an antenna on the device, or a combination of a physical antenna and a virtual antenna. This is not limited in this application. In addition, the application scenarios shown in FIG. 1 and FIG. 2 are merely examples for description, and shall not constitute any limitation on this application.

For ease of understanding the technical solutions of this application, some related technologies in the technical solutions of this application are described.

1. Guard period (Guard period, GP)

A GP symbol is an empty symbol or a guard symbol (guard symbol). Optionally, the GP symbol may be used for receive/transmit transition, beam sweeping, radio frequency or antenna switching, or the like. Optionally, the GP symbol may be located in the middle of a slot, or may be located in a last symbol of a slot. This is not limited in the present invention.

2. Time domain unit and frequency domain unit

Data or information may be carried in a time-frequency resource.

In time domain, the time-frequency resource may include one or more time domain units (which may also be referred to as time units). A time domain unit may be a symbol, a mini-slot (mini-slot), a slot (slot), a partial slot (partial slot), a subframe (subframe), a radio frame (frame), or the like.

In frequency domain, the time-frequency resource may include one or more frequency domain units. A frequency domain unit may be a resource element (resource element, RE), a resource block (resource block, RB), a subchannel (subchannel), a resource pool (resource pool), a bandwidth (bandwidth), a bandwidth part (bandwidth part, BWP), a carrier (carrier), a channel (channel), an interlaced (interlace) RB, or the like.

In embodiments of this application, the slot is a most basic time domain resource unit for one transmission. Optionally, the slot includes a complete slot, a mini-slot, a partial slot, or a subslot including one or more OFDM symbols. Optionally, the slot may alternatively be a set of one or more symbols. For example, one slot may alternatively include a set including one or more OFDM symbols. For example, a quantity of the one or more OFDM symbols is 1, 2, 3, 4, 6, 7, 12, or 14.

In addition, duration of the slot may be related to a subcarrier spacing. For example, when the subcarrier spacing is 15 kHz, duration of one slot is 1 millisecond (ms); when the subcarrier spacing is 30 kHz, duration of one slot is 0.5 ms; or when the subcarrier spacing is 60 kHz, duration of one slot is 0.25 ms. Similarly, it can be learned through deduction that, when the subcarrier spacing is $15\times2^{\mu}$, duration of one slot is $2^{-\mu}$ ms, where $\mu$=0, 1, 2, ....

For ease of description, the slot in embodiments of this application may include any one of a slot, a mini-slot, a partial slot, or a complete slot.

Optionally, for a slot, if there is one or more GP symbols in the middle of the slot or in a last symbol of the slot, the slot may or may not include the GP symbols. This is not limited in the present invention.

Optionally, in embodiments of this application, expressions are used for writing. In an expression, the slot may include a last empty symbol. Optionally, in another expression, the slot may not include a last empty symbol.

In embodiments of this application, a frequency domain resource may be an RB set (RB set), a subchannel, an interlace (interlace), a PRB, or an RE. The RB set may include a plurality of RBs or a plurality of subchannels (subchannel). An interlaced frequency domain resource block may also be referred to as an interlace. One interlace may include a plurality of discrete frequency domain resources (or discontinuous frequency domain resources), and frequency domain spacings between adjacent discrete frequency domain resources are equal. Optionally, the subchannel is a unit, including a plurality of continuous RBs, of a frequency domain resource. Optionally, a quantity of continuous RBs included in the subchannel may be configured by using signaling or predefined. For example, a quantity of RBs included in the subchannel is an integer such as 10, 12, 15, 20, or 25. Optionally, one interlace includes a plurality of RBs, and several RBs that are not used for transmission appear between RBs at equal spacings. For example, one interlace occupies 10 RBs, and among every 10 RBs, only one RB is used for transmission, and the remaining RBs are not used for transmission for a first device. For example, it is assumed that an RB set or a resource pool includes 50 RBs, one interlace may occupy a total of five RBs numbered 0, 10, 20, 30, and 40, and the remaining RBs are not used for transmission.

3. Automatic gain control (automatic gain control, AGC)

Optionally, in embodiments of this application, an AGC symbol is used for a receiver (for example, a second device) to perform an automatic gain control function. From the perspective of a transmitter (for example, a first device), this may be implemented by copying a next symbol adjacent to the AGC symbol in time domain. For example, AGC is performed on a symbol i, and the first device copies a signal generated on an $(i+1)^{th}$ symbol, and uses the signal as a signal on the symbol i. Optionally, the symbol i generated in this manner may be used by the second device to perform AGC on a receiver when the second device receives data, control information, a reference signal, or the like sent by the first device, to achieve optimal reception and demodulation performance of the second device.

4. Identifier of a terminal apparatus

An identifier of a terminal apparatus is an identifier that indicates, identifies, or corresponds to a corresponding terminal device. For example, the identifier of the terminal apparatus may be an index or a number that uniquely identifies the terminal device. The identifier may be configured by using signaling, preconfigured, or predefined. In an example, the identifier of the terminal apparatus is any one of the following: a media access control (media access control, MAC) address, a subscriber identity module (subscriber identity module, SIM) card number, an international mobile equipment identity (international mobile equipment identity, IMEI), or the like of a terminal.

Optionally, the identifier of the terminal apparatus may alternatively be an identifier that indicates, identifies, or corresponds to a corresponding terminal device during transmission. The identifier may be configured by using signaling, preconfigured, or predefined. For example, the identifier is an IP address, a network temporary identifier (radio network temporary identifier, RNTI), a source identifier of a sending device, or a destination identifier of a receiving device. Optionally, the source identifier of the sending device may be an identifier associated with a specific to-be-sent service or message. Optionally, the destination identifier of the receiving device may be an identifier associated with a specific to-be-received service or message.

5. A physical sidelink feedback channel (physical sidelink feedback channel, PSFCH) is a channel in which a terminal device transmits sidelink feedback control information (sidelink feedback control information, SFCI) in sidelink (sidelink) in a scenario in which feedback needs to be performed.

6. Sequence

In the present invention, a sequence may be a random sequence or a sequence with a low peak-to-average ratio. Optionally, the random sequence may be an m sequence, a Gold sequence, or the like. This is not limited in the present invention. The sequence with a low peak-to-average ratio may be a binomial sequence, a quadrature phase sequence, or a ZC sequence. These sequences have advantages of a low peak-to-average ratio and good correlation performance. Optionally, the ZC sequence is a Zadoff-Chu sequence or a zero correlation (Zero-Correlation) sequence.

**EP 4 561 204 A1**

In the present invention, an example of a 31-bit Gold sequence is as follows:
For example, for a shift register with a length of 31 bits, a length of an output random sequence is $M_{PN}$, where n=0, 1, ..., $M_{PN}$-1. A random sequence c(n) may be generated in the following manner:

$$c(n) = \left(x_1\left(n + N_C\right) + x_2\left(n + N_c\right)\right) \bmod 2 ;$$

$$x_1(n + 31) = \left(x_1\left(n + 3\right) + x_1\left(n\right)\right) \bmod 2 ;$$

and

$$x_2(n + 31) = \left(x_2\left(n + 3\right) + x_2\left(n + 2\right) + x_2\left(n + 1\right) + x_2\left(n\right)\right) \bmod 2 ,$$

where
$N_C$=1600, and an initial value of an m sequence $x_1(n)$ may be as follows: $x_1(0)$=1, and $x_1(n)$=0, n=1, 2, ..., 30.

An initial value of a 2nd m sequence $x_2(n)$ is as follows:

$$c_{init} = \sum_{i=0}^{30} x_2(i) \cdot 2^i ,$$

where
mod indicates a modulo operation, mod2 indicates a modulo operation on a number divided by 2, and a first sequence c(n) may be determined based on the determined initial value $c_{init}$ of the first sequence c(n).

The ZC sequence, also referred to as a Zadoff-Chu or Frank-Zadoff-Chu (FZC) sequence or a Chu sequence, is one of perfect sequences. This sequence has an ideal periodic autocorrelation characteristic. A main parameter for generating the ZC sequence is one or more of a root sequence number, a cyclic shift value, or an orthogonal cover code of the sequence. A sequence used in the present invention may be a pseudo-random sequence, a ZC sequence, or another sequence with a low peak ratio (for example, a sequence that is defined in an LTE or NR Rel-15 protocol and whose length is a positive integer not less than 6).

Optionally, the ZC sequence may be defined by using the following formula:

$$r_{u,v}^{(\alpha,\delta)}(n) = e^{j\alpha n}\overline{r}_{u,v}(n), \quad 0 \le n < M_{ZC} ,$$

where
$r_{u,v}^{(\alpha,\delta)}(n)$ is a reference signal sequence, $\alpha$ is a cyclic shift value of the sequence, $u$ and $v$ are parameters for generating a base sequence, and a base sequence $\overline{r}_{u,v}(0),...,\overline{r}_{u,v}(M_{ZC} - 1)$ may be generated in the following manner:

$$\overline{r}_{u,v}(n) = x_q\left(n \bmod N_{ZC}\right),$$

where

$$x_q\left(m\right) = e^{-j\frac{\pi q m(m+1)}{N_{ZC}}}$$

$$q = \lfloor \overline{q} + 1/2 \rfloor + v \cdot (-1)^{\lfloor 2\overline{q} \rfloor}, \text{ and } \overline{q} = N_{ZC} \cdot (u+1)/31 .$$

7. A reference signal is a physical signal that carries a sequence and that is sent for implementing a specific function.

In the present invention, a reference signal (reference signal, RS), for example, a sidelink positioning reference signal (sidelink positioning reference signal, SL-PRS), is used. The RS is a physical signal generated by mapping a specific sequence to a corresponding time-frequency resource in a preset resource mapping mode.

There are different types of reference signals based on different functions. When the reference signal is used to send feedback information, the reference signal may be a demodulation reference signal used to carry the feedback information, or may be a sequence directly used to carry the feedback information. The reference signal is mainly a reference signal for transmitting feedback information for data. A device that sends the reference signal may be a first device that sends the feedback information, may be a second device that sends first data, or may be a device that performs measurement or provides a synchronization source. The reference signal is used for the following purposes: data demodulation, information carrying, channel state information (channel state information, CSI), radio resource management (radio resource management, RRM), or radio link monitoring (radio link monitoring, RLM) measurement, synchronization, phase noise tracking, and the like. When the reference signal carries feedback information, the feedback information may be carried in a sequence, or may be carried in a coded bit of control information in a feedback channel. Specifically, the reference signal may be a demodulation reference signal (demodulation reference signal, DMRS) used for a physical sidelink shared channel (physical sidelink shared channel, PSSCH), or may be a physical sidelink control channel (physical sidelink control channel, PSCCH). When the reference channel is used for CSI, RRM, or RLM measurement, the reference signal may be an RS, a channel sounding reference signal (sounding reference signal, SRS), a CSI-RS, or the like. When the reference signal is used for synchronization, the reference signal may be a reference signal used for a physical sidelink broadcast channel (physical sidelink broadcast channel, PSBCH), or the like.

8. A code resource, also referred to as a sequence parameter, corresponds to a sequence generated based on a sequence parameter.

For a random sequence, a parameter of the sequence includes a start location of the sequence, a length of the sequence, and an initial value of the sequence. For a sequence with a low peak-to-average ratio (for example, a ZC (Zadoff-Chu) sequence), a parameter of the sequence includes a root sequence, a cyclic shift (Cyclic shift, CS), an orthogonal cover code (Orthogonal Cover Code, OCC), or the like.

For the random sequence (for example, a Gold sequence or an m sequence), the initial value of the sequence is an initial value of a shift register for generating the sequence.

9. Orthogonal sequence index

In the present invention, an orthogonal sequence may be an orthogonal cover code (Orthogonal Cover Code, OCC). An index of the orthogonal sequence is an index of the OCC. The OCC is usually used for sequence transmission or data transmission. A plurality of reference signals or a plurality of pieces of data can be transmitted on one time-frequency resource by using different OCCs.

10. Comb (comb)

When a signal is mapped to a corresponding symbol, in a corresponding frequency domain resource, one reference signal is mapped to every N resources, and no reference signal is mapped to the other N-1 resources. This mapping mode for a frequency domain resource is referred to as a comb. A value of N in the comb is referred to as a comb size. In this embodiment, the comb size may also be denoted as Comb-N.

Optionally, in a frequency domain bandwidth with a specific size, the comb may be further described as follows: A resource in each symbol is Y resource elements (resource element, RE) among $Y \times N$ REs, there is one reference signal in every N REs, Y is a number greater than 0, and N is a positive integer. In this way, the N REs can be separately used by different communication devices.

Optionally, assuming that the frequency domain bandwidth includes K PRBs, a value of Y is $Nre\_rb \times K/N$, where $Nre\_rb$ indicates a quantity of REs in one PRB, for example, $Nre\_rb=12$. Optionally, a value of K is determined based on a bandwidth of a frequency domain resource on which the reference signal is located, for example, a bandwidth of a resource pool, a bandwidth of a carrier, or a bandwidth of a BWP.

Optionally, for a reference signal in a comb state, a total of N orthogonal frequency domain resources in frequency domain are used for the reference signal.

Optionally, when a reference signal is mapped to one of N REs, there may be N different mapping locations in a frequency domain resource of the reference signal.

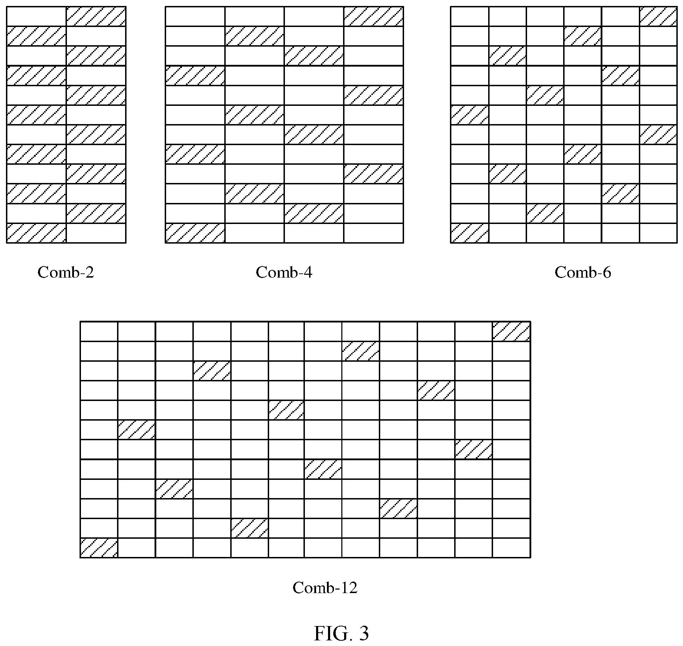

For example, Comb-2 in FIG. 3 indicates that N=2, and one positioning reference signal is mapped to every two REs. For example, Comb-4 in FIG. 3 indicates that N=4, and one positioning reference signal is mapped to every four REs. Optionally, when the frequency domain bandwidth includes 106 PRBs, for Comb-2, $Y=6 \times 106$; and for Comb-3, $Y=3 \times 106$.

FIG. 3 is a diagram of a resource occupied by a downlink positioning reference signal. A time-frequency resource occupied by the downlink positioning reference signal shown in FIG. 3 is mapped in a comb (comb) shape.

FIG. 3 shows time-frequency mapping patterns for the downlink positioning reference signal when a comb size (comb size) is 2, 4, 6, and 12 respectively.

As shown in FIG. 3, when the comb size is 2, in each symbol, a communication device may map the downlink positioning reference signal to one of every two REs. In other words, when the comb size is 2, a mapping spacing of the downlink positioning reference signal in frequency domain is 2.

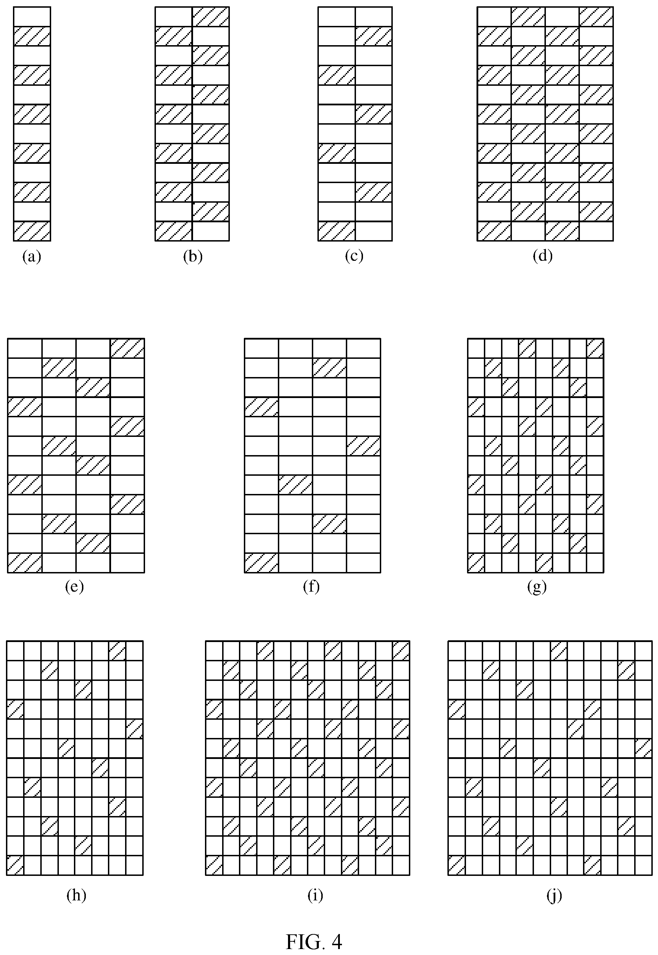

FIG. 4 is a diagram of a resource occupied by an uplink positioning reference signal.

(a) in FIG. 4 shows a time-frequency mapping pattern for the uplink positioning reference signal in a case in which a comb size is 2 and one symbol is occupied.

(b) in FIG. 4 shows a time-frequency mapping pattern for the uplink positioning reference signal in a case in which a comb size is 2 and two symbols are occupied.

(c) in FIG. 4 shows a time-frequency mapping pattern for the uplink positioning reference signal in a case in which a comb size is 4 and two symbols are occupied.

(d) in FIG. 4 shows a time-frequency mapping pattern for the uplink positioning reference signal in a case in which a comb size is 2 and four symbols are occupied.

(e) in FIG. 4 shows a time-frequency mapping pattern for the uplink positioning reference signal in a case in which a comb size is 4 and four symbols are occupied.

(f) in FIG. 4 shows a time-frequency mapping pattern for the uplink positioning reference signal in a case in which a comb size is 8 and one symbol is occupied.

(g) in FIG. 4 shows a time-frequency mapping pattern for the uplink positioning reference signal in a case in which a comb size is 4 and eight symbols are occupied.

(h) in FIG. 4 shows a time-frequency mapping pattern for the uplink positioning reference signal in a case in which a comb size is 8 and eight symbols are occupied.

(i) in FIG. 4 shows a time-frequency mapping pattern for the uplink positioning reference signal in a case in which a comb size is 4 and 12 symbols are occupied.

(j) in FIG. 4 shows a time-frequency mapping pattern for the uplink positioning reference signal in a case in which a comb size is 8 and 12 symbols are occupied.

A communication device (for example, a first communication device and a second communication device) in embodiments of this application may be a terminal device, a network device (for example, an access network device), a positioning management device, or the like. Alternatively, the communication device may be a component (for example, a chip, a chip system, and/or a circuit) in the foregoing device.

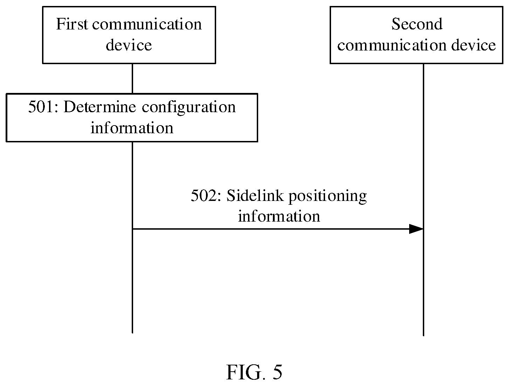

FIG. 5 is a schematic flowchart of a method for transmitting sidelink positioning information according to an embodiment of this application.

501: A first communication device determines configuration information.

Optionally, in some embodiments, the configuration information indicates at least one of the following information: a quantity of symbols occupied by sidelink control information, frequency domain bandwidth occupied by the sidelink control information, a quantity of symbols occupied by a sidelink positioning reference signal, and a mapping spacing of the sidelink positioning reference signal in frequency domain.

502: The first device sends sidelink positioning information in a slot, where the sidelink positioning information is generated based on the configuration information, and the sidelink positioning information includes the sidelink control information and the sidelink positioning reference signal.

Correspondingly, a second communication device receives a sidelink control channel in a slot; determines at least one of the following information: a frequency domain resource of the sidelink positioning reference signal and a sequence parameter of the sidelink positioning reference signal; and receives the sidelink positioning reference signal in the slot based on the information.

Optionally, in some embodiments, the sidelink control information is located before the sidelink positioning reference signal in the slot.

Optionally, in some other embodiments, in the slot, the sidelink control information is located after the sidelink positioning reference signal, or is located on two sides of the sidelink positioning reference signal.

Optionally, in some embodiments, the sidelink control information and the sidelink positioning reference signal are sent in a same slot. Correspondingly, the second communication device may receive the sidelink control information and the sidelink positioning reference signal in a same slot.

For example, when a non-extended cyclic prefix (cyclic prefix, CP) is used, the sidelink control information and the sidelink positioning reference signal are sent in 14 symbols included in a same slot. When an extended CP is used, the sidelink control information and the sidelink positioning reference signal are sent in 12 symbols of a same slot.

For another example, the sidelink control information and the sidelink positioning reference signal may be sent in half of a slot. In other words, the sidelink control information and the sidelink positioning reference signal are sent in a first half or a last half of a same slot.

For another example, the sidelink control information and the sidelink positioning reference signal are sent in a mini-slot, and a size of the mini-slot may be two symbols, four symbols, or the like.

In some embodiments, the quantity of symbols occupied by the sidelink control information is less than the quantity of symbols occupied by the sidelink positioning reference signal. In some other embodiments, the quantity of symbols occupied by the sidelink control information is greater than the quantity of symbols occupied by the sidelink positioning reference signal.

Optionally, in some embodiments, the first communication device may transmit the positioning information in 14 symbols included in the slot.

For example, in some embodiments, two of the 14 symbols may be used to transmit the sidelink control information, and 10 of the 14 symbols are used to transmit the sidelink positioning reference signal.

For another example, in some embodiments, one of the 14 symbols may be used to transmit the sidelink control information, and 11 of the 14 symbols may be used to transmit the sidelink positioning reference signal.

For another example, in some embodiments, four of the 14 symbols may be used to transmit the sidelink control information, and eight of the 14 symbols may be used to transmit the sidelink positioning reference signal.

For another example, in some embodiments, six of the 14 symbols may be used to transmit the sidelink control information, and other six of the 14 symbols may be used to transmit the sidelink positioning reference signal.

For another example, in some embodiments, eight of the 14 symbols may be used to transmit the sidelink control information, and four of the 14 symbols may be used to transmit the sidelink positioning reference signal.

For another example, in some embodiments, 10 of the 14 symbols may be used to transmit the sidelink control information, and two of the 14 symbols may be used to transmit the sidelink positioning reference signal.

Optionally, in some other embodiments, the first communication device may transmit the positioning information in seven symbols included in the slot. In other words, in this case, one piece of positioning information may occupy only half of a slot.

For example, in some embodiments, two of the seven symbols may be used to transmit the sidelink control information, and three of the seven symbols may be used to transmit the sidelink positioning reference signal.

For another example, in some embodiments, one of the seven symbols may be used to transmit the sidelink control information, and four symbols may be used to transmit the sidelink positioning reference signal.

For another example, in some embodiments, four of the seven symbols may be used to transmit the sidelink control information, and three of the seven symbols may be used to transmit the sidelink positioning reference signal.

For another example, in some embodiments, four of the seven symbols may be used to transmit the sidelink control information, and one symbol may be used to transmit the sidelink positioning reference signal.

In some embodiments, the sidelink control information may be carried in a sidelink control channel. For example, in some embodiments, the sidelink control channel may be a physical sidelink control channel (physical sidelink control channel, PSCCH).

In some embodiments, when 12 of the 14 symbols in the slot are used to transmit the positioning information, the remaining two symbols may be respectively located at two ends of the 14 symbols. Information carried in a $1^{st}$ symbol among the 14 symbols is the same as information carried in a $2^{nd}$ symbol among the 14 symbols. In this way, a receive end can perform automatic gain control (automatic gain control, AGC) by using the $1^{st}$ symbol. A last symbol among the 14 symbols may be an empty symbol, and the empty symbol may serve as a guard period (guard period, GP).

In some embodiments, a resource of the sidelink positioning reference signal in each symbol is Y REs among Y×N REs, one of every N REs is occupied by the sidelink positioning reference signal, Y is a number greater than 0, and N is a positive integer. In other words, the mapping spacing of the sidelink positioning reference signal in frequency domain is N. Alternatively, this may be referred to as that the sidelink positioning reference signal is mapped in frequency domain with a comb size of N. Optionally, N=1 indicates that there is a sidelink positioning reference signal in each RE. Optionally, N>1 indicates that there is one sidelink positioning reference signal in every N REs.

For a time-frequency mapping pattern for the sidelink positioning reference signal, refer to the time-frequency mapping patterns for the downlink positioning reference signal shown in FIG. 3 or the time-frequency mapping patterns for the uplink positioning reference signal shown in FIG. 4.

In some embodiments, a value of N is less than or equal to the quantity of symbols occupied by the sidelink positioning reference signal.

In some other embodiments, a value of N is greater than the quantity of symbols occupied by the sidelink positioning reference signal.

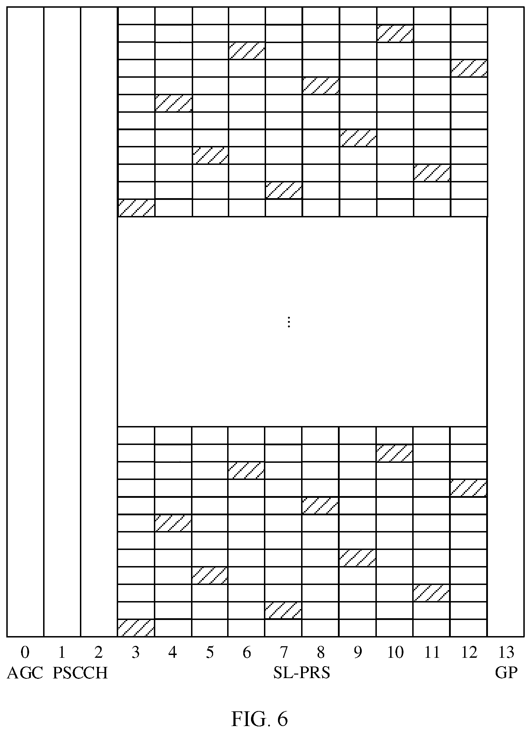

FIG. 6 is a diagram of a slot for transmitting positioning information. The slot shown in FIG. 6 includes 14 symbols. Information included in a symbol 0 is the same as information included in a symbol 1. The symbol 0 may be used for AGC. Therefore, the symbol 0 is marked as AGC in FIG. 6. The symbol 1 and a symbol 2 are used to transmit a PSCCH. The PSCCH carries sidelink control information in the positioning information. A symbol 3 to a symbol 12 are used to transmit a sidelink positioning reference signal. A symbol 13 is an empty symbol that serves as a guard period.

As shown in FIG. 6, mapping to the 10 symbols used to transmit the sidelink positioning reference signal is performed with a comb size of 12. To be specific, a mapping spacing of the sidelink positioning reference signal in frequency domain is 12. In other words, the sidelink positioning reference signal is mapped to one of every 12 REs. REs, in two adjacent symbols, to which the sidelink positioning reference signal is mapped are different.

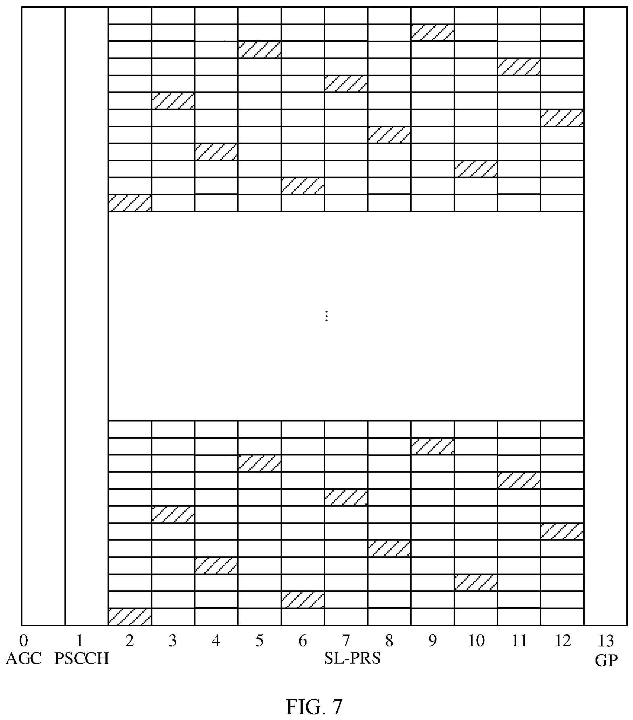

FIG. 7 is a diagram of another slot for transmitting positioning information. The slot shown in FIG. 7 includes 14 symbols. Information included in a symbol 0 is the same as information included in a symbol 1. The symbol 0 may be used for AGC. Therefore, the symbol 0 is marked as AGC in FIG. 7. The symbol 1 is used to transmit a PSCCH. The PSCCH carries sidelink control information in the positioning information. A symbol 2 to a symbol 12 are used to transmit a sidelink positioning reference signal. A symbol 13 is an empty symbol that serves as a guard period.

As shown in FIG. 7, mapping to the 11 symbols used to transmit the sidelink positioning reference signal is performed with a comb size of 12. To be specific, a mapping spacing of the sidelink positioning reference signal in frequency domain is 12. In other words, the sidelink positioning reference signal is mapped to one of every 12 REs. REs, in two adjacent symbols, to which the sidelink positioning reference signal is mapped are different.

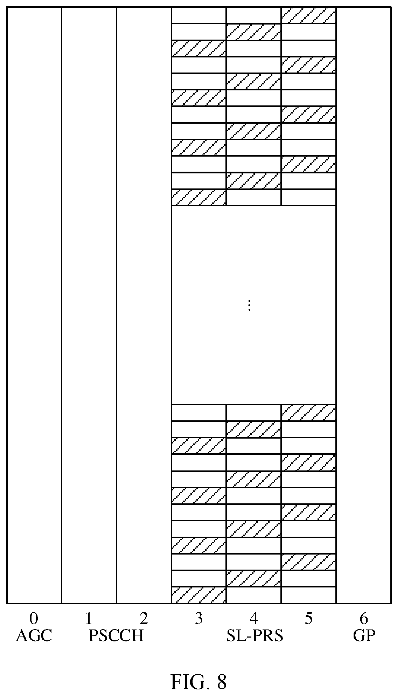

FIG. 8 is a diagram of a slot for transmitting positioning information. The slot shown in FIG. 8 includes seven symbols. Information included in a symbol 0 is the same as information included in a symbol 1. The symbol 0 may be used for AGC. Therefore, the symbol 0 is marked as AGC in FIG. 8. The symbol 1 and a symbol 2 are used to transmit a PSCCH. The PSCCH carries sidelink control information in the positioning information. A symbol 3 to a symbol 5 are used to transmit a sidelink positioning reference signal. A symbol 6 is an empty symbol that serves as a guard period.

As shown in FIG. 8, mapping to the three symbols used to transmit the sidelink positioning reference signal is performed with a comb size of 3. To be specific, a mapping spacing of the sidelink positioning reference signal in frequency domain is 3. In other words, the sidelink positioning reference signal is mapped to one of every three REs. REs, in two adjacent symbols, to which the sidelink positioning reference signal is mapped are different.

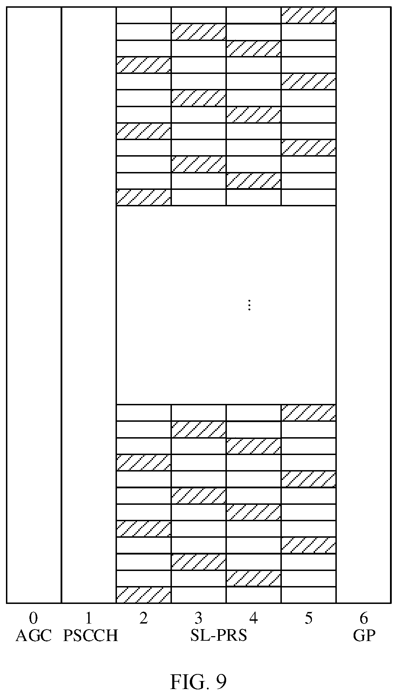

FIG. 9 is a diagram of a slot for transmitting positioning information. The slot shown in FIG. 9 includes seven symbols. Information included in a symbol 0 is the same as information included in a symbol 1. The symbol 0 may be used for AGC. Therefore, the symbol 0 is marked as AGC in FIG. 9. The symbol 1 is used to transmit a PSCCH. The PSCCH carries sidelink control information in the positioning information. A symbol 2 to a symbol 5 are used to transmit a sidelink positioning reference signal. A symbol 6 is an empty symbol that serves as a guard period.

As shown in FIG. 9, mapping to the four symbols used to transmit the sidelink positioning reference signal is performed with a comb size of 4. To be specific, a mapping spacing of the sidelink positioning reference signal in frequency domain is 4. In other words, the sidelink positioning reference signal is mapped to one of every four REs. REs, in two adjacent symbols, to which the sidelink positioning reference signal is mapped are different.

In some other embodiments, if N is less than the quantity of symbols occupied by the sidelink positioning reference signal, a mapping of the sidelink positioning reference signal in time domain may be repetitions of N symbols used to send the sidelink positioning reference signal.

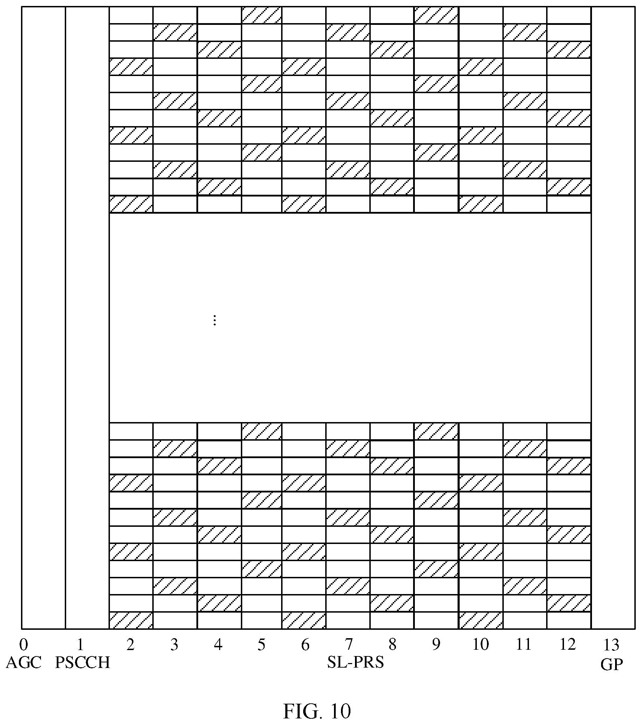

For example, FIG. 10 is a diagram of another slot for transmitting positioning information. The slot shown in FIG. 10 includes 14 symbols. Information included in a symbol 0 is the same as information included in a symbol 1. The symbol 0 may be used for AGC. Therefore, the symbol 0 is marked as AGC in FIG. 7. The symbol 1 is used to transmit a PSCCH. The PSCCH carries sidelink control information in the positioning information. A symbol 2 to a symbol 12 are used to transmit a sidelink positioning reference signal. A symbol 13 is an empty symbol that serves as a guard period.

As shown in FIG. 10, mapping to the 11 symbols used to transmit the sidelink positioning reference signal is performed with a comb size of 4. To be specific, a mapping spacing of the sidelink positioning reference signal in frequency domain is 4. In other words, the sidelink positioning reference signal is mapped to one of every four REs. REs, in two adjacent symbols, to which the sidelink positioning reference signal is mapped are different. It can be learned from FIG. 10 that the symbol 6 to the symbol 9 are repetitions of the symbol 2 to the symbol 5, and the symbol 10 to the symbol 12 are repetitions of the symbol 2 to the symbol 4.

Optionally, in some other embodiments, all 14 symbols in a slot may be used to send the positioning information. For example, the first two symbols among the 14 symbols may be used to send the sidelink control information, and the last 12 symbols may be used to send the sidelink positioning reference signal. For another example, the first four symbols among the 14 symbols may be used to send the sidelink control information, and the last 10 symbols may be used to send the sidelink positioning reference signal. Similarly, all seven symbols in a slot may alternatively be used to send the positioning information. For example, the first two symbols among the seven symbols may be used to send the sidelink control information, and the last five symbols may be used to send the sidelink positioning reference signal. For another example, the first three symbols among the seven symbols may be used to send the sidelink control information, and the last four symbols may be used to send the sidelink positioning reference signal.

Optionally, in some other embodiments, a slot may include a symbol used to send the sidelink control information, a symbol used to send the sidelink positioning reference signal, and an empty symbol that serves as a guard period. For example, the first two symbols among the 14 symbols may be used to send the sidelink control information, a 3rd to a 13th symbols may be used to send the sidelink positioning reference signal, and a last symbol is an empty symbol that serves as a guard period. For another example, the first four symbols among the 14 symbols may be used to send the sidelink control information, a 4th to a 13th symbols may be used to send the sidelink positioning reference signal, and a last symbol is an empty symbol that serves as a guard period. For another example, the first two symbols among the seven symbols may be used to send the sidelink control information, a 3rd to a 6th symbols may be used to send the sidelink positioning reference signal, and a last symbol is an empty symbol that serves as a guard period. For another example, the first three symbols among the seven symbols may be used to send the sidelink control information, a 4th to a 6th symbols may be used to send the sidelink positioning reference signal, and a last symbol is an empty symbol that serves as a guard period.

Similarly, in some embodiments, a slot may include a symbol used to send the sidelink control information, a symbol used to send the sidelink positioning reference signal, and a symbol used for AGC. For example, a 1st symbol and a 2nd symbol among the 14 symbols carry same information, the 2nd symbol and a 3rd symbol may be used to send the sidelink control information, and a 4th to a 14th symbols may be used to send the sidelink positioning reference signal. For another example, a 1st symbol and a 2nd symbol among the 14 symbols carry same information, the 2nd symbol to a 5th symbol may be used to send the sidelink control information, and a 6th to a 14th symbols may be used to send the sidelink positioning reference signal. For another example, a 1st symbol and a 2nd symbol among the seven symbols carry same information, the 2nd symbol and a 3rd symbol may be used to send the sidelink control information, and a 4th to a 7th symbols may be used to send the sidelink positioning reference signal. For another example, a 1st symbol and a 2nd symbol among the seven symbols carry same information, the 2nd symbol to a 4th symbol may be used to send the sidelink control information, and a 5th to a 7th symbols may be used to send the sidelink positioning reference signal.

In the foregoing embodiments, the 14 symbols or the seven symbols include only one empty symbol. In some other embodiments, a quantity of empty symbols may alternatively be a positive integer greater than 1.

In the foregoing embodiments, only one symbol is used for AGC. In some other embodiments, a quantity of symbols used for AGC may alternatively be a positive integer greater than 1.

Optionally, in some embodiments, a frequency domain unit used to send the sidelink control information is obtained through subchannel-based continuous mapping or interlace-based discrete mapping.

Optionally, in some embodiments, a frequency domain resource bandwidth occupied by the sidelink control information is $K \times \varphi$ frequency domain resources, K is a number greater than 0, and $\varphi$ is a positive integer greater than or equal to 1. A granularity of the frequency domain resource may be a physical resource block, a subchannel, or an interlace.

For example, the quantity of symbols occupied by the sidelink control information is 1, and K is equal to 2. For another example, the quantity of symbols occupied by the sidelink control information is 2, and K is equal to 1. For another example, the quantity of symbols occupied by the sidelink control information is 4, and K is equal to 1/2.

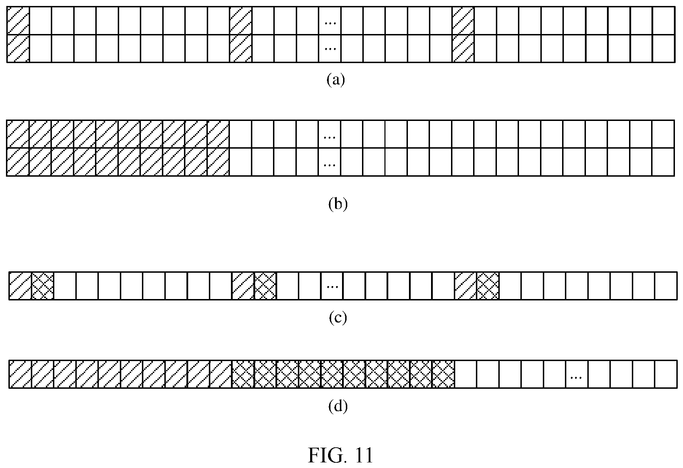

FIG. 11 is a diagram of a frequency domain resource occupied by sidelink control information. As described above, the sidelink control information may be carried in a sidelink control channel. Therefore, the frequency domain resource occupied by the sidelink control information may also be considered as a frequency domain resource occupied by the sidelink control channel.

(a) in FIG. 11 shows a structure of a frequency domain interlace for a two-symbol PSCCH.
(b) in FIG. 11 shows a structure of a continuous frequency domain mapping for a two-symbol PSCCH.
(c) in FIG. 11 shows a structure of a frequency domain interlace for a one-symbol PSCCH.
(d) in FIG. 11 shows a structure of a continuous frequency domain mapping for a one-symbol PSCCH.

As described above, if the quantity of symbols occupied by the sidelink control information is 1, K is equal to 2. Therefore, it can be learned that, when $\varphi$ is equal to 1, if a frequency domain interlace is used for the PSCCH, a structure of the PSCCH is shown in (c) in FIG. 11; or if a continuous frequency domain mapping is used for the PSCCH, a structure of the PSCCH is shown in (d) in FIG. 11.

Similarly, if the quantity of symbols occupied by the sidelink control information is 2, K is equal to 1. Therefore, it can be learned that, when $\varphi$ is equal to 1, if a frequency domain interlace is used for the PSCCH, a structure of the PSCCH is shown in (a) in FIG. 11; or if a continuous frequency domain mapping is used for the PSCCH, a structure of the PSCCH is shown in (b) in FIG. 11.

Optionally, in some embodiments, the slot used to send the positioning information may be further used to send data. The data may be carried in a physical sidelink shared channel (physical sidelink shared channel, PSSCH). For ease of description, a time domain resource used to transmit the data may be referred to as a first time domain resource, and a time domain resource used to transmit the sidelink positioning reference signal may be referred to as a second time domain resource. The first time domain resource and the second time domain resource are spaced apart by at least one empty symbol.

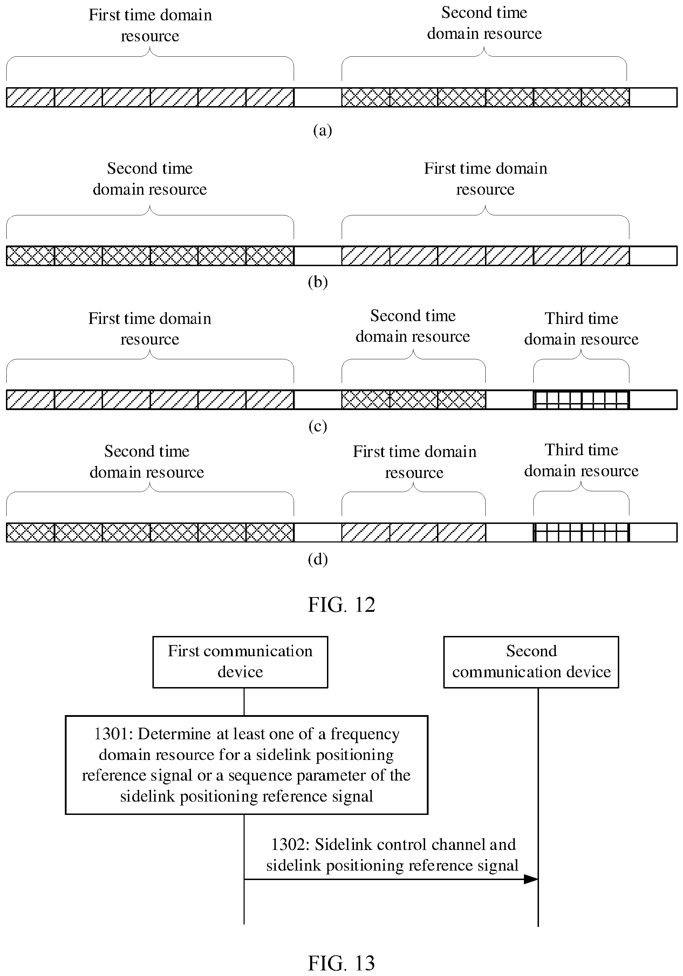

FIG. 12 shows a relationship between a first time domain resource and a second time domain resource.

As shown in (a) in FIG. 12, the first time domain resource is located before the second time domain resource, and the first time domain resource and the second time domain resource are spaced apart by one empty symbol. There is also an empty symbol after the second time domain resource.

As shown in (b) in FIG. 12, the first time domain resource is located after the second time domain resource, and the first time domain resource and the second time domain resource are spaced apart by one empty symbol. There is also an empty symbol after the first time domain resource.

In some embodiments, the empty symbol after the second time domain resource may also be considered as a last symbol of the second time domain resource.

Optionally, in some embodiments, the slot used to send the positioning information may be further used to send feedback information. A time domain resource used to transmit the feedback information may be referred to as a third time domain resource. The third time domain resource may be located after the first time domain resource. The third time domain resource and the first time domain resource are spaced apart by at least one empty symbol. The feedback information may be carried in a physical sidelink feedback channel (physical sidelink feedback channel, PSFCH).

As shown in (c) in FIG. 12, the first time domain resource is located before the second time domain resource, the third time domain resource is located after the second time domain resource, the first time domain resource and the second time domain resource are spaced apart by one empty symbol, and the third time domain resource and the second time domain resource are spaced apart by one empty symbol. There is also an empty symbol after the third time domain resource.

As shown in (d) in FIG. 12, the second time domain resource is located before the first time domain resource, the third time domain resource is located after the first time domain resource, the first time domain resource and the second time domain resource are spaced apart by one empty symbol, and the third time domain resource and the first time domain resource are spaced apart by one empty symbol. There is also an empty symbol after the third time domain resource.

Similarly, in the slot structure shown in FIG. 12, a $1^{st}$ symbol and a $2^{nd}$ symbol in the slot may carry same content. In other words, the $1^{st}$ symbol in the slot is also a symbol that can be used for AGC.

Optionally, in some embodiments, the second time domain resource may be further used to send the sidelink control information. In other words, the second time domain resource may be used to send the sidelink control information in the positioning information and the sidelink positioning reference signal in the positioning information.

Optionally, in some other embodiments, the first time domain resource may be further used to send the sidelink control information. In other words, the sidelink control information in the positioning information is sent by using the first time domain resource, and the sidelink positioning reference signal in the positioning information is sent by using the second time domain resource. In this case, the sidelink control information may also be carried in the PSSCH.

Optionally, in some embodiments, if the second time domain resource can be used to send the sidelink control information, a structure of the second time domain resource may be the same as the structure of the slot in which seven symbols are used to send the positioning information. To be specific, a $1^{st}$ symbol is a symbol used for AGC, a last symbol is an empty symbol that serves as a guard period, and five symbols in the middle are used to transmit the sidelink positioning information. In this case, it can be considered that the empty symbol in the second time domain resource and the first time domain resource is the last empty symbol that serves as a guard period among the seven symbols.

Optionally, in some other embodiments, if the second time domain resource can be used to send the sidelink control information, a structure of the second time domain resource may alternatively not be completely the same as the structure of the slot in which seven symbols are used to send the positioning information. For example, if the second time domain resource is located after the first time domain resource, a $1^{st}$ symbol among the seven symbols may not need to be used as a symbol for AGC, but is used to transmit the sidelink control information.

Optionally, in some embodiments, the first time domain resource is further used to send first sidelink control information, and the first sidelink control information indicates the quantity of symbols occupied by the sidelink control information and/or the frequency domain bandwidth occupied by the sidelink control information. In other words, the PSSCH may further carry sidelink control information that indicates the quantity of symbols occupied by the sidelink control information and/or the frequency domain bandwidth occupied by the sidelink control information.

Optionally, in some embodiments, the first time domain resource is further used to send second sidelink control information, and the second sidelink control information indicates the quantity of symbols occupied by the sidelink positioning reference signal and/or the mapping spacing of the sidelink positioning reference signal in frequency domain. In other words, the PSSCH may further carry sidelink control information that indicates the quantity of symbols occupied by the sidelink positioning reference signal and/or the mapping spacing of the sidelink positioning reference signal in frequency domain.

Optionally, in some embodiments, the sidelink positioning reference signal carries third sidelink control information, and the third sidelink control information indicates the quantity of symbols occupied by the sidelink positioning reference signal and/or the mapping spacing of the sidelink positioning reference signal in frequency domain.

Optionally, in some other embodiments, the sidelink control information is further used to carry fourth sidelink control information, and the fourth sidelink control information indicates whether the PSSCH carries the first sidelink control information and/or the second sidelink control information.

Optionally, in some other embodiments, the sidelink control information (namely, the first sidelink control information) that indicates the quantity of symbols occupied by the sidelink control information and/or the frequency domain bandwidth occupied by the sidelink control information, and the sidelink control information (namely, the second sidelink control information) that indicates the quantity of symbols occupied by the sidelink positioning reference signal and/or the mapping spacing of the sidelink positioning reference signal in frequency domain may be carried in a PSSCH and a PSCCH respectively. For example, in some embodiments, the PSCCH may carry the first sidelink control information, and the PSSCH may carry the second sidelink control information. For example, sidelink control information (sidelink control information, SCI) in the PSCCH may carry the first sidelink control information, and SCI carried in the PSSCH may carry the second sidelink control information. In other words, the first sidelink control information and the second sidelink control information may be indicated by two levels of SCI. The SCI in the PSCCH may be referred to as first-level SCI, and the SCI carried in the PSSCH may be referred to as second-level SCI. For another example, in some other embodiments, the PSCCH may carry the first sidelink control information and the fourth sidelink control information. Whether the PSSCH carries the second sidelink control information may be determined based on the fourth sidelink control information.

Optionally, in some embodiments, the configuration information is indicated in a resource pool. In this case, the first communication device may determine the configuration information from the resource pool.

Optionally, in some embodiments, a resource of the sidelink control information is related to a resource of the sidelink positioning reference signal. The resource of the sidelink control information may be a resource of a sidelink control channel (for example, a PSCCH).

Optionally, in some embodiments, that a resource of the sidelink control information is related to a resource of the sidelink positioning reference signal includes: The resource of the sidelink positioning reference signal is indicated by indication information, and the sidelink control information includes the indication information; or the resource of the sidelink positioning reference signal is determined based on a frequency domain resource and/or a code resource of the sidelink control information.

For a specific relationship between a resource used to send the sidelink control information and a resource used to send the sidelink positioning reference signal, refer to descriptions in the following embodiments.

FIG. 13 is a schematic flowchart of a method for transmitting a sidelink positioning reference signal according to an embodiment of this application.

1301: A first communication device determines at least one of the following information: a frequency domain resource of the sidelink positioning reference signal and a sequence parameter of the sidelink positioning reference signal, where the information is associated with a sidelink control channel.

1302: The first communication device sends the sidelink control channel and the sidelink positioning reference signal in a slot based on the information.

Correspondingly, a second communication device receives sidelink positioning information in a slot, where the sidelink positioning information is generated based on configuration information, the sidelink positioning information includes sidelink control information and the sidelink positioning reference signal, and the configuration information indicates at least one of the following information: a quantity of symbols occupied by the sidelink control information, a frequency domain bandwidth occupied by the sidelink control information, a quantity of symbols occupied by the sidelink positioning reference signal, and a mapping spacing of the sidelink positioning reference signal in frequency domain; and the second communication device performs measurement on the sidelink positioning reference signal to obtain a measurement result.

Time-frequency resources occupied by the sidelink control channel and the sidelink positioning reference signal in the slot are the same as those in the foregoing embodiments. For example, the sidelink control channel and the sidelink positioning reference signal are sent in a same slot. For another example, the sidelink control channel is located before the sidelink positioning reference signal. For another example, the sidelink control channel and the sidelink positioning reference signal are sent in a same slot. For another example, a resource of the sidelink positioning reference signal in each symbol is Y REs among Y×N REs, one of every N REs is occupied by the sidelink positioning reference signal, Y is a number greater than 0, and N is a positive integer. For a specific relationship between a time-frequency resource occupied by the sidelink control channel and a time-frequency resource occupied by the sidelink positioning reference signal, refer to the foregoing embodiments. For brevity, details are not described herein again.

Optionally, in some embodiments, that the information is associated with a sidelink control channel may include: The information is carried in the sidelink control channel; and/or the information is determined based on a frequency domain resource and/or a code resource of the sidelink control channel. To be specific, in some embodiments, the first communication device may directly send information that carries the frequency domain resource of the sidelink positioning reference signal and/or the sequence parameter of the sidelink positioning reference signal. A receive end (which may be referred to as a second communication device below) may determine the frequency domain resource of the sidelink positioning reference signal and/or the sequence parameter of the sidelink positioning reference signal based on received information. In some other embodiments, the second communication device may determine the information based on a resource of the sidelink control channel that is received.

Optionally, in some embodiments, the sidelink control channel may be a PSCCH. The information may be carried in SCI.

A quantity of candidate frequency domain resources of the sidelink positioning reference signal (which may also be referred to as frequency domain resources that can be used for the sidelink positioning reference signal) may be a quantity of RE offsets (offset). A quantity of candidate frequency domain resources of the sidelink control channel (which may also be referred to as frequency domain resources that can be used for the sidelink control channel) is a quantity of interlaces or a quantity of frequency domain subchannels.

For ease of description, the quantity of RE offsets (offset) may be denoted as N, and the quantity of interlaces or the quantity of frequency domain subchannels may be denoted as M. N may also be a comb size (comb size). M and N may be preconfigured, predefined, or configured by a network device.

N and M may be in the following relationship: N is greater than M, or N is less than M.

If N is greater than M, there may be two manners for the sidelink control channel: Manner 1: No code division is performed. Manner 2: Code division is performed.

In the manner 1, no code division is performed on a resource of the sidelink control channel. In this case, the second communication device needs to determine only the frequency domain resource of the sidelink control channel. The second communication device may determine the frequency domain resource of the sidelink control channel through blind detection. The sidelink control information may indicate only the frequency domain resource of the sidelink positioning reference signal. The frequency domain resource of the sidelink positioning reference signal may be an RE offset of the sidelink positioning reference signal.

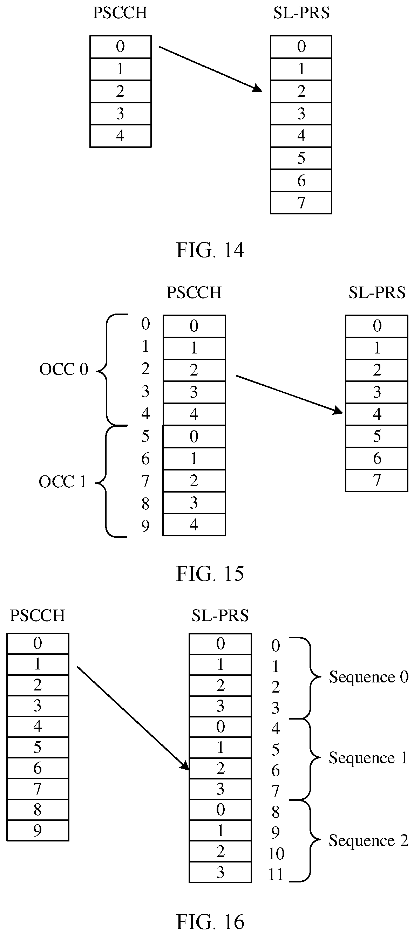

FIG. 14 is a diagram of a case in which N is greater than M and no code division is performed on the sidelink control channel. It is assumed that the sidelink control channel in FIG. 14 is a PSCCH, and candidate frequency domain resources of the PSCCH include a total of five subchannels: a subchannel 0 to a subchannel 4. Candidate frequency domain resources of the sidelink positioning reference signal include a total of eight RE offsets: an RE offset 0 to an RE offset 7.

As shown in FIG. 14, the subchannel 0 for the PSCCH corresponds to the RE offset 2 for the sidelink positioning reference signal. In this case, the sidelink control information may include the RE offset 2. In this way, the second communication device receives, through blind detection, the PSCCH sent through the subchannel 0, and then may determine, from the sidelink control information carried in the PSCCH, a location of the frequency domain resource of the sidelink positioning reference signal.

In the manner 2, if code division is performed on a resource of the sidelink control channel, the second communication device needs to learn of the frequency domain resource and a sequence parameter of the sidelink control channel. The second communication device may determine the frequency domain resource of the sidelink control channel through blind detection. The frequency domain resource of the sidelink positioning reference signal may be indicated by the information. The code resource of the sidelink control channel (namely, the sequence parameter of the sidelink control channel) may also be indicated by the information. In other words, the information may further include the sequence parameter of the sidelink control channel.

For example, in some embodiments, a plurality of cyclic shift (cyclic shift, CS) values are in a one-to-one correspondence with a plurality of orthogonal sequence indexes. In this case, the sequence parameter of the sidelink control channel may be a CS value of the sidelink control channel. For another example, a plurality of root sequence indexes are in a one-to-one correspondence with a plurality of orthogonal sequence indexes. In this case, the sequence parameter may be a root sequence index of the sidelink control channel. Certainly, the sequence parameter may alternatively be an orthogonal sequence index of the sidelink control channel.

FIG. 15 is a diagram of a case in which N is greater than M and code division is performed on the sidelink control channel. It is assumed that the sidelink control channel in FIG. 15 is a PSCCH, and candidate frequency domain resources of the PSCCH include a total of five frequency domain resources: a frequency domain resource 0 to a frequency domain resource 4. Optionally, code division is performed on the PSCCH by using an orthogonal cover code (orthogonal cover code, OCC). Optionally, in a code division mode, an OCC may be used for information and a demodulation reference signal that are carried in a to-be-sent PSCCH, or an OCC may be used only for a demodulation reference signal DM-RS (DeModulation Reference Signal) of a to-be-sent PSCCH. Optionally, there may be at least two OCCs. In the diagram shown in FIG. 15, there are a total of two OCC sequences: an OCC 0 and an OCC 1. In this case, candidate frequency domain resources of the PSCCH include a total of 10 candidate resources: a candidate resource 0 to a candidate resource 9. Candidate frequency domain resources of the sidelink positioning reference signal include a total of eight RE offsets: an RE offset 0 to an RE offset 7.

As shown in FIG. 15, a frequency domain resource with an index of 2 in the OCC 0 corresponds to an SL-PRS with an offset of 4. In this case, the sidelink control information may include the RE offset 2 and the OCC 0. In this way, the second communication device receives, through blind detection, the PSCCH sent by using the frequency domain resource with an index of 2, and then may determine, from the information carried in the PSCCH, a location of the frequency domain resource of the sidelink positioning reference signal and a sequence parameter that indicates the orthogonal sequence index of the sidelink control channel.

Optionally, in some embodiments, in the manner 1 and the manner 2, a length of the information does not exceed $\lceil \log_2 N \rceil$. For example, if N is equal to 4, the length of the information is two bits; if N is equal to 6 or 8, the length of the information is three bits; or if N is equal to 12, the length of the information is four bits.

If N is less than M, code division may be performed on the sidelink positioning reference signal. The information includes the frequency domain resource of the sidelink positioning reference signal and the sequence parameter of the sidelink positioning reference signal.

Optionally, the sequence parameter of the sidelink positioning reference signal may also include a CS value of the sidelink positioning reference signal, a root sequence index of the sidelink positioning reference signal, an orthogonal sequence index of the sidelink positioning reference signal, or an index of parameter for generating an initial value of a sequence of the sidelink positioning reference signal. Optionally, the parameter for generating the initial value of the sequence of the sidelink positioning reference signal may be indexes of a plurality of values. For example, a plurality of IDs are configured by using signaling, preconfigured, or indicated: $\{N_{ID-1}, N_{ID-2}, ..., N_{ID-M}\}$. Optionally, these IDs are used to generate an initial value of a random sequence. Optionally, the index of the parameter for the initial value may indicate a corresponding one of the M IDs herein.

For example, assuming that there are four sequences, CS values may be {0, 3, 6, 9} correspondingly. If there are a total of four orthogonal sequence indexes that can be used for the sidelink positioning reference signal, the four CS values may correspond to four indexes respectively. For example, the CS value 0 corresponds to an orthogonal sequence index 0, the CS value 3 corresponds to an orthogonal sequence index 1, the CS value 6 corresponds to an orthogonal sequence index 2, and the CS value 9 corresponds to an orthogonal sequence index 3. If the orthogonal sequence index of the sidelink positioning reference signal is 3, the information may indicate the orthogonal sequence index of the sidelink positioning reference signal by indicating the CS value 9. The second communication device determines that the information carries the CS value 9, and then determines, based on the correspondences between the CS values and the orthogonal sequence indexes, that the orthogonal sequence index of the sidelink positioning reference signal is 3.

FIG. 16 is a diagram of a case in which N is less than M and code division is performed on the sidelink positioning reference signal. It is assumed that the sidelink control channel in FIG. 16 is a PSCCH, and candidate frequency domain resources of the PSCCH include a total of 10 frequency domain resources: a frequency domain resource 0 to a frequency domain resource 9. Candidate frequency domain resources of the sidelink positioning reference signal include a total of four RE offsets: an RE offset 0 to an RE offset 3. A total of four sequences are obtained for the sidelink positioning reference signal through code division: a sequence 0 to a sequence 3. In this case, candidate resources of the sidelink positioning reference signal include a total of 12 candidate resources: a candidate resource 0 to a candidate resource 11.

As shown in FIG. 16, the frequency domain resource 1 corresponds to the RE offset 2 and the sequence 1 of the sidelink positioning reference signal. In this case, the sidelink control information may include the RE offset 2 and the sequence 1. In this way, the second communication device receives, through blind detection, the PSCCH sent by using the frequency domain resource 1, and then may determine, from information carried in the PSCCH, the frequency domain resource and the sequence parameter of the sidelink positioning reference signal.

Optionally, in some embodiments, the sidelink control information may indicate the frequency domain resource of the sidelink positioning reference signal and the sequence parameter of the sidelink positioning reference signal by using separate fields. In other words, the sidelink control information may include two fields, one of the two fields indicates the frequency domain resource of the sidelink positioning reference signal, and the other of the two fields indicates the sequence parameter of the sidelink positioning reference signal.

Optionally, in some other embodiments, the sidelink control information may indicate the frequency domain resource of the sidelink positioning reference signal and the sequence parameter of the sidelink positioning reference signal jointly by using one field.

In some embodiments, an index of a first frequency domain resource and/or a first sequence index are/is determined based on an index of the frequency domain resource of the sidelink control channel, the first frequency domain resource is a frequency domain resource of the sidelink positioning reference signal, and the first sequence index corresponds to a sequence parameter for determining the sidelink positioning reference signal.

The index of the frequency domain resource of the sidelink control channel may be an index of a lowest (or highest) PRB of an occupied resource, an index of a lowest (or highest) subchannel of a resource occupied by the PSCCH, or an index of a lowest (or highest) frequency domain interlace of a resource occupied by the PSCCH.

Optionally, in some embodiments, the index of the first frequency domain resource and the first sequence index are determined based on the index of the frequency domain resource of the sidelink control channel and N.

Optionally, in some embodiments, the index of the first frequency domain resource and the first sequence index may meet the following formulas:

$$i_{SL-PRS\_RE-offset} = (i_{PSCCH} + \Delta) \bmod N \qquad \text{(Formula 1-1)}$$

$$i_{SL-PRS\_seq-index} = \text{floor}(i_{PSCCH}/N) \qquad \text{(Formula 1-2)}$$

$I_{SL-PRS\_RE-offset}$ indicates the index of the first frequency domain resource, $i_{PSSCH}$ indicates the index of the frequency domain resource of the sidelink control channel, $i_{SL-PRS\_seq-index}$ indicates the first sequence index, and N is a quantity of RE offsets (to be specific, a quantity of frequency domain resources that can be used for the sidelink positioning reference signal). Δ is an offset, and Δ may be a positive integer greater than or equal to 0 and less than or equal to N-1. floor() indicates rounding down. Δ may be preconfigured, predefined, or configured by a network device.

In some embodiments, the offset Δ may not be used for determining the index of the first frequency domain resource or the first sequence index. In this case, the index of the first frequency domain resource and the first sequence index may meet the following formulas:

$$i_{SL-PRS\_RE-offset} = i_{PSCCH} \bmod N \qquad \text{(Formula 1-3)}$$

$$i_{SL-PRS\_seq-index} = floor(i_{PSCCH}/N) \qquad \text{(Formula 1-4)}$$

$i_{SL-PRS\_RE-offset}$ indicates the index of the first frequency domain resource, $i_{PSSCH}$ indicates the index of the frequency domain resource of the sidelink control channel, $i_{SL-PRS\_seq-index}$ indicates the first sequence index, and N is a quantity of RE offsets (to be specific, a quantity of frequency domain resources that can be used for the sidelink positioning reference signal). floor() indicates rounding down.

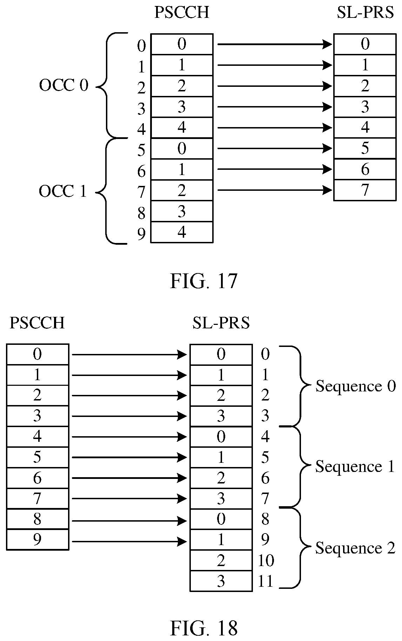

FIG. 18 is a diagram in which N is less than M and code division is performed on the sidelink positioning reference signal. As shown in FIG. 18, M is equal to 10, N is equal to 4, and a quantity of sequences of the sidelink positioning reference signal is 3. In this case, there are a total of 10 candidate control resources, there are a total of 12 candidate reference signal resources, and each candidate control resource corresponds to one candidate reference signal resource.

Optionally, in some embodiments, the index of the first frequency domain resource and/or the first sequence index are determined based on the index of the frequency domain resource of the sidelink control channel and the orthogonal sequence index of the sidelink control channel.

Optionally, in some embodiments, the index of the first frequency domain resource and the first sequence parameter are determined based on the index of the frequency domain resource of the sidelink control channel, the orthogonal sequence index of the sidelink control channel, a quantity M of orthogonal frequency domain resources of the sidelink control channel, and N.

If N is greater than M, K orthogonal sequences are obtained by performing code division on the sidelink control channel, and K×M is greater than or equal to N, each of the N candidate reference signal resources may correspond to one of K×M candidate control resources. In this case, the index of the first frequency domain resource may meet the following formulas:

$$i_{SL-PRS\_RE-offset} = (i_{PSCCH} + \Delta) \bmod N \qquad \text{(Formula 1-5)}$$

$$i_{PSCCH} = i_{OCC} * M + i_{interlace} \qquad \text{(Formula 1-6)}$$

$i_{SL-PRS\_RE-offset}$ indicates the index of the first frequency domain resource, $i_{OCC}$ indicates the orthogonal sequence index of the sidelink control channel, $i_{interlace}$ indicates the index of the frequency domain resource of the sidelink control channel, N is a quantity of RE offsets (namely, a quantity of frequency domain resources that can be used for the sidelink positioning reference signal), and M is a quantity of orthogonal frequency domain resources of the sidelink control channel. $i_{interlace}=0, 1, ..., M-1, i_{OCC}=0, 1, ..., K-1$, and K is a quantity of orthogonal sequences of the sidelink control channel. Δ is an offset, and Δ may be a positive integer greater than or equal to 0 and less than or equal to N-1.

In some embodiments, the offset Δ may alternatively not be used for determining the index of the first frequency domain resource. In this case, the index of the second frequency domain resource may meet the following formulas:

$$i_{SL-PRS\_RE-offset} = i_{PSCCH} \bmod N \qquad \text{(Formula 1-7)}$$

$$i_{PSCCH} = i_{OCC} * M + i_{interlace} \qquad \text{(Formula 1-8)}$$

$i_{SL-PRS\_RE-offset}$ indicates the index of the first frequency domain resource, $i_{OCC}$ indicates the orthogonal sequence index of the sidelink control channel, $i_{interlace}$ indicates the index of the frequency domain resource of the sidelink control channel, N is a quantity of RE offsets (offset), and M is a quantity of orthogonal frequency domain resources of the sidelink control channel. $i_{interlace}=0, 1, ..., M-1, i_{OCC}=0, 1, ..., K-1$, and K is a quantity of orthogonal sequences of the sidelink control channel.

FIG. 17 is a diagram in which N is greater than M and code division is performed on the sidelink control channel. As shown in FIG. 17, M is equal to 5, N is equal to 8, and K is equal to 2. In this case, there are a total of 10 candidate sidelink control channel resources, there are a total of eight candidate reference signal resources, and each candidate reference signal resource corresponds to one candidate control resource.

In some embodiments, a resource of the sidelink control channel and a resource of the sidelink positioning reference signal are determined based on a resource index.

The resource index indicates both the resource of the sidelink control channel and the resource of the sidelink positioning reference signal. A maximum value of the resource index is predefined, preconfigured, or configured by a network device. The resource index may be indicated by second indication information, and the second indication information is carried in the sidelink control channel.

Optionally, the resource of the sidelink control channel includes the frequency domain resource of the sidelink control channel and an orthogonal sequence of the sidelink control channel, and the resource of the sidelink positioning reference signal includes the frequency domain resource of the sidelink positioning reference signal and a code resource of the sidelink positioning reference signal.

It is assumed that a quantity of orthogonal frequency domain resources of the sidelink control channel is M, a quantity of sequences of the sidelink control channel is $K_O$, a quantity of orthogonal frequency domain resources of the sidelink positioning reference signal is N, a quantity of sequences of the sidelink positioning reference signal is $K_S$, and a maximum quantity of users supported in each slot is C. In this case, the following formulas are correspondingly obtained:

$$K_O = \left\lceil \frac{C}{M} \right\rceil \qquad \text{(Formula 1-9)}$$

$$K_S = \left\lceil \frac{C}{N} \right\rceil \qquad \text{(Formula 1-10)}$$

In some embodiments, $K_O$ is less than a maximum quantity of sequences that can be supported. For example, M=5, N=4, and C=10. In this case, $K_O$=3, and $K_S$=3. For another example, M=10, N=6, and C=20. In this case, $K_O$=2, and $K_S$=4.

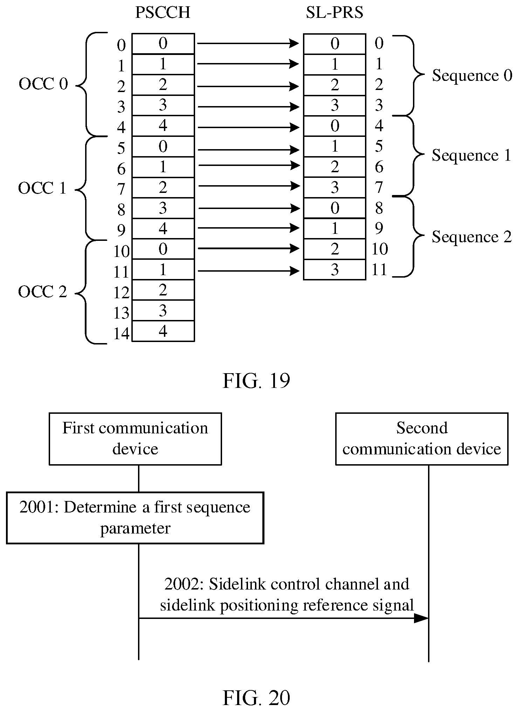

FIG. 19 is a diagram of resources occupied by the sidelink control channel and the sidelink positioning reference signal. As shown in FIG. 19, M is equal to 5, N is equal to 4, $K_O$ is equal to 3, and $K_S$ is equal to 3.

For example, in some embodiments, $K_S$, $K_O$, M, N, and C may be configured by a network device (for example, a base station). In this case, the network device may further configure CSs, root sequences, or random sequence values of $K_S$ sequences corresponding to M, N, and C.

For example, in some other embodiments, M, N, and C may be predefined or preconfigured. Similarly, CSs, root sequences, or random sequence values of $K_S$ sequences corresponding to M, N, and C may also be predefined or preconfigured.

Optionally, in some embodiments, when a resource used to send the sidelink control channel is determined based on the resource index, a frequency domain resource may be determined first, and then a code resource is determined.

For example, in some embodiments, the index of the frequency domain resource of the sidelink control channel and the orthogonal sequence index of the sidelink control channel are determined based on the resource index and the quantity M of orthogonal frequency domain resources of the sidelink control channel. For example, the index of the frequency domain resource of the sidelink control channel and the orthogonal sequence index of the sidelink control channel may meet the following formulas:

$$f_{PSCCH} = i_{index} \bmod M \qquad \text{(Formula 1-11)}$$

$$n_{OCC} = \text{floor}(i_{index}/M) \qquad \text{(Formula 1-12)}$$

$f_{PSCCH}$ is the index of the frequency domain resource of the sidelink control channel, $i_{index}$ is the resource index, $n_{OCC}$ is an orthogonal sequence index of the sidelink control channel, and floor() indicates rounding down.

For another example, in some other embodiments, the index of the frequency domain resource of the sidelink control channel may be determined based on the resource index, the quantity M of orthogonal frequency domain resources of the sidelink control channel, and one piece of reference information. The reference information may be one or more of an identifier of the first communication device, an identifier of the second communication device, and an offset. In other words, the index of the frequency domain resource of the sidelink control channel may meet any one of the following formulas:

$$f_{PSCCH} = (i_{index} + \Delta) \bmod M \qquad \text{(Formula 1-13)}$$

$$f_{PSCCH} = (i_{index} + ID_S) \bmod M \qquad \text{(Formula 1-14)}$$

$$f_{PSCCH} = (i_{index} + \Delta + ID_S) \bmod M \qquad \text{(Formula 1-15)}$$

$$f_{PSCCH} = (i_{index} + ID_D) \bmod M \qquad \text{(Formula 1-16)}$$

$$f_{PSCCH} = (i_{index} + \Delta + ID_D) \bmod M \qquad \text{(Formula 1-17)}$$

$$f_{PSCCH} = (i_{index} + ID_S + ID_D) \bmod M \qquad \text{(Formula 1-18)}$$

$$f_{PSCCH} = (i_{index} + \Delta + ID_S + ID_D) \bmod M \qquad \text{(Formula 1-19)}$$

$f_{PSCCH}$ is the index of the frequency domain resource used to send the sidelink control channel, $i_{index}$ is the resource index, $ID_S$ is all or some bits of the identifier of the first communication device, $ID_D$ is all or some bits of the identifier of the second communication device, $\Delta$ is an offset, and $\Delta$ may be a positive integer greater than or equal to 0 and less than or equal to M-1. $\Delta$ may be predefined, preconfigured, or configured by a network device.

Optionally, in some embodiments, an identifier of a communication device may be an international mobile subscriber identity (international mobile subscriber identification number, IMSI), an international mobile equipment identity (international mobile equipment identity), or the like.

For example, in some embodiments, an index of a second frequency domain resource and a second sequence index are determined based on the resource index and N. The second frequency domain resource is a frequency domain resource of the sidelink positioning reference signal. The second sequence index is used to determine the sidelink positioning reference signal. For example, the index of the second frequency domain resource and the second sequence index may meet the following formulas:

$$f_{RE} = i_{index} \bmod N \qquad \text{(Formula 1-20)}$$

$$n_{seq} = \text{floor}(i_{index} / N) \qquad \text{(Formula 1-21)}$$

$f_{RE}$ is the index of the second frequency domain resource, $i_{index}$ is the resource index, $n_{seq}$ is the second sequence index, and floor() indicates rounding down.

For another example, in some other embodiments, the index of the second frequency domain resource may be determined based on the resource index, a quantity N of orthogonal frequency domain resources of the sidelink positioning reference signal, and one piece of reference information. The reference information may be one or more of the identifier of the first communication device, the identifier of the second communication device, and an offset. In other words, the index of the second frequency domain resource may meet any one of the following formulas:

$$f_{RE} = (i_{index} + ID_S) \bmod N \qquad \text{(Formula 1-22)}$$

$$f_{RE} = (i_{index} + \Delta + ID_S) \bmod N \qquad \text{(Formula 1-23)}$$

$$f_{RE} = (i_{index} + ID_D) \bmod N \qquad \text{(Formula 1-24)}$$

$$f_{RE} = (i_{index} + \Delta + ID_D) \bmod N \qquad \text{(Formula 1-25)}$$

$$f_{RE} = (i_{index} + ID_s + ID_D) \bmod N \qquad \text{(Formula 1-26)}$$

$$f_{RE} = (i_{index} + \Delta + ID_s + ID_D) \bmod N \qquad \text{(Formula 1-27)}$$

$f_{RE}$ is the index of the second frequency domain resource, $i_{index}$ is the resource index, $ID_S$ is all or some bits of the identifier of the first communication device, $ID_D$ is all or some bits of the identifier of the second communication device, $\Delta$ is an offset, and $\Delta$ may be a positive integer greater than or equal to 0 and less than or equal to N-1. $\Delta$ may be predefined, preconfigured, or configured by a network device.

Optionally, in some embodiments, a resource index of the sidelink positioning reference signal is determined based on a resource index of the sidelink control channel and a total quantity of resources of the sidelink positioning reference signal.

Optionally, in some embodiments, the resource index $i_{PRS}$ of the sidelink positioning reference signal may be determined based on an index of a resource used to send the sidelink control channel, the total quantity of resources of the sidelink positioning reference signal, and one piece of reference information. The reference information may be one or more of the identifier of the first communication device, the identifier of the second communication device, and a preset offset. In other words, the resource index $i_{PRS}$ of the sidelink positioning reference signal may meet any one of the following formulas:

$$i_{PRS} = (i_{PSCCH} + \Delta) \bmod N_{PRS} \qquad \text{(Formula 1-28)}$$

$$i_{PRS} = (i_{PSCCH} + \Delta + ID_S) \bmod N_{PRS} \qquad \text{(Formula 1-29)}$$

$$i_{PRS} = (i_{PSCCH} + \Delta + ID_D) \bmod N_{PRS} \qquad \text{(Formula 1-30)}$$

$$i_{PRS} = (i_{PSCCH} + \Delta + ID_S + ID_D) \bmod N_{PRS} \qquad \text{(Formula 1-31)}$$

$$i_{PRS} = (i_{PSCCH} + ID_S) \bmod N_{PRS} \qquad \text{(Formula 1-32)}$$

$$i_{PRS} = (i_{PSCCH} + ID_D) \bmod N_{PRS} \qquad \text{(Formula 1-33)}$$

$$i_{PRS} = (i_{PSCCH} + ID_S + ID_D) \bmod N_{PRS} \qquad \text{(Formula 1-34)}$$

$i_{PRS}$ is the resource index of the sidelink positioning reference signal, $i_{PSCCH}$ is the resource index of the sidelink control channel, and $N_{PRS}$ is the total quantity of resources of the sidelink positioning reference signal.

The total quantity of resources of the sidelink positioning reference signal may be predefined, preconfigured, or configured by a network device.

It can be understood that, in some embodiments, the resource used to send the sidelink control channel may include a frequency domain resource and a code resource. In this case, the resource used to send the sidelink control channel may also be referred to as a frequency-code resource used to send the sidelink control channel. $i_{PSCCH}$ may also be referred to as a frequency-code index or a joint index of the sidelink control channel. Similarly, a resource used to send positioning reference information may include a frequency domain resource and a code resource. In this case, the resource used to send the positioning reference information may also be referred to as a frequency-code resource used to send the positioning reference information. $i_{PRS}$ may also be referred to as a frequency-code index or a joint index of the sidelink positioning reference signal.

The sidelink control channel is a physical sidelink control channel PSCCH.

The sidelink positioning reference signal in the foregoing embodiments may be generated in a conventional manner, or may be generated in a manner in the following embodiments.

FIG. 20 is a schematic flowchart of a method for transmitting a sidelink positioning reference signal according to an embodiment of this application.

2001: A first communication device determines a first sequence parameter.

Optionally, in some embodiments, the first sequence parameter includes at least one of the following: a resource of a sidelink control channel, information carried in the sidelink control channel, and a resource of the sidelink positioning reference signal. The first sequence parameter is used to generate the sidelink positioning reference signal.

2002: The first communication device sends the sidelink control channel and the sidelink positioning reference signal in a slot.

The first communication device may first generate a sequence (for example, a random sequence or a ZC sequence) based on the first sequence parameter, and then determine the sidelink positioning reference signal based on the sequence.

Correspondingly, a second communication device receives the sidelink control channel and the sidelink positioning reference signal in a slot, where the sidelink positioning reference signal is generated based on the first sequence parameter, the first sequence parameter includes at least one of the following: the resource of the sidelink control channel, the information carried in the sidelink control channel, and the resource of the sidelink positioning reference signal, and the first sequence parameter is used to generate the sidelink positioning reference signal; and the second communication device performs measurement on the sidelink positioning reference signal to obtain a measurement result.

Time-frequency resources occupied by the sidelink control channel and the sidelink positioning reference signal in the slot are the same as those in the foregoing embodiments. For example, the sidelink control channel is located before the sidelink positioning reference signal. For another example, the sidelink control channel and the sidelink positioning reference signal are sent in a same slot. For another example, a frequency domain resource of the sidelink positioning reference signal is Y REs among Y×N REs, there is one sidelink positioning reference signal in every N REs, Y is a number greater than 0, and N is a positive integer. For a specific relationship between a time-frequency resource occupied by the sidelink control channel and a time-frequency resource occupied by the sidelink positioning reference signal, refer to the foregoing embodiments. For brevity, details are not described herein again.

Optionally, in some embodiments, the resource of the sidelink positioning reference signal includes an RE offset of the sidelink positioning reference signal, and the RE offset indicates a location of the sidelink positioning reference signal in every N REs.

Optionally, in some embodiments, the resource of the sidelink control channel includes at least one of the following: an index of a frequency domain resource of the sidelink control channel, an index of a sequence parameter of the sidelink control channel, or a joint resource index of the sidelink control channel. The joint resource index is determined based on the index of the frequency domain resource of the sidelink control channel and the index of the sequence parameter of the control channel.

Optionally, in some embodiments, the index of the sequence parameter of the sidelink control channel includes at least one of the following: an orthogonal code index of the sequence parameter of the sidelink control channel, a cyclic shift index of the sequence parameter of the sidelink control channel, and a root sequence number index of the sequence parameter of the sidelink control channel.

Optionally, in some embodiments, the index of the frequency domain resource of the sidelink control channel may be an interlace number or a subchannel number of the frequency domain resource of the sidelink control channel, or may be a maximum number, a minimum number, or a middle number of an orthogonal frequency domain resource of the sidelink control information.

Optionally, in some embodiments, the orthogonal code index of the sequence parameter of the sidelink control channel may be an index of an orthogonal code sequence for generating a demodulation reference signal (demodulation reference signal, DM-RS) of the sidelink control information. For example, it is assumed that an orthogonal code is an orthogonal complementary code (orthogonal complementary code, OCC). When a length of the OCC is 3, corresponding sequences are three sequences shown in Table 1.

Table 1

| OCC index | OCC sequence w with a length of 3 | | |
|---|---|---|---|
| 0 | 1 | 1 | 1 |
| 1 | 1 | $e^{j2/3\pi}$ | $e^{-j2/3\pi}$ |
| 2 | 1 | $e^{-j2/3\pi}$ | $e^{j2/3\pi}$ |

When a length of the OCC is 2, corresponding sequences are sequences shown in Table 2 or Table 3.

Table 2

| OCC index | OCC sequence w with a length of 2 | |
|---|---|---|
| 0 | 1 | 1 |
| 1 | 1 | -1 |

Table 3

| OCC index | OCC sequence w with a length of 2 | |
|---|---|---|
| 0 | 1 | 1 |
| 1 | j | -j |

Optionally, in some embodiments, the joint resource index $i_r$ meets the following formula:

$$i_r = i_f \times M_s + i_s \qquad \text{(Formula 2-1)}$$

$i_s = 0, 1, ..., M_s\text{-}1, i_f = 0, 1, ..., M_f\text{-}1, M_s$ is a quantity of parameters of the sequence parameter of the sidelink control channel, and $M_f$ is a quantity of orthogonal resources of the sidelink control channel in the slot.

Optionally, in some other embodiments, joint resource index $i_r$ meets the following formula:

$$i_r = i_s \times M_f + i_f \qquad \text{(Formula 2-2)}$$

$i_s = 0, 1, ..., M_s\text{-}1, i_f = 0, 1, ..., M_f\text{-}1, M_s$ is a quantity of parameters of the sequence parameter of the sidelink control channel, and $M_f$ is a quantity of orthogonal resources of the sidelink control channel in the slot.

Optionally, in some embodiments, the information carried in the sidelink control channel includes at least one of the following: an identifier of the first communication device; an identifier of the second communication device, where the second communication device is a receiving device for the positioning reference signal; indication information indicating a geographical location of the first communication device; indication information indicating a geographical location of the second communication device; and indication information for a sequence identifier, where the sequence identifier is used to generate an initial value of a sequence of the positioning reference signal.

The identifier of the first communication device may be a whole identifier or a partial identifier of the first communication device. Similarly, the identifier of the second communication device may be a whole identifier or a partial identifier of the second communication device.

Geographical location indication information of a communication device may be an absolute location of the communication device, for example, geographical coordinate information of the communication device; or may be a relative location of the communication device, for example, information about a distance and an orientation between the communication device and another communication device; or may be location information, indicated based on a specific precision, of the communication device, for example, a zone identifier (Zone ID).

Optionally, in some embodiments, a sequence for generating the sidelink positioning reference signal is a random sequence (for example, a Gold sequence), and an initial value of the positioning reference signal is generated based on the first sequence parameter.

In some embodiments, the initial value $c_{init}$ of the sidelink positioning reference signal meets the following formula:

$$c_{init} = \left(2^m A \cdot (2B+1) + B\right) \bmod 2^{31} \qquad \text{(Formula 2-3)}$$

The parameter A and/or the parameter B are determined based on the first sequence parameter.

In some embodiments, the parameter A in the formula 2-3 meets the following formula:

$$A = \left(N_{symb}^{slot} n_{s,f}^m + l + 1\right) \qquad \text{(Formula 2-4)}$$

$N_{symb}^{slot}$ indicates a quantity of symbols in a slot, $n_{s,f}^{m}$ indicates a quantity of slots in a subframe, and $l$ indicates a quantity of OFDM symbols in a slot.

In some embodiments, the parameter B=$N_{ID}$, or B=2$N_{ID}$. In this case, the formula 2-3 may be expressed by using a formula 2-5 (it is assumed that the parameter A meets the formula 2-4):

$$c_{init} = \left(2^{m+1}\left(N_{symb}^{slot}n_{s,f}^{\mu}+l+1\right)\left(2N_{ID}+1\right)+2N_{ID}\right)\bmod 2^{31} \qquad \text{(Formula 2-5)}$$

In some other embodiments, the parameter B=$n_{ID}$, or B=2$n_{ID}$. In this case, the formula 2-3 may be expressed by using a formula 2-6 (it is assumed that the parameter A meets the formula 2-4):

$$c_{init} = \left(2^{m}\left(N_{symb}^{slot}n_{s,f}^{\mu}+l+1\right)\left(2n_{ID}+1\right)+n_{ID}\right)\bmod 2^{31} \qquad \text{(Formula 2-6)}$$

A value of m in the formula 2-3 to the formula 2-6 is a quantity of binary bits corresponding to a maximum value of $N_{ID}$ or $n_{ID}$. For example, $N_{ID}=2^{16}-1$. In this case, m=16. For another example, $n_{ID}=2^{10}-1$. In this case, m=10.

$N_{ID}$ or $n_{ID}$ may be the first sequence parameter, or may be generated based on the first sequence parameter.

For example, in some embodiments, $N_{ID}$ or $n_{ID}$ may be an interlace number or a subchannel number of the frequency domain resource of the sidelink control information, or may be a maximum number, a minimum number, or a middle number of an orthogonal frequency domain resource of the sidelink control information.

For another example, in some embodiments, $N_{ID}$ or $n_{ID}$ may be generated based on one or more first sequence parameters. For example, $n_{ID}$ is used as an example. $n_{ID}$ may meet the following formula:

$$n_{ID} = P \bmod 2^{m} \qquad \text{(Formula 2-7)}$$

P is any first sequence parameter.

$n_{ID}$ in the formula 2-7 is generated based on one first sequence parameter. As described above, there may alternatively be more than one sequence parameter for generating $n_{ID}$. If a general formula is used to represent $n_{ID}$, $n_{ID}$ may meet one of the following formulas:

$$n_{ID} = \sum_{k=0}^{n}a_k p_k \bmod 2^{m} \qquad \text{(Formula 2-8)}$$

$$n_{ID} = \sum_{k=0}^{n}a_k p_k \qquad \text{(Formula 2-9)}$$

$p_k$ indicates a first sequence parameter, and $a_k$ is a coefficient of a corresponding sequence parameter. In some embodiments, $a_k$ may be an integer greater than or equal to 0, for example, 0, 1, or 2. In some other embodiments, $a_k$ may be a number greater than or equal to 0, for example, 0, 0.1, 0.5, or 1.

For another example, in some embodiments, k numbers are configured in a resource pool or preconfigured (or predefined or indicated by a network device): $n_{ID-1,seq}^{PRS}$, ..., $n_{ID-k,seq}^{PRS}$. Optionally, a value of each number is an integer. For example, a value range of each number may be {0, 1, ..., 4095}. Optionally, $N_{ID}$ or $n_{ID}$ is determined from the configured values. Optionally, the sidelink control information may indicate a value of $N_{ID}$ or $n_{ID}$ used by the first communication device to generate the sidelink positioning reference signal. The initial value of the positioning reference signal is generated based on the first sequence parameter and the configured number (which may be referred to as a second sequence parameter). For example, the parameter A and/or the parameter B in the formula 2-3 may be generated based on the first sequence parameter and the second sequence parameter.

It is further assumed that the parameter B is $N_{ID}$ or $n_{ID}$, and $N_{ID}$ or $n_{ID}$ may be generated based on one or more first sequence parameters and the second sequence parameter. $n_{ID}$ is still used as an example. $n_{ID}$ may meet the following formulas:

$$n_{ID} = \left(n_{ID-i,seq}^{PRS}+i_{occ}\right)\bmod 2^{m} \qquad \text{(Formula 2-10)}$$

$$n_{ID} = \left( n_{ID-i,seq}^{PRS} + i_{RE-offset} \right) \bmod 2^m \qquad \text{(Formula 2-11)}$$

$$n_{ID} = \left( n_{ID-i,seq}^{PRS} + i_f \right) \bmod 2^m \qquad \text{(Formula 2-12)}$$

$$n_{ID} = \left( n_{ID-i,seq}^{PRS} + i_f + i_{RE-offset} \right) \bmod 2^m \qquad \text{(Formula 2-13)}$$

$$n_{ID} = \left( n_{ID-i,seq}^{PRS} + i_f + i_{occ} + i_{RE-offset} \right) \bmod 2^m \qquad \text{(Formula 2-14)}$$

$i_{occ}$, $i_{RE-offset}$, and $i_f$ in the formula 2-10 to the formula 2-14 are all the first sequence parameter. For example, $i_{occ}$ is an orthogonal code index of the sidelink control channel, $i_{RE-offset}$ is the RE offset of the sidelink positioning reference signal, and $i_f$ is the index of the frequency domain resource of the sidelink control channel.

Optionally, in the formula 2-10 to the formula 2-14, $n_{ID}$ may be replaced with $N_{ID}$.

Similarly, the formula 2-10 to the formula 2-14 may alternatively be expressed by using the following general formulas:

$$n_{ID} = \left( n_{ID-i,seq}^{PRS} + \sum_{k=0}^{n} a_k p_k \right) \bmod 2^m \qquad \text{(Formula 2-15)}$$

$$n_{ID} = n_{ID-i,seq}^{PRS} + \sum_{k=0}^{n} a_k p_k \qquad \text{(Formula 2-16)}$$

$p_k$ indicates a first sequence parameter, and $a_k$ is a coefficient of a corresponding sequence parameter. In some embodiments, $a_k$ may be an integer greater than or equal to 0, for example, 0, 1, or 2. In some other embodiments, $a_k$ may be a number greater than or equal to 0, for example, 0, 0.1, 0.5, or 1.

Optionally, in the formula 2-15 and the formula 2-16, $n_{ID}$ may be replaced with $N_{ID}$.

Optionally, in some embodiments, both the parameter A and the parameter B are determined based on the first sequence parameter.

Optionally, in some embodiments, only one of the parameter A and the parameter B is determined based on the first sequence parameter, and the other may be indicated by information carried in the sidelink control channel, or may be predefined, preconfigured, or configured by a network device.

Optionally, in some embodiments, the initial value $c_{init}$ of the sidelink positioning reference signal is determined based on the following formula:

$$c_{init} = \left( 2^n B/C + 2^m A(2(B \bmod C) + 1) + (B \bmod C) \right) \bmod 2^{31} \qquad \text{(Formula 2-17)}$$

At least one of the parameter A, the parameter B, and the parameter C is determined based on the first sequence parameter. Optionally, n and m are positive integers. Optionally, n+m=32.

Optionally, in some embodiments, the parameter A, the parameter B, and the parameter C are all determined based on the first sequence parameter.

Optionally, in some embodiments, some of the parameter A, the parameter B, and the parameter C are determined based on the first sequence parameter, and the other may be indicated by information carried in the sidelink control channel, or may be predefined, preconfigured, or configured by a network device.

For example, in some embodiments, the parameter A meets the formula 2-4, the parameter B is generated based on the first sequence parameter and may be expressed as $n_{ID,seq}^{PRS}$, and the parameter C is a preconfigured number, for example, may be 1024. In this case, the formula 2-17 may be expressed as follows:

$$c_{init} = \left( 2^{22} \left\lfloor \frac{n_{ID,seq}^{PRS}}{1024} \right\rfloor + 2^{10} \left( N_{symb}^{slot} n_{s,f}^{\mu} + l + 1 \right) \left( 2 \left( n_{ID,seq}^{PRS} \bmod 1024 \right) + 1 \right) + \left( n_{ID,seq}^{PRS} \bmod 1024 \right) \right) \bmod 2^{31} \qquad \text{(Formula 2-18)}$$

Similarly, $n_{\text{ID,seq}}^{\text{PRS}}$ may be generated based on one or more first sequence parameters, or may be generated based on the second sequence parameter and one or more first sequence parameters. For a specific generation manner, refer to the manner of generating the parameter $n_{\text{ID}}$ in the foregoing embodiments. For brevity, details are not described herein again.

Optionally, in some embodiments, a sequence for generating the sidelink positioning reference signal is a Zadoff-Chu (Zadoff-Chu, ZC) sequence, and the first sequence parameter is used to generate a root sequence number of the ZC sequence and/or a cyclic shift value of the ZC sequence.

For example, in some embodiments, the root sequence number of the ZC sequence meets one of the following formulas:

$$u = \sum_{k=0}^{n} a_k p_k \bmod K \qquad \text{(Formula 3-1)}$$

$$u = \sum_{k=0}^{n} a_k p_k \qquad \text{(Formula 3-2)}$$

u indicates the root sequence number of the ZC sequence, K indicates a maximum quantity of root sequences configured, and K is a positive integer. $p_k$ indicates the first sequence parameter, and $a_k$ is a coefficient of a corresponding sequence parameter. In some embodiments, $a_k$ may be an integer greater than or equal to 0, for example, 0, 1, or 2. In some other embodiments, $a_k$ may be a number greater than or equal to 0, for example, 0, 0.1, 0.5, or 1.

For example, in some embodiments, the cyclic shift (cyclic shift, CS) value of the ZC sequence is as follows:

$$CS = \sum_{k=0}^{n} a_k p_k \bmod K \qquad \text{(Formula 3-3)}$$

$$CS = \sum_{k=0}^{n} a_k p_k \qquad \text{(Formula 3-4)}$$

CS indicates the cyclic shift value of the ZC sequence, K indicates a maximum quantity of CS values configured, and K is a positive integer. $p_k$ indicates the first sequence parameter, and $a_k$ is a coefficient of a corresponding sequence parameter. In some embodiments, $a_k$ may be an integer greater than or equal to 0, for example, 0, 1, or 2. In some other embodiments, $a_k$ may be a number greater than or equal to 0, for example, 0, 0.1, 0.5, or 1.

After values of u and CS are determined, the ZC sequence is generated in the following manner:

$$r^{(p_i)}\left(n, l'\right) = r_{u,v}^{(\alpha_i, \delta)}(n) \qquad \text{(Formula 3-5)}$$

$$0 \le n \le M_{sc,b}^{SRS} - 1 \qquad \text{(Formula 3-6)}$$

$$l' \in \left\{0, 1, \ldots, N_{symb}^{SRS} - 1\right\} \qquad \text{(Formula 3-7)}$$

$M_{sc,b}^{SRS}$ is a parameter for generating a sequence length, $r_{u,v}^{(\alpha,\delta)}$ is a generated ZC sequence, CS is represented by the parameter $\alpha_i$, and an antenna port number is $p_i$.

$$\alpha_i = 2\pi \frac{n_{SRS}^{cs,i}}{n_{SRS}^{cs,max}} \qquad \text{(Formula 3-8)}$$

$$n_{SRS}^{cs,i} = \left(n_{SRS}^{cs} + \frac{n_{SRS}^{cs,max}\left(p_i - 1000\right)}{N_{ap}^{SRS}}\right) \bmod n_{SRS}^{cs,max} \qquad \text{(Formula 3-9)}$$

The root sequence number is as follows:

$$u = \left(f_{gh}\left(n_{s,f}^{\mu}, l'\right) + n_{ID}^{SRS}\right) \bmod 30 \ .$$

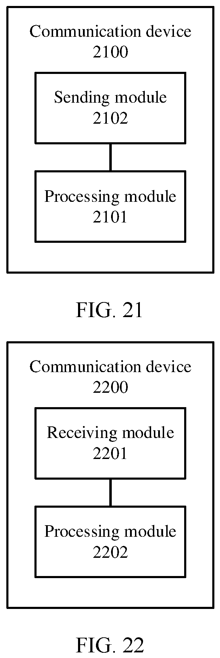

FIG. 21 is a block diagram of a structure of a communication device according to an embodiment of this application. The communication device 2100 shown in FIG. 21 includes a processing module 2101 and a sending module 2102. The processing module 2101 may be implemented by using a processor, and the sending module 2102 may be implemented by using a transmitter. The communication device 2100 may implement a function of the first communication device in the foregoing embodiments.

For example, in some embodiments, the processing module 2101 is configured to determine at least one of the following information: a frequency domain resource of a sidelink positioning reference signal and a sequence parameter of the sidelink positioning reference signal, where the information is associated with a sidelink control channel. The sending module 2102 is configured to send the sidelink control channel and the sidelink positioning reference signal in a slot based on the information.

For another example, in some embodiments, the processing module 2101 is configured to determine configuration information, where the configuration information indicates at least one of the following information: a quantity of symbols occupied by sidelink control information, frequency domain bandwidth occupied by the sidelink control information, a quantity of symbols occupied by the sidelink positioning reference signal, and a mapping spacing of the sidelink positioning reference signal in frequency domain. The sending module 2102 is configured to send sidelink positioning information in a slot, where the sidelink positioning information is generated based on the configuration information, and the sidelink positioning information includes the sidelink control information and the sidelink positioning reference signal.

For another example, in some embodiments, the processing module 2101 is configured to determine a first sequence parameter, where the first sequence parameter includes at least one of the following: a resource of a sidelink control channel, information carried in the sidelink control channel, and a resource of a sidelink positioning reference signal, and the first sequence parameter is used to generate the sidelink positioning reference signal. The sending module 2102 is configured to send the sidelink control channel and the sidelink positioning reference signal in a slot.

For specific functions and benefits of the processing module 2101 and the sending module 2102, refer to the foregoing embodiments. For brevity, details are not described herein again.

FIG. 22 is a block diagram of a structure of another communication device according to an embodiment of this application. The communication device 2200 shown in FIG. 22 includes a receiving module 2201 and a processing module 2202. The receiving module 2201 may be implemented by using a receiver, and the processing module 2202 may be implemented by using a processor. The communication device 2200 may implement a function of the second communication device in the foregoing embodiments.

For example, in some embodiments, the receiving module 2201 is configured to receive a sidelink control channel in a slot. The processing module 2202 is configured to determine at least one of the following information: a frequency domain resource of a sidelink positioning reference signal and a sequence parameter of the sidelink positioning reference signal, where the information is associated with the sidelink control channel. The receiving module 2201 is further configured to receive the sidelink positioning reference signal in the slot based on the information.

For another example, in some embodiments, the receiving module 2201 is configured to receive sidelink positioning information in a slot, where the sidelink positioning information is generated based on configuration information, the sidelink positioning information includes sidelink control information and a sidelink positioning reference signal, and the configuration information indicates at least one of the following information: a quantity of symbols occupied by the sidelink control information, a frequency domain bandwidth occupied by the sidelink control information, a quantity of symbols occupied by the sidelink positioning reference signal, and a mapping spacing of the sidelink positioning reference signal in frequency domain. The processing module 2202 is configured to perform measurement on the sidelink positioning reference signal to obtain a measurement result.

For another example, in some embodiments, the receiving module 2201 is configured to receive a sidelink control channel and a sidelink positioning reference signal in a slot, where the sidelink positioning reference signal is generated based on a first sequence parameter, the first sequence parameter includes at least one of the following: a resource of the sidelink control channel, information carried in the sidelink control channel, and a resource of the sidelink positioning reference signal, and the first sequence parameter is used to generate the sidelink positioning reference signal. The processing module 2202 is configured to perform measurement on the sidelink positioning reference signal to obtain a measurement result.

For specific functions and benefits of the receiving module 2201 and the processing module 2201, refer to the foregoing embodiments. For brevity, details are not described herein again.

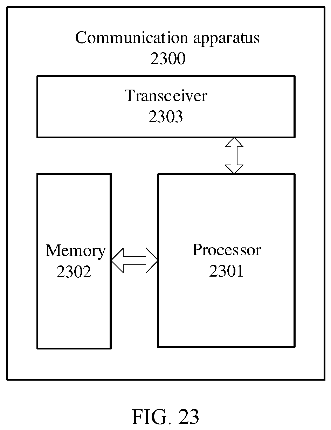

FIG. 23 is a block diagram of a structure of a communication apparatus according to an embodiment of this application. The communication apparatus 2300 shown in FIG. 23 includes a processor 2301. The processor 2301 may be configured to: process a communication protocol and communication data, control the communication apparatus, execute a software program, process data of the software program, and so on

Optionally, the communication apparatus 2300 may further include a memory 2302. The memory 2302 is mainly configured to store the software program and the data.

Optionally, the communication apparatus 2300 may further include a transceiver 2303. The transceiver may also be referred to as a transceiver unit, a transceiver device, a transceiver apparatus, or the like. Optionally, a component for implementing a receiving function in the transceiver 2303 may be considered as a receiving module, and a component for implementing a sending function in the transceiver 2303 may be considered as a sending module. In other words, the transceiver 2303 includes a receiving module and a sending module. The receiving module sometimes may also be referred to as a receiving device, a receiver, a receiver circuit, or the like. The sending module sometimes may also be referred to as a transmitting device, a transmitter, a transmitter circuit, or the like.

Optionally, the communication apparatus 2300 may be a terminal device or an apparatus (for example, a chip or a circuit) used for a terminal device.

Optionally, the communication apparatus 2300 may be a network device or an apparatus (for example, a chip or a circuit) used for a network device.

If the communication apparatus 2300 is a terminal device or a network device, the communication apparatus 2300 may further include a radio frequency circuit and an antenna. The radio frequency circuit is mainly configured to perform conversion between a baseband signal and a radio frequency signal, and process the radio frequency signal. The antenna is mainly configured to send and receive a radio frequency signal in a form of an electromagnetic wave. An antenna and a radio frequency circuit that have a transceiver function may be considered as the transceiver 2303 of the communication apparatus 2300.

If the communication apparatus 2300 is an apparatus (for example, a chip or a circuit) used for a terminal device or a network device, the communication apparatus 2300 may further include an input/output interface. The input/output interface may be configured to: obtain data, and send the obtained data to the processor 2301 and/or the memory 2302. The input/output interface may be further configured to send data generated by the processor 2301 to another apparatus.

For ease of description, FIG. 23 shows only one memory and one processor. In an actual product, there may be one or more processors and one or more memories. The memory may also be referred to as a storage medium, a storage device, or the like. The memory may be disposed independent of the processor, or may be integrated with the processor. This is not limited in this embodiment of this application.

The processor 2301, the memory 2302, and the transceiver 2303 communicate with each other through an internal connection path, to transmit a control signal and/or a data signal.

The methods disclosed in the foregoing embodiments of the present invention may be used in the processor 2301 or implemented by the processor 2301. The processor 2301 may be an integrated circuit chip and has a signal processing capability. During implementation, the steps of the foregoing methods may be performed by an integrated logic circuit of hardware in the processor 2301 or by using instructions in a form of software.

The processor in embodiments of this application may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The processor may implement or perform the methods, steps, and logical block diagrams disclosed in embodiments of the present invention. The general-purpose processor may be a microprocessor, or the processor may be any conventional processor or the like. The steps of the methods disclosed with reference to embodiments of the present invention may be directly performed by a hardware decoding processor, or may be performed by a combination of hardware and software modules in the decoding processor. The software module may be located in a mature storage medium in the art, for example, a random access memory (random access memory, RAM), a flash memory, a read-only memory (read-only memory, ROM), a programmable read-only memory, an electrically erasable programmable memory, or a register. The storage medium is located in a memory, and the processor reads instructions in the memory and performs the steps of the foregoing methods based on hardware of the processor.

Optionally, in some embodiments, the memory 2302 may store instructions for performing the method performed by the first communication device in the foregoing methods. The processor 2301 may execute the instructions stored in the memory 2302, to perform, in combination with other hardware (for example, the transceiver 2303), the steps performed by the first communication device in the foregoing methods. For a specific operation process and benefits of the processor 2301, refer to the descriptions in the foregoing method embodiments. If the communication apparatus 2300 is not provided with the memory 2302, the processor 2301 may be coupled to a memory that stores instructions for performing the method performed by the first communication device in the foregoing methods.

Optionally, in some embodiments, the memory 2302 may store instructions for performing the method performed by the second communication device in the foregoing methods. The processor 2301 may execute the instructions stored in the memory 2302, to perform, in combination with other hardware (for example, the transceiver 903), the steps performed by the second communication device in the foregoing methods. For a specific operation process and benefits of the processor 2301, refer to the descriptions in the foregoing method embodiments. If the communication apparatus 2300 is not provided with the memory 2302, the processor 2301 may be coupled to a memory that stores instructions for performing the method performed by the second communication device in the foregoing methods.

An embodiment of this application further provides a chip system. The chip system includes a logic circuit. The logic circuit is configured to be coupled to an input/output interface, and transmit data through the input/output interface. The chip system may perform the method for the first communication device in the foregoing method embodiments.

An embodiment of this application further provides a computer-readable storage medium. The computer-readable storage medium stores instructions. When the instructions are executed, the method for the first communication device in the foregoing method embodiments is performed.

An embodiment of this application further provides a computer program product including instructions. When the instructions are executed, the method performed by the first communication device in the foregoing method embodiments is performed.

An embodiment of this application further provides a chip system. The chip system includes a logic circuit. The logic circuit is configured to be coupled to an input/output interface, and transmit data through the input/output interface. The chip system may perform the method for the second communication device in the foregoing method embodiments.

An embodiment of this application further provides a computer-readable storage medium. The computer-readable storage medium stores instructions. When the instructions are executed, the method for the second communication device in the foregoing method embodiments is performed.

An embodiment of this application further provides a computer program product including instructions. When the instructions are executed, the method performed by the second communication device in the foregoing method embodiments is performed.

A person of ordinary skill in the art may be aware that units and algorithm steps in examples described with reference to embodiments disclosed in this specification can be implemented by electronic hardware or a combination of computer software and electronic hardware. Whether the functions are performed by hardware or software depends on particular applications and design constraints of technical solutions. A person skilled in the art may use different methods to implement the described functions for each particular application, but it should not be considered that the implementation goes beyond the scope of this application.

It can be clearly understood by a person skilled in the art that, for ease and brevity of description, for detailed working processes of the foregoing system, apparatus, and unit, reference may be made to corresponding processes in the foregoing method embodiments. Details are not described herein again.

In several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the shown or discussed mutual couplings or direct couplings or communication connections may be implemented through some interfaces. The indirect couplings or communication connections between the apparatuses or units may be implemented in electrical, mechanical, or other forms.

The units described as separate components may or may not be physically separate, and components shown as units may or may not be physical units, to be specific, may be located in one place, or may be distributed on a plurality of network units. Some or all of the units may be selected according to actual requirements to achieve objectives of solutions of embodiments.

In addition, functional units in embodiments of this application may be integrated into one processing module, or each of the units may exist alone physically, or two or more units may be integrated into one unit.

When the functions are implemented in a form of a software functional unit and sold or used as an independent product, the functions may be stored in a computer-readable storage medium. Based on such an understanding, technical solutions of this application essentially, or a part contributing to the conventional technology, or some of technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The storage medium includes any medium that can store program code, for example, a USB flash drive, a removable hard disk, a read-only memory (Read-Only Memory, ROM), a random access memory (Random Access Memory, RAM), a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A method for transmitting a sidelink positioning reference signal, comprising:

   determining, by a first communication device, at least one of the following information: a frequency domain resource of the sidelink positioning reference signal or a sequence parameter of the sidelink positioning reference signal, wherein the information is associated with a sidelink control channel; and
   sending, by the first communication device, the sidelink control channel and the sidelink positioning reference signal in a slot based on the information.

2. The method according to claim 1, wherein the sidelink control channel and the sidelink positioning reference signal are sent in a same slot.

3. The method according to claim 1 or 2, wherein the sidelink control channel is located before the sidelink positioning reference signal in the slot.

4. The method according to any one of claims 1 to 3, wherein a resource of the sidelink positioning reference signal in each symbol is Y resource elements REs among $Y \times N$ REs, one of every N REs is occupied by the sidelink positioning reference signal, Y is a number greater than 0, and N is a positive integer.

5. The method according to claim 4, wherein that the information is associated with a sidelink control channel comprises:

   the information is carried in the sidelink control channel; and/or
   the information is determined based on a frequency domain resource and/or a sequence parameter of the sidelink control channel.

6. The method according to claim 5, wherein the information further comprises the sequence parameter of the sidelink control channel.

7. The method according to claim 6, wherein the sequence parameter of the sidelink control channel comprises at least one of the following information: a cyclic shift CS value of the sidelink control channel, a root sequence index of the sidelink control channel, or an orthogonal sequence index of the sidelink control channel.

8. The method according to any one of claims 5 to 7, wherein the sequence parameter of the sidelink positioning reference signal comprises at least one of the following information: a cyclic shift CS value of the sidelink positioning reference signal, a root sequence index of the sidelink positioning reference signal, an orthogonal sequence index of the sidelink positioning reference signal, or a parameter for generating an initial value of a sequence of the sidelink positioning reference signal.

9. The method according to any one of claims 5 to 8, wherein an index of a first frequency domain resource and/or a first sequence index are/is determined based on an index of the frequency domain resource of the sidelink control channel, the first frequency domain resource is a frequency domain resource of the sidelink positioning reference signal, and the first sequence index corresponds to a sequence parameter for determining the sidelink positioning reference signal.

10. The method according to claim 9, wherein the index of the first frequency domain resource and the first sequence index are determined based on the index of the frequency domain resource of the sidelink control channel and N.

11. The method according to claim 9, wherein the index of the first frequency domain resource and/or the first sequence index are determined based on the index of the frequency domain resource of the sidelink control channel and the orthogonal sequence index of the sidelink control channel.

12. The method according to claim 11, wherein the index of the first frequency domain resource and the first sequence parameter are determined based on the index of the frequency domain resource of the sidelink control channel, the orthogonal sequence index of the sidelink control channel, a quantity M of orthogonal frequency domain resources of the sidelink control channel, and N.

13. The method according to any one of claims 5 to 8, wherein a resource of the sidelink control channel and a resource of the sidelink positioning reference signal are determined based on a resource index.

14. The method according to claim 13, wherein the resource of the sidelink control channel comprises the frequency domain resource of the sidelink control channel and the sequence parameter of the sidelink control channel; and the resource of the sidelink positioning reference signal comprises the frequency domain resource of the sidelink positioning reference signal and the sequence parameter of the sidelink positioning reference signal.

15. The method according to claim 13 or 14, wherein a maximum value of the resource index is predefined, preconfigured, or configured by a network device.

16. The method according to any one of claims 13 to 15, wherein the sidelink control channel is further used to carry second indication information, and the second indication information indicates the resource index.

17. The method according to any one of claims 13 to 16, wherein
the index of the frequency domain resource of the sidelink control channel and the orthogonal sequence index of the sidelink control channel are determined based on the resource index and the quantity M of orthogonal frequency domain resources of the sidelink control channel.

18. The method according to claim 17, wherein the index of the frequency domain resource of the sidelink control channel is determined based on the resource index, the quantity M of orthogonal frequency domain resources of the sidelink control channel, and first reference information, the first reference information comprises at least one of the following information: an identifier of the first communication device, an identifier of a second communication device, and a first offset, and the first offset is a positive integer greater than or equal to 0 and less than M.

19. The method according to any one of claims 13 to 18, wherein
an index of a second frequency domain resource and a second sequence index are determined based on the resource index and N, wherein the second frequency domain resource is a frequency domain resource of the sidelink positioning reference signal, and the second sequence index corresponds to a sequence parameter for determining the sidelink positioning reference signal.

20. The method according to claim 19, wherein the index of the second frequency domain resource is determined based on the resource index, N, and second reference information, the second reference information comprises at least one of the following information: the identifier of the first communication device, the identifier of the second communication device, and a second offset, and the second offset is a positive integer greater than or equal to 0 and less than N.

21. The method according to any one of claims 13 to 20, wherein a resource index of the sidelink positioning reference signal is determined based on a resource index of the sidelink control channel and a total quantity of resources of the sidelink positioning reference signal.

22. The method according to claim 21, wherein the resource index of the sidelink positioning reference signal is determined based on the resource index of the sidelink control channel, the total quantity of resources of the sidelink positioning reference signal, and third reference information, the third reference information comprises at least one of the following information: the identifier of the first communication device, the identifier of the second communication device, and a third offset, the third offset is a positive integer greater than or equal to 0 and less than T, and T is the total quantity of resources of the sidelink positioning reference signal.

23. The method according to any one of claims 1 to 22, wherein the sidelink control channel is a physical sidelink control channel PSCCH.

24. A method for transmitting a sidelink positioning reference signal, comprising:

receiving, by a second communication device, a sidelink control channel in a slot;
determining, by the second communication device, at least one of the following information: a frequency domain resource of the sidelink positioning reference signal and a sequence parameter of the sidelink positioning reference signal, wherein the information is associated with the sidelink control channel; and
receiving, by the second communication device, the sidelink positioning reference signal in the slot based on the information.

25. The method according to claim 24, wherein the sidelink control channel and the sidelink positioning reference signal are received in a same slot.

26. The method according to claim 24 or 25, wherein the sidelink control channel is located before the sidelink positioning reference signal in the slot.

27. The method according to any one of claims 24 to 26, wherein a resource of the sidelink positioning reference signal in each symbol is Y resource elements REs among Y×N REs, one of every N REs is occupied by the sidelink positioning reference signal, Y is a number greater than 0, and N is a positive integer.

28. The method according to claim 27, wherein that the information is associated with a sidelink control channel comprises:

    the information is carried in the sidelink control channel; and/or
    the information is determined based on a frequency domain resource and/or a sequence parameter of the sidelink control channel.

29. The method according to claim 28, wherein the information further comprises the sequence parameter of the sidelink control channel.

30. The method according to claim 29, wherein the sequence parameter of the sidelink control channel comprises at least one of the following information: a cyclic shift CS value of the sidelink control channel, a root sequence index of the sidelink control channel, or an orthogonal sequence index of the sidelink control channel.

31. The method according to any one of claims 28 to 30, wherein the sequence parameter of the sidelink positioning reference signal comprises at least one of the following information: a cyclic shift CS value of the sidelink positioning reference signal, a root sequence index of the sidelink positioning reference signal, an orthogonal sequence index of the sidelink positioning reference signal, or a parameter for generating an initial value of a sequence of the sidelink positioning reference signal.

32. The method according to any one of claims 28 to 31, wherein an index of a first frequency domain resource and/or a first sequence index are/is determined based on an index of the frequency domain resource of the sidelink control channel, the first frequency domain resource is a frequency domain resource of the sidelink positioning reference signal, and the first sequence index corresponds to a sequence parameter for determining the sidelink positioning reference signal.

33. The method according to claim 32, wherein the index of the first frequency domain resource and the first sequence index are determined based on the index of the frequency domain resource of the sidelink control channel and N.

34. The method according to claim 32, wherein the index of the first frequency domain resource and/or the first sequence index are/is determined based on the index of the frequency domain resource of the sidelink control channel and the orthogonal sequence index of the sidelink control channel.

35. The method according to claim 34, wherein the index of the first frequency domain resource and the first sequence parameter are determined based on the index of the frequency domain resource of the sidelink control channel, the orthogonal sequence index of the sidelink control channel, a quantity M of orthogonal frequency domain resources of the sidelink control channel, and N.

36. The method according to any one of claims 28 to 31, wherein a resource of the sidelink control channel and a resource of the sidelink positioning reference signal are determined based on a resource index.

37. A communication device, wherein the communication device comprises:

    a module configured to perform the method according to any one of claims 1 to 23; or
    a module configured to perform the method according to any one of claims 24 to 36.

38. A communication apparatus, comprising:

a processor and a memory, wherein

the memory is configured to store a computer program; and

the processor is configured to execute the computer program stored in the memory, so that the communication apparatus performs the method according to any one of claims 1 to 23 or the method according to any one of claims 24 to 36.

39. A computer-readable storage medium, wherein the computer-readable storage medium stores instructions, and when the instructions are run on a computer, the computer is enabled to perform the method according to any one of claims 1 to 23 or the method according to any one of claims 24 to 36.

40. A chip system, wherein the chip system comprises a logic circuit, the logic circuit is configured to be coupled to an input/output interface and transmit data through the input/output interface, to perform the method according to any one of claims 1 to 23 or the method according to any one of claims 24 to 36.

41. A computer program product, wherein the computer program product comprises computer program code, and when the computer program code is run on a computer, the computer is enabled to perform the method according to any one of claims 1 to 23 or the method according to any one of claims 24 to 36.

100

110　　　　　　　　　　120　　　　　　　　　　130

FIG. 1

200

210　　　　　　　　　　220　　　　　　　　　　230

FIG. 2

Comb-2          Comb-4          Comb-6

Comb-12

FIG. 3

(a)     (b)     (c)     (d)

(e)     (f)     (g)

(h)     (i)     (j)

FIG. 4

```
┌─────────────────────┐                    ┌─────────────────────┐
│  First communication│                    │       Second        │
│       device        │                    │ communication device│
└──────────┬──────────┘                    └──────────┬──────────┘
           │                                           │
┌──────────┴──────────────────┐                        │
│ 501: Determine configuration │                        │
│        information           │                        │
└──────────┬──────────────────┘                        │
           │                                           │
           │    502: Sidelink positioning             │
           │           information                    │
           │──────────────────────────────────────────▶│
           │                                           │
           │                                           │
           │                                           │
```

FIG. 5

|  0  |  1  |  2  |  3  |  4  |  5  |  6  |  7  |  8  |  9  |  10  |  11  |  12  |  13  |
| AGC | PSCCH | | | | | | | SL-PRS | | | | | GP |

FIG. 6

FIG. 7

FIG. 8

FIG. 9

FIG. 10

(a)

(b)

(c)

(d)

FIG. 11

First time domain
resource

Second time
domain resource

(a)

Second time
domain resource

First time domain
resource

(b)

First time domain
resource

Second time
domain resource

Third time
domain resource

(c)

Second time
domain resource

First time domain
resource

Third time
domain resource

(d)

FIG. 12

First communication
device

Second
communication device

1301: Determine at least one of a frequency
domain resource for a sidelink positioning
reference signal or a sequence parameter of the
sidelink positioning reference signal

1302: Sidelink control channel and
sidelink positioning reference signal

FIG. 13

PSCCH

| 0 |
| 1 |
| 2 |
| 3 |
| 4 |

SL-PRS

| 0 |
| 1 |
| 2 |
| 3 |
| 4 |
| 5 |
| 6 |
| 7 |

FIG. 14

PSCCH

SL-PRS

OCC 0
| 0 | 0 |
| 1 | 1 |
| 2 | 2 |
| 3 | 3 |
| 4 | 4 |

OCC 1
| 5 | 0 |
| 6 | 1 |
| 7 | 2 |
| 8 | 3 |
| 9 | 4 |

SL-PRS
| 0 |
| 1 |
| 2 |
| 3 |
| 4 |
| 5 |
| 6 |
| 7 |

FIG. 15

PSCCH

| 0 |
| 1 |
| 2 |
| 3 |
| 4 |
| 5 |
| 6 |
| 7 |
| 8 |
| 9 |

SL-PRS

| 0 | 0 | Sequence 0 |
| 1 | 1 | |
| 2 | 2 | |
| 3 | 3 | |
| 0 | 4 | Sequence 1 |
| 1 | 5 | |
| 2 | 6 | |
| 3 | 7 | |
| 0 | 8 | Sequence 2 |
| 1 | 9 | |
| 2 | 10 | |
| 3 | 11 | |

FIG. 16

FIG. 17

FIG. 18

EP 4 561 204 A1

PSCCH                    SL-PRS

OCC 0
- 0 | 0 → 0 | 0
- 1 | 1 → 1 | 1
- 2 | 2 → 2 | 2      Sequence 0
- 3 | 3 → 3 | 3

- 4 | 4 → 0 | 4
OCC 1
- 5 | 0 → 1 | 5
- 6 | 1 → 2 | 6      Sequence 1
- 7 | 2 → 3 | 7

- 8 | 3 → 0 | 8
- 9 | 4 → 1 | 9
- 10 | 0 → 2 | 10   Sequence 2
OCC 2
- 11 | 1 → 3 | 11
- 12 | 2
- 13 | 3
- 14 | 4

FIG. 19

First communication device

Second communication device

2001: Determine a first sequence parameter

2002: Sidelink control channel and sidelink positioning reference signal

FIG. 20

Communication device
2100

Sending module
2102

Processing module
2101

FIG. 21

Communication device
2200

Receiving module
2201

Processing module
2202

FIG. 22

Communication apparatus
2300

Transceiver
2303

Memory
2302

Processor
2301

FIG. 23

## INTERNATIONAL SEARCH REPORT

| International application No. |
|---|
| **PCT/CN2023/110760** |

### A. CLASSIFICATION OF SUBJECT MATTER

H04W64/00(2009.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

VCN; ENTXT; DWPI; CNKI; 3GPP: 侧链路, 边链路, 副链路, 旁链路, sl, 侧行链路, 直连链路, 物理侧行链路控制信道, 时域, 频域, 时隙, 时频, sidelink, PRS, PSCCH, time domain, frequency domain, slot

### C. DOCUMENTS CONSIDERED TO BE RELEVANT

| Category* | Citation of document, with indication, where appropriate, of the relevant passages | Relevant to claim No. |
|---|---|---|
| X | WO 2022068836 A1 (SPREADTRUM COMMUNICATIONS (SHANGHAI) CO., LTD.) 07 April 2022 (2022-04-07) description, paragraphs 31-81, and figures 1-2,4 | 1-23, 37-41 |
| X | CN 111436131 A (HUAWEI TECHNOLOGIES CO., LTD.) 21 July 2020 (2020-07-21) description, paragraphs 132-176 and 326-337, and figures 9-12 | 24-41 |
| X | US 2020359367 A1 (GUANGDONG OPPO MOBILE TELECOMMUNICATIONS CORP., LTD.) 12 November 2020 (2020-11-12) description, paragraphs 41-64, and figure 3 | 1-23, 37-41 |
| A | SPREADTRUM COMMUNICATIONS. "Considerations on potential solutions for SL positioning" *3GPP TSG RAN WG1 #109-e R 1-2203335,* 20 May 2022 (2022-05-20), entire document | 1-41 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 October 2023** | **19 October 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/110760**

| Patent document cited in search report | | | Publication date (day/month/year) | Patent family member(s) | | | Publication date (day/month/year) |
|---|---|---|---|---|---|---|---|
| WO | 2022068836 | A1 | 07 April 2022 | CN | 114339987 | A | 12 April 2022 |
| CN | 111436131 | A | 21 July 2020 | EP | 3905817 | A1 | 03 November 2021 |
| | | | | KR | 20210111845 | A | 13 September 2021 |
| | | | | US | 2021337514 | A1 | 28 October 2021 |
| | | | | WO | 2020143750 | A1 | 16 July 2020 |
| | | | | VN | 81336 | A | 25 October 2021 |
| US | 2020359367 | A1 | 12 November 2020 | KR | 20200116950 | A | 13 October 2020 |
| | | | | MX | 2020008251 | A | 25 September 2020 |
| | | | | JP | 2021516485 | A | 01 July 2021 |
| | | | | WO | 2019153129 | A1 | 15 August 2019 |
| | | | | AU | 2018407846 | A1 | 17 September 2020 |
| | | | | EP | 3751929 | A1 | 16 December 2020 |
| | | | | BR | 112020015862 | A2 | 08 December 2020 |
| | | | | CN | 111656835 | A | 11 September 2020 |
| | | | | IN | 202027036606 | A | 02 October 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210928796

- CN 202210970558